(19) Europäisches Patentamt
European Patent Office
Office européen des brevets

(11) EP 4 604 026 A1

(12) **EUROPEAN PATENT APPLICATION**

(43) Date of publication:
**20.08.2025 Bulletin 2025/34**

(21) Application number: **24158476.2**

(22) Date of filing: **19.02.2024**

(51) International Patent Classification (IPC):
***G06N 10/60*** *(2022.01)* ***G06N 10/70*** *(2022.01)*

(52) Cooperative Patent Classification (CPC):
**G06N 10/70; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Phasecraft Limited**
**London Greater London W1T 4PW (GB)**

(72) Inventor: **SANHUEZA, Raul Antonio Santos**
**London (GB)**

(74) Representative: **Mathys & Squire**
**The Shard**
**32 London Bridge Street**
**London SE1 9SG (GB)**

(54) **METHODS AND APPARATUSES FOR IMPROVED SIMULATION OF HAMILTONIAN TIME EVOLUTION**

(57) A method for time-dynamics simulation, TDS, of a quantum system on a quantum information processor, QIP, comprises approximating the full-time time ordered evolution operator, $U_A$, of the quantum system, and performing a TDS of the quantum system on the QIP. Identifying $U_A$ comprises: decomposing the Hamiltonian of the quantum system into an easy part, $H_0$ with $U_{H0}$ implementable on the QIP with an error independent of circuit depth, and a hard part $H_1$ with a time dependence $\tilde{H}_1$ and $U_{\tilde{H}1}(t_f, t_i)$ not implementable on the QIP with an error independent of circuit depth; splitting the total evolution time of $U_{\tilde{H}1}$ into slices, each slice corresponding to a time ordered evolution operator generated from $\tilde{H}_1$; approximating the time ordered evolution operator of each slice by decomposing $\tilde{H}_1$; splitting up the time ordered evolution operator of each slice based on the decomposition of $\tilde{H}_1$; and combining the results to provide $U_A$. Performing a TDS of the quantum system comprises: initialising a starting state on the QIP; converting $U_A$ into a series of quantum gates to operate on the qubits of the QIP; executing the series of quantum gates on the initial state to time evolve the quantum system; and performing a measurement on the QIP to obtain a result of the TDS.

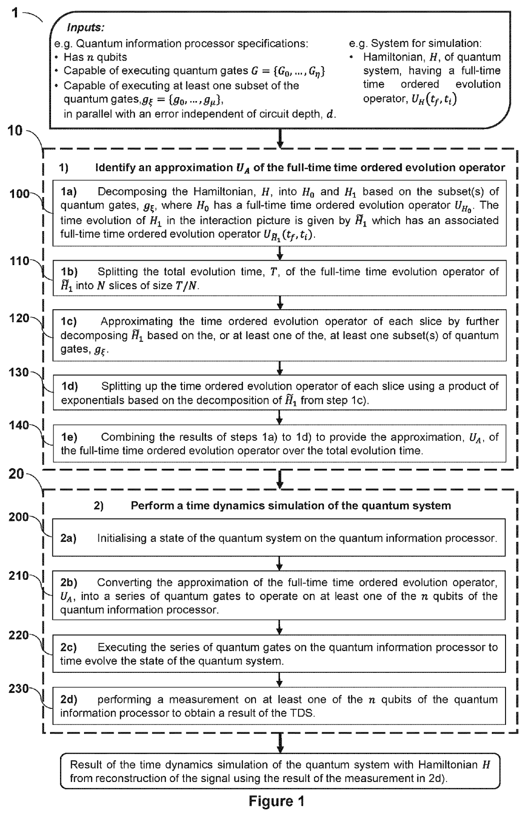

Figure 1

EP 4 604 026 A1

## Description

### FIELD OF THE INVENTION

The present application relates to methods and apparatuses for performing time dynamics simulation of a Hamiltonian. In particular, the application relates to methods for improved time dynamics simulation of material, chemical, and biological systems on noisy intermediate scale quantum processors.

### BACKGROUND OF THE INVENTION

Time dynamics simulation (TDS) of quantum systems has long been considered as a natural application where quantum computers can outperform classical ones. To implement the full-time time evolution operator $U_H(t_f, t_i) = \mathcal{T}e^{-i\int_{t_i}^{t_f} H\,ds}$ having access to a universal set of quantum gates, it is necessary to decompose the Hamiltonian $H$ into pieces that can be represented efficiently with the available native quantum gate set. Generally, the quantum gate complexity of this decomposition is no less than $O(t)$ . Several methods have been proposed to achieve this quantum gate complexity up to lower order terms. These methods differ in the way they implement time evolution, and have different overheads. Overheads required by different methods may include: operations independent of the Hamiltonian (e.g., reflections around particular states); encoding approximations of the time evolution operator (e.g. in the method of linear combination of unitaries) into a unitary; ancillary qubits; or multiple runs of an algorithm in order to achieve some success probability. Such methods, although not scaling with the time evolution, require extra resources in terms of elementary operations in the quantum computer, which can lead to overhead in terms of circuit depth. Among these methods, arguably the most straightforward algorithm for time evolution is Trotterization, as it does not require extra resources (e.g. those mentioned above), and only the operations and qubits needed to implement the required quantum gates in the Hamiltonian are needed to successfully implement the algorithm. Trotter decompositions can be more efficient in practice for simulation of systems in the order of hundreds of qubits compared with more complex methods, for times that scale with the size of the system. This is due to the high initial overheads mentioned above that asymptotically 'better' algorithms incur. Within Trotterization, the evolution under a Hamiltonian $H = \Sigma_k h_k$ is split into a product over unitaries at different times $U_{tr} = \Pi_{jk} e^{itjkhk}$ where each of them can be implemented efficiently. In practice, the choice of summands that compose $H$ is not unique. A common practice in lattice systems is to represent the Hamiltonian as a sum of Pauli terms $H = \Sigma_k \alpha_k P_k$ and then fix $h_k = \alpha_k P_k$. First order Trotterization of a Hamiltonian $H = H_0 + \alpha H_1$, where the unitary time evolution operator for $H_0$ can be implemented exactly for arbitrary time with an efficient quantum circuit, typically has an error $O\left(\frac{t^2}{N}|\alpha|\right)$ compared to implementing the full time evolution operator exactly for an arbitrary time with an efficient quantum circuit.

Carrying out time-dynamics simulation in the interaction picture through a method called 'Linear combination of unitaries' (LCU) has been suggested wherein the time evolution of the system at different energy scales is taken into consideration. This method achieves almost optimal scaling with time for a given error, but the primitive based on LCU - i.e., the operation that makes LCU implementable as a unitary operation - requires a significant overhead in terms of quantum resources, e.g., ancillary qubits, quantum gates, and circuit repetitions, because it needs to be encoded in a nontrivial unitary operation, i.e., implementation of a sum of unitaries is required. Since the sum is not a unitary operation itself, it must be implemented as a block in a larger matrix which is a unitary transformation. Theoretically, LCU approaches have better scaling than Trotter, however, it is expected that this quantum overhead in the implementation of the LCU methods makes it unsuitable for the near term.

Another suggested method employs Lieb-Robinson bounds to create a protocol for quantum simulation, where the splitting of the Hamiltonian is decided based on the support of its summands when considering the spatial locality of the Hamiltonian. This splitting generates time evolutions on spatially smaller pieces of the Hamiltonian and is used to show that the error of the approximation can be made almost optimal in time and approximation error as long as a subroutine with good scaling is used for the pieces. This method proposes using a base primitive that is not Trotter for the approximation of the big part of the time evolution instead using other schemes with better theoretical error, such as LCU or quantum signal processing. However, it has been shown that this strategy in practice performs worse than naive application of Trotter.

### SUMMARY OF THE INVENTION

In this work we propose an approach for implementing time-evolution of a quantum system using product formulas. The quantum algorithms we develop have provably better scaling (in terms of gate complexity and circuit depth) than a naive application of well-known Trotter formulas, for systems where the evolution is determined by a Hamiltonian with different energy scales (one part is "large" and another part is "small"). Our algorithms generate a decomposition of the evolution operator into a product of simple unitaries, being thus directly implementable on a quantum computer. Although the theoretical scaling is suboptimal compared with state of the art algorithms (e.g. quantum signal processing), the performance of the algorithms is highly competitive in practice. We illustrate this via extensive numerical simulations for several models.

Introduced herein are several algorithms that use the structure of the Hamiltonian to achieve better error scaling than naive Trotterization of the Hamiltonian terms. As these use the knowledge of the gates that can be efficiently implementable in practice on a particular quantum computer, we call this family of algorithms Trotter Heuristic Resource Improved Formulas for Time-dynamics (THRIFT). This is most useful in a Noisy Intermediate Scale Quantum (NISQ) computer, where implementing some types of gate is more resource efficient than other nominally similar gates. Our proposed methods do not require the quantum overheads needed for LCU methods because they can directly implement the time evolution using the available primitives, taking into account the resource requirements as those determine the structure of the algorithm.

THRIFT generates an efficient Trotter decomposition for time-evolution of a quantum system. The Trotter decomposition achieved through this algorithm has provably better scaling (in terms of gate complexity and circuit depth) than a naive application of well-known Trotter formulas, for systems where the evolution is determined by a Hamiltonian with different energy scales (one part is "large" and another part is "small"). This situation can occur, for example, for physical systems made up of strong short-range interactions and weaker long-range interactions. Crucially, the efficiency of the algorithm depends on the characteristics of the quantum computer itself, i.e. the set of possible gates that are easily implementable given some tolerance. As well as our theoretical results proving favourable scaling of the algorithms, we have carried out numerical experiments showing that, in practically relevant regimes, our algorithms outperform standard methods.

In this work, we develop and analyse quantum algorithms for time-dynamics simulation of quantum systems, which quantum algorithms are designed to be effective even on near-term quantum hardware. That is, they are designed to implement the unitary transformation required for time dynamics simulations $e^{i\int_0^t H\,ds}$ for some Hamiltonian *H* and time *t* with a high level of accuracy, given access to a quantum circuit on *n* qubits with depth *D,* even where *n* and *D* are both in the order of 100s. We intentionally look for algorithms which are general-purpose and scalable with regard to the quantum system size and the quantum computer resources required to simulate the quantum system.

Aspects and examples of the invention are set out in the claims and aim to address at least a part of the above-described technical problem, and related problems.

In particular, the invention set out herein is directed to algorithms for time-dynamics simulation of a quantum system on a quantum information processor by intentionally approximating the full-time time evolution operator of the quantum system using product formulas where said approximation of the time evolution operator is found using classical computation taking into account the capabilities, or limitations, of the available quantum information processor on which the simulation is to be performed, and the approximation of the full-time time evolution operator is implemented on the quantum information processor to simulate the system. Herein, and throughout, the term 'quantum system' preferably connotes any physical, material, chemical, biological, or other kind of, system that can be described using quantum mechanics. Quantum simulations of such systems can provide information about various properties of the system which are essential, for example, to the design of new materials and molecules which can be used in various industries including, for example, materials for electrical engineering (e.g. for data storage, computer processing, etc), chemical engineering, molecular design for pharmaceutical and other purposes, etc.

As will be apparent from the foregoing, this application discloses several advantageous approaches to performing time-dynamics simulation of quantum systems on a quantum information processor or a hybrid quantum-classical computation system comprising at least one quantum information processor. These include:

An algorithm that uses classical computational resources to approximate the full-time time evolution operator of quantum systems to be simulated.

A systematic method to design quantum circuits for efficient time-dynamics simulation of a quantum system tailored to the combination of the system to be simulated and quantum information processor on which the simulation is to be performed.

Disclosed herein is a method of performing time-dynamics simulation, TDS, of a quantum system on a quantum information processor with *n* qubits, the quantum information processor capable of executing quantum gates $G = \{G_0, ..., G_\eta\}$ on at least one of the *n* qubits, wherein at least one subset of the quantum gates, $g_\xi = \{g_0, ... , g_\mu\}$, is executable in parallel with an error independent of circuit depth, d, and the quantum system is described by a Hamiltonian, *H,* with a full-time time ordered evolution operator, $U_H(t_f, t_i) = \mathcal{T} e^{-i \int_{t_i}^{t_f} H\, ds}$ where $\mathcal{T}$ is a time ordering operator, the method comprising:

1) identifying an approximation, $U_A$, of the full-time time ordered evolution operator over a total evolution time, $T = t_f - t_i$, by:

a) decomposing the Hamiltonian, $H$, based on the, or at least one of the, at least one subset(s) of quantum gates, $g_\xi$, such that $H = H_0 + H_1$, wherein $H_0$ has a full-time time ordered evolution operator, $U_{H0}$, that is implementable with the subset of gates $g_\xi$ with an error independent of circuit depth and the time evolution of $H_1$ in the interaction picture is given by $\tilde{H}_1 = U_{H0}(t_i, t) H_1 U_{H0}(t, t_i)$ which has an associated full-time time ordered evolution operator, $U_{\tilde{H}1}(t_f, t_i)$, that is not implementable with only the subset of gates $g_\xi$ with an error independent of circuit depth;
b) splitting the total evolution time, $T$, of the full-time time evolution operator of $\tilde{H}_1$, $U_{\tilde{H}1}(T + t_i, t_i)$, into $N$ slices of size $T/N$ having the form $U_{\tilde{H}1}(T + t_i, t_i) = \prod_{k=0}^{N-1} U_{\tilde{H}_1}\left((k+1)\frac{T}{N} + t_i, k\frac{T}{N} + t_i\right)$ wherein the slices each correspond to a time ordered evolution operator, $U_{\tilde{H}_1}\left((k+1)\frac{T}{N} + t_i, k\frac{T}{N} + t_i\right)$, generated from $\tilde{H}_1$;
c) approximating the time ordered evolution operator of each slice, $U_{\tilde{H}_1}\left((k+1)\frac{T}{N} + t_i, k\frac{T}{N} + t_i\right)$, by further decomposing $\tilde{H}_1$ based on the, or at least one of the, at least one subset(s) of quantum gates, $g_\xi$;
d) splitting up the time ordered evolution operator of each slice, $U_{\tilde{H}1}((k + 1)\frac{T}{N} + t_i, k\frac{T}{N} + t_i)$, using a product of exponentials based on the decomposition of $\tilde{H}_1$ from step 1c);
e) combining the results of steps 1a) to 1d) to provide the approximation, $U_A$, of the full-time time ordered evolution operator over the total evolution time, and

2) performing a TDS of the quantum system by:

a) initialising a state of the quantum system on the quantum information processor;
b) converting the approximation of the full-time time ordered evolution operator, $U_A$, into a series of quantum gates to operate on at least one of the $n$ qubits of the quantum information processor;
c) executing the series of quantum gates on the quantum information processor to time evolve the state of the quantum system; and
d) performing a measurement on at least one of the $n$ qubits of the quantum information processor to obtain a result of the TDS.

This can be thought of generally as taking a Hamiltonian of a quantum system which is to be simulated over a period of time by a corresponding time evolution operator, splitting up the time evolution operator by decomposing the Hamiltonian taking into account the native gates of an available quantum information processor (QIP) and considering which of these gates can be implemented in parallel. The total time over which the Hamiltonian is to be evolved (the time over which the quantum system is to be simulated) is then split up and the time evolution operator of the Hamiltonian is approximated. This means that the time evolution operator is adapted for implementation on an initial state encoded on the QIP to time evolve the qubit state(s) to produce a final state that can be probed by measurement of the qubits of the QIP, thus investigating the result of time evolution of the quantum system described by the Hamiltonian, i.e. probing the time evolved quantum state to obtain a simulation result.

Optionally, step 1b) may comprise splitting the total time into $N$ slices of size $\frac{T}{N}$ that are ordered by a time ordered operator, $\mathcal{T}$, such that $U(T) = e^{-iT(H0+\alpha H1)} = e^{-iTH_0} \mathcal{T} e^{-i\int_0^T \alpha H_1(t) dt}$. If the slices are ordered by a time ordered operator then, preferably, the time ordered operator has the effect of ordering the slices with smaller times to the right so that time increases from right to left.
Advantageously, the method(s) described herein, and throughout, may be used to investigate time independent and/or time dependent Hamiltonians, allowing for simulation of a large range of quantum systems described by a wide variety of Hamiltonians.

Advantageously, this method considers the capabilities of the quantum information processor on which the simulation is to be performed when identifying an approximation of the full-time time evolution operator by decomposing the Hamiltonian based on the at least one subset of quantum gates that is executable in parallel with an error independent of circuit depth. This includes consideration of the available QIP hardware (e.g. type of qubits, number of qubits, connectivity of qubits, etc.) via the subsets of quantum gates that are implementable in parallel with an error independent of circuit depth. The quantum gates that may be performed in parallel are dependent on the type of hardware available and several examples are provided later in this specification.

By tailoring the approximation of the full-time time ordered evolution operator to the QIP and subsets of its associated universal quantum gates which are implementable in parallel with an error independent of circuit depth, it is possible to leverage the strengths of executing a quantum circuit on a QIP for simulation of a quantum system while aiming to reduce the errors prevalent in current and near-term QIPs.

One limiting factor on current and near-term QIPs is the maximum circuit depth that can be executed which can be thought of as the maximum number of consecutive layers of quantum gates that can be applied on a specific QIP architecture without introducing unacceptable levels of noise. This is because, when insisting on a specific level of accuracy for a calculation, there exists a de facto upper limit on the number of consecutive gates (or layers of parallel gates) which can be used since the total error from noise in a simulation is cumulative over the number of consecutive gates (or layers of parallel gates).

This method tailors the approximations of the full-time time ordered evolution operator to the quantum system (by starting from the Hamiltonian of the quantum system to be simulated) and the architecture of an available QIP on which the simulation will be executed (by splitting up the part of the Hamiltonian which cannot be performed in parallel considering the available subsets of quantum gates that can be implemented in parallel on the QIP). In this way, the accuracy of the simulation due to execution on a QIP can be leveraged while the cumulative noise errors inherent in the quantum simulation can be reduced (or at least kept to an acceptable - optionally user-defined - limit).

Other embodiments of this method, discussed later in this document, may also take into account a user-defined maximum error - or other appropriate parameter(s), e.g. time for simulation, maximum number of qubits etc. - and leverage the currently available classical computational resources to identify an approximation of the full-time time ordered evolution operator generated via the 'best' method for decomposing the non-parallelisable portion of the Hamiltonian given the user-defined parameters, the available QIP resources and architecture, and physical parameters of the quantum system to be simulated.

Herein, and throughout, a 'best' method generally refers to an 'all-things-considered best' method for a given simulation where the requirements of the user are balanced with the available resources to allow simulation of the quantum system within an acceptable range of user-defined parameters. Such user-defined parameters may include, for example, simulation time, quantum resources required, maximum error in the simulation (due to noise or otherwise), among others. The 'all-things-considered best' may be chosen based on one parameter (for example, circuit depth required to implement an approximation of the full-time time evolution operator) or multiple parameters (for example, circuit depth, overall acceptable error in a simulation result, circuit depth, and total simulation time, etc.).

Herein, and throughout, 'simulation time' may refer to the individual, or total, time required to physically implement the quantum gates representing the approximated full-time time evolution operator on the QIP, or an overall runtime for a simulation where an overall runtime may include the time for identification of an approximation of the full-time time ordered evolution operator on a classical computer and subsequent implementation of the simulation on a QIP via a quantum circuit(s) that implement the approximation of the full-time time ordered evolution operator.

Herein, and throughout, the subset(s) of quantum gates, $g_\xi = \{g_0, \ldots, g_\mu\}$, are defined such that the gates making up the subset that can be performed in parallel, $g_o, \ldots, g_\mu$, are 'chosen' from the 'universal' set of quantum gates, $G = \{G_0, \ldots, G_\eta\}$, for a known QIP on which the simulation is to be performed in step 2. The quantum gates chosen for each subset can be performed in parallel with each other with an error independent of quantum circuit depth, i.e. they act on different qubits. There may be multiple subsets of gates that can be chosen with these properties for a specific QIP and these subsets may be found numerically, analytically, or by user-provision (e.g. from a list of "native gates" generated by quantum hardware providers).

Advantageously, this method - and any of the other methods described herein - can be performed using a hybrid quantum-classical computation system comprising at least one classical computer and at least one quantum information processor. For example, step 1 - identification of an approximation of the full-time time ordered evolution operator - may be performed solely on a classical computer. By utilising classical computation resources for step 1, the relatively quantum-computationally demanding aspects of simulating the Hamiltonian of a quantum system can be offloaded to classical resources in the form of identification of a more quantum-computationally efficient approximation of full-time time ordered evolution operator while - as far as possible/practical - maintaining simulation accuracy of the physical characteristics of the Hamiltonian to be simulated, by executing the approximation of the full-time time ordered evolution operator on the QIP in step 2. This allows the simulation to benefit from the inherent advantages of the quantum nature of the QIP in simulation of quantum system while minimising quantum resources required for the simulation. While increased efficiency in the use of quantum resources is always advantageous, this is particularly true for current and near-term NISQ processors.

The parts of a Hamiltonian that are 'quantum-computationally demanding' may be different for differing QIP hardware/architectures due to the unavoidable relationship between the quantum gates that may be performed in parallel with an error independent of quantum circuit depth for a given hardware/architecture of a QIP. For example, QIPs with a fixed qubit layout and connectivity, e.g. lattice structured qubits with nearest neighbour connectivity may be restricted to performing two-qubits gates on two neighbouring (next to each other) qubits. Similarly, only one quantum gate may act on a given qubit at once whereas gates which act different qubits may be implemented concurrently, i.e. in parallel.

Advantageously, taking into account the gates that can be performed in parallel on the QIP may reduce the depth of the quantum circuit that executes the series of quantum gates in step 2 of the methods discussed herein. Reducing the depth of the quantum circuit required can also result in a reduction in the error due to noisy implementation of gates on qubits which is a cumulative phenomenon.

First, in step 2a) the QIP must be initialised natively in some state, typically the "all zero" state which is trivial. A non-trivial state, required for some applications, may be obtained by applying a standard quantum circuit on the trivial (native) initial state to achieve the non-trivial state. Generally, if a non-trivial initial state is chosen this is because it advantageously encodes some physics of the system that is to be simulated. For example, this could be a low energy state of the system, a Gibbs mixed state, or some particles initialized in some registers to study their evolution over time in the system.

Step 2a) may involve using a classical computer to initialise a state on the quantum computer. The classical computer used to initialise a state of the quantum system on the quantum computer may be the same classical computer that is used to identify an approximation of the time evolution operator in step 1, or it may be a different classical computer that receives a state to initialise on the quantum computer.

In general terms, step 2b) can be thought of as looking for a native gate decomposition of the gates required by the approximation of the full-time time ordered evolution operator from step 1. This may be done numerically, analytically, or otherwise. Commonly, this native gate decomposition is given in the form of a quantum circuit. In step 1d), a splitting of the time operator using a product of exponentials has been identified. Let's call one of the elements on this product $\mathbb{V}$. Note that $\mathbb{V}$ is a unitary. In step 2b), $\mathbb{V}$ is transformed into a specific set of gates. $\mathbb{V}$ will be an operator that acts on a small number of qubits (this is the reason that $\mathbb{V}$ is selected to be part of the splitting during step 1 in the first place). This means that $\mathbb{V}$ corresponds to a finite dimensional matrix manageable with a classical computer. Numerically an optimization algorithm can be used to find an approximation of this finite dimensional matrix in terms of the available gate set, *G*, and given some connectivity of the qubits in the QIP. If $\mathbb{V}$ has some structure, then analytic computations can be done. For example, if $\mathbb{V}$ is a string of Pauli operators, then the map to gates is well-known. The resulting gates may then be executed on the quantum computer in step 2c).

Step 2b) may be performed on the classical computer used in step 1, the classical computer used to initialise a state on the quantum computer, an additional classical computer, or otherwise (e.g. by a user and inputted via a classical computer).

In general terms, at the lowest level, executing a series of quantum gates is a procedure that depends on the physical instantiation of the QIP. In ion trap processors, executing a series of quantum gates involves moving atoms together in an optical lattice and coupling them together with a laser tuned to some resonant level of the combined system. In some superconducting devices, it can involve applying a gate voltage between two qubits to make their energy levels resonant. These specific instantiations define the available native gates of the device from which all the other applied gates must be constructed.

Step 2c) may be performed solely by the quantum information processor or by a quantum information processor under the control of a classical computer and/or a user. If the quantum information processor is controlled by a classical computer during step 2c), said classical computer may be the same computer that is used to identify an approximation of the time evolution operator in step 1 and/or the classical computer used to initialise a state on the quantum computer in step 2a), or it may be a different classical computer that receives the series of quantum gates to be implemented from step 2b).

In general terms, the measurement in step 2d) depends on the particular signal (or simulation result) that the user is interested in. Natively, the QIP measures in a particular basis, let's say the occupation basis of the levels of the qubits which indicates which of the two levels a qubit has. If we call the levels of a qubit 0 and 1, then a measurement of, say, 5 qubits will output a bitstring of the form 01110 where each of the entries can be a zero or a one according to some probability defined by the quantum circuit describing the QIP before the measurement. By analysing a set of output bitstrings it is possible to reconstruct a desired signal. Examples of useful measurements as a function of time include densities, magnetizations, currents, etc.

Step 2d) may be controlled by a classical computer which may be the same classical computer, or a different classical computer, to those used in any of the previous steps which were performed on a classical computer. Control signals for the quantum information processor may be supplied directly from the classical computer which performs the calculations in step 1, or any of the other steps using a classical computer, or may be obtained/provided from elsewhere (e.g. a piece of user operated/initiated equipment).

The quantum information processor(s) referenced herein, and throughout, may be, for example, a photonic qubit quantum computer, an ion trap qubit quantum computer, a superconducting qubit quantum computer, a fault-tolerant architecture for quantum computing, and/or a topological quantum architecture. Other types of quantum computing architectures may also be used or used as an alternative to any, or all, the exemplary architectures mentioned above and throughout this specification.

A hybrid classical-quantum computer system for implementing the methods described herein may comprise a quantum computer system comprising: a controller, for example a "classical" computer; an input; a quantum computer comprising a set of data qubits; and an output device. The controller can be used to control the input for inputting parameters into the quantum computer, for example the input may be an ancilla qubit which the classical computer controls to perform measurements. The output, outputs information measured from the data qubits of the quantum computer and transmits the information to the controller where it can be displayed to a user. The output and input may be the same, for example the ancilla qubit described above could be implemented as both the input and output in the quantum computer system. Such a quantum computer system is just one example of a quantum computer system that could be used to perform the methods described herein. The quantum computer may comprise photonic qubits, ion trap qubits, or superconducting qubits. Other types of quantum computing qubits may be used instead of or in addition to those mentioned here; the methods described herein are not restricted to any one particular quantum technology.

A quantum circuit corresponding to the approximation of the full-time time evolution operator (step 2b) may be precompiled by a classical processor and applied to the quantum processing unit(s) by control lines under management of a controller. The controller may be a classical processor or may work in conjunction with one or more classical processors to control the quantum information processor.

Controlling the quantum information processor may include implementing the quantum gates of the quantum circuit by sending instructions to initiate quantum operations appropriate to the type of qubits of the quantum computer. For example, this may be polarising operations in the case of a QIP with photonic qubits, magnetic field operations for QIPs with superconducting qubits, or other appropriate operations corresponding to the type of qubits of the QIP.

The quantum controller may also instigate a measurement of the final state of the qubits following completion of the quantum circuit that implements an approximation of the full-time time evolution operator according to the method described herein. The controller may also interact with output devices to read out or output the results of such measurements which are the result of a time dynamics simulation according to the method described herein.

Optionally, decomposing the Hamiltonian, $H$, in step 1a) comprises decomposing $H$ based on the at least one subset(s) of quantum gates, $g_\xi$; such that $H = \sum_\xi H_0^\xi + H_1$, wherein each $H_0^\xi$ has a full-time time ordered evolution operator, $U_{H_0}^\xi$, that is implementable with one of the at least one subset(s) of quantum gates, $g_\xi$ with an error independent of circuit depth, and $H_1$ has a full-time time ordered evolution operator, $U_{H1}$, that is not implementable with any one of the at least one subset(s) of quantum gates, $g_\xi$; with an error independent of circuit depth.

Optionally, $H_0$ may be partitioned into using the subsets sequentially, first by applying step 1 where 1a) uses a first subset of gates implementable in parallel, $g_\xi$, so

$$H = \sum_{G_k \in g_\xi} H_k + \sum_{G_k \notin g_\xi} H_k = \left(H_0 = \sum_{G_k \in g_\xi} H_k\right) + \left(H_1 = \sum_{G_k \notin g_\xi} H_k\right) = H_0 + H_1$$

where, $H_k$ denotes a summand implementable using a gate, $G_k$, and then repeating step 1 for another subset of gates implementable in parallel, $g_\xi$; to partition the term $\Sigma_{Gk \notin g_\xi} H_k$ now using the second subset of implementable gates. This may be iterated through any number, or all of, the subsets of gates implementable in parallel, $g_\xi$, until $H_1$ is as small as possible, or until another stopping parameter is reached. An alternative stopping parameter may be user-defined, for example, a maximum number of iterations of step 1, a maximum time for identifying approximations of the full-time time ordered evolution operator, an acceptable order/size for the term $H_1$, etc. Optionally, if step 1) is performed more than once, the efficiency of the identified approximations of the full-time time ordered evolution operator, $U_{A,\xi}$, may be evaluated by calculating a circuit depth, $d_{A,\xi}$, required to implement each $U_{A,\xi}$, and the $U_{A,\xi}$ with the lowest circuit depth $d_{A,\xi}$ may be identified as $U_A$ to be used in step 2) of the method.

Advantageously, these methods of decomposing $H$ mean that - for quantum information processors where there are multiple possible subsets implementable in parallel with an error independent of circuit depth, but where the subsets cannot be implemented in parallel with each other with an error independent of circuit depth - the Hamiltonian may be split up taking into account more than one of these subsets so that $H_1$ is as small as possible (considering practical limitations that may be imposed by user-defined parameters as described elsewhere).

Optionally, decomposing $H$ based on the at least one subset(s) of quantum gates, $g_\xi$, such that $H = H_0 + H_1$, as described above may comprise decomposing $H$ such that $H_0$ dominates. Herein, and throughout, the phrase '$H_0$ dominates' preferably connotes that $H = H_0 + \alpha H_1$ and $\alpha$ is small. Optionally, $\alpha$ being small means $\alpha < 1$.

Advantageously, decomposing H such that $H_0$ dominates as much as possible is particularly beneficial as the error in the approximation of the full-time time ordered operator scales with: $(\alpha t)^2$ for first order Thrift methods as described herein; $(t^{2k+1}\alpha^2)$ for $2k$-order Thrift methods as described herein, and $(\alpha t)^{k+1}$ for k-order Magnus methods as described herein - where $t$ is the time step T/N.

Optionally, identifying $U_A$ in step 1) further comprises the steps of:

f) performing steps 1a) to 1e) for each of the at least one subset(s) of gates, $g_\xi = \{g_0, \dots, g_\mu\}$, to obtain an approximation of the full-time time evolution operator for each subset of gates, $U_{A,g\xi}$, where performing steps 1a) to 1e) for each of the at least one subsets(s) of gates, $g_\xi$; includes:

1a) decomposing the Hamiltonian, $H$, based on each of the at least one subset(s) of quantum gates, $g_\xi$, such that $H = H_0 + H_1$, wherein $H_0$ has a full-time time ordered evolution operator, $U_{H0}$, that is implementable with the subset of gates $g_\xi$ with an error independent of circuit depth and the time evolution of $H_1$ in the interaction picture is given by $\tilde{H}_1 = U_{H0}(t_i, t)H_1U_{H0}(t, t_i)$ which has an associated full-time time ordered evolution operator, $U_{H1}(t_f, t_i)$, that is not implementable with only the subset of gates $g_\xi$ with an error independent of circuit depth;

1b) splitting the total evolution time, $T$, of the full-time time evolution operator of $\tilde{H}_1$, $U_{\tilde{H}1}(T + t_i, t_i)$, into $N$ slices of size $T/N$ wherein the slices each correspond to a time ordered evolution operator, $U_{\tilde{H}_1}\left((k+1)\frac{T}{N} + t_i, k\frac{T}{N} + t_i\right)$, generated from each $\tilde{H}_1$;

1c) approximating the time ordered evolution operator of each slice by further decomposing $\tilde{H}_1$ based on the, or at least one of the, at least one subset(s) of quantum gates, $g_\xi$ as described above;

1d) splitting up the time ordered evolution operator of each slice using a product of exponentials based on the decomposition of $\tilde{H}_1$ from step 1c); and

1e) combining the results of steps 1a) to 1d) to provide the approximation, $U_{A,g\xi}$ of the full-time time ordered evolution operator over the total evolution time;

g) evaluating how efficient it is to implement each approximation of the full-time time evolution operator, $U_{A,g\xi}$, by calculating a circuit depth, $d_{A,g\xi}$, required to implement each $U_{A,g\xi}$; and h) identifying a $U_{A,g\xi}$ with the lowest circuit depth $d_{A,g\xi}$.

In some examples step 1a) comprises decomposing H based on the at least one subset(s) of quantum gates, $g_\xi$; such that $H = \sum_\xi H_0^\xi + H_1$, wherein each $H_0^\xi$ has a full-time time ordered evolution operator, $U_{H_0}^\xi$, that is implementable with one of the at least one subset(s) of quantum gates, $g_\xi$ with an error independent of circuit depth, and $H_1$ has a full-time time ordered evolution operator, $U_{H1}$, that is not implementable with any one of the at least one subset(s) of quantum gates, $g_\xi$; with an error independent of circuit depth. Alternatively, decomposition of the Hamiltonian, $H$, in step 1a) may be carried out according to any one of the methods described herein.

Herein, and throughout, identifying an approximation with the lowest circuit depth may comprise comparing the calculated circuit depths for at least two corresponding approximations of the full-time time evolution operator obtained in a previous method step. The noise/fidelity limitations of quantum computers mean that increases in circuit depth can quickly lead to circuits which are not practically implementable on current quantum computers. Since these problems are not expected to be overcome in the near future, it is extremely beneficial to minimise the circuit depth required if simulations are to become practical.

Herein, and throughout, comparisons of circuit depths, or choices between circuit depths, to identify an approximation of the full-time time evolution operator associated with the lowest circuit depth may result in a 'tiebreak' where two different approximations have equal depths. Other information that may be used to decide between approximations in such situations, for example, which series of gates in the quantum circuit is less prone to corruption from noise in the device (this may be device dependent as some qubit types are more prone to corruption by certain quantum gates), or which quantum circuit is expected to be executed in less time (again, this may be dependent on the quantum computer hardware since the operation of gates on qubits may take longer to enact on some types of qubits than others). One example of a type of qubit that is particularly susceptible to noise corruption is a transmon superconducting qubit when enacting a CNOT gate using cross-resonance pulses. An example of a quantum circuit that may be performed quickly on one hardware and slowly on another is one where the same gate must be enacted multiple times in a row - this is fast and easy to enact for photon-based qubits where the gate is a polarisation filter and the photons may be guided through the filter multiple times in a row quickly where it may be slow to enact on an ion-trap, superconducting, or other solid state qubit where the physical operation to enact the same gate repeatedly may be more complex and time consuming.

Optionally, further decomposing $\tilde{H}_1$ in step 1c) comprises partitioning $H_1$ according to its summands, $H_{1,\gamma}$, based on the, or at least one of the, at least one subset(s) of quantum gates $g_\xi$ and $\tilde{H}_1 = U_{H0}(t_i, t)(\Sigma_\gamma H_{1,\gamma})U_{H0}(t, t_i)$ to arrive at an associated decomposition of $\tilde{H}_{1,decomp} = \Sigma_\gamma \tilde{H}_{1,\gamma}$.

Advantageously, partitioning $H_1$ in this way may achieve an approximation of the full-time time independent operator that corresponds to a quantum circuit that can be implemented on the quantum computer with better error scaling than an approximation of the full-time time independent operator obtained by naive Trotterization of the Hamiltonian terms. As this uses knowledge of which gates can be efficiently implemented in practice on a particular quantum computer to look for decompositions of $H_1$ (or elsewhere in this document $\tilde{H}_1$) the methods are specifically tailored to hardware on which the simulation is to be performed. In general terms, using knowledge of the gates means searching for decompositions that make the gates required implementable with a depth independent of the evolution time. For this, the first consideration is that the partition should act on as few qubits as possible, taking into account the commutativity of terms inside each of the terms in the product of exponentials. Better partitions are the ones where the gates in the product act on fewer qubits.

Optionally, when the decomposition of $\tilde{H}_1$ in step 1c) comprises partitioning $H_1$ according to its summands, $H_{1,\gamma}$, then the product of exponentials used in step 1d) to split up the time ordered evolution operator of each slice, $U_{\tilde{H}_1}\left((k+1)\frac{T}{N}+t_i, k\frac{T}{N}+t_i\right)$, is

$$\prod_{\gamma}^{\Gamma} U_{-H_0}\left((k+1)\frac{T}{N}+t_i, k\frac{T}{N}+t_i\right)U_{(H_0+H_{1,\gamma})}\left((k+1)\frac{T}{N}+t_i, k\frac{T}{N}+t_i\right).$$

Preferably, each $U_{(H0+H1,\gamma)}$ is implementable with an error $O(\alpha t)^2$ but not necessarily using only the subset that can be done in parallel.

Preferably, but not essentially, the partition of $H_1$ into $H_{1,\gamma}$ should be done in such a way that the resulting $U_{(H0+H1,\gamma)}$ can be implemented with an error $O(\alpha t)^2$.

Since $U_{H0}$ is implementable with gates in parallel then there is some partition $U_{H_0} = \prod_\xi U_{H_0}^\xi$ where $U_{H_0}^\xi$ acts on a few subsets of qubits (chosen considering the subset(s) of quantum gates $g_\xi$). Generally, $H_1$, will have some terms that act on the same qubits as some of the $U_{H_0}^\xi$; preferably, the partitioning of $H_1$ (or in other methods described herein the partitioning of $\tilde{H}_1$) into pieces is chosen to minimize this overlap of terms that act on the same qubits. Each of these pieces is denoted $H_{1,\gamma}$ and each time ordered evolution operator $U_{(H0+H1,\gamma)}$ of a slice acts on some number of qubits, $r$. An approximation to $U_{(H0+H1,\gamma)}$ can be found, in terms of the available gate set, $G$. Since the gate set, $G$, is universal for a given QIP, it is always possible to find such approximation. A maximum number of qubits for which this can be done using a classical system may be denoted $r_{Classical\ Max}$. If $r > r_{Classical\ Max}$, then the approximation to $U_{(H0+H1,\gamma)}$ can be found numerically, or otherwise, using a classical computer. If $r > r_{Classical\ Max}$ then the methods described above may be used but additionally, or alternatively, a Magnus expansion of order $p = 1$ may be used on $U_{(H0+H1,\gamma)}$ to produce an approximation with the desired error, $O(\alpha t)^2$.

Optionally, further decomposing $\tilde{H}_1$ in step 1c) comprises partitioning $\tilde{H}_1$ according to its summands, $\tilde{H}_{1,\gamma}$, based on the, or at least one of the, at least one subset(s) of quantum gates $g_\xi$, to arrive at an associated decomposition of $\tilde{H}_{1,decomp} = \Sigma_\gamma \tilde{H}_{1,\gamma}$.

The decomposition of $\tilde{H}_1$ in step 1c) can be done the other way around, i.e., by directly partitioning $\tilde{H}_1$ into its summands $\Sigma_\gamma \tilde{H}_{1,\gamma}$; however, unless this partition of $\tilde{H}_1$ corresponds to a partition of $H_1$ such as those described above, applying the methods set out herein to an arbitrary partition of $\tilde{H}_1$ into summands $\Sigma_\gamma \tilde{H}_{1,\gamma}$ will not correctly describe the time evolution of the system, so it is generally preferable to decompose $\tilde{H}_1$ by partitioning $H_1$ directly, as described above.

Optionally, further decomposing $\tilde{H}_1$ in step 1c) further comprises:

i) identifying a set, $H_\Delta = \{\widetilde{H}^0_{1,decomp}, \ldots, \widetilde{H}^\nu_{1,decomp}\}$, comprising at least two decompositions of $\tilde{H}_1$; and
ii) using each decomposition in the set $H_\Delta$ to generate an approximation of the time ordered evolution operator of each slice for that decomposition,

and the method further comprises:

performing step 1d) - where step 1d) includes splitting up the time ordered evolution operator of each slice using a product of exponentials based on the decomposition of $\tilde{H}_1$ - for each approximation of the time ordered evolution operator of each slice corresponding to each decomposition in the set $H_\Delta$;

performing step 1e) for each decomposition, $\widetilde{H}^\nu_{1,decomp}$, in the set $H_\Delta$, to identify a corresponding approximation of the full-time time evolution operator $U^\nu_A$, where step 1e) includes combining the results of steps 1a) to 1d) for each decomposition, $\widetilde{H}^\nu_{1,decomp}$, to provide the approximation, $U_A$, of the full-time time ordered evolution operator over the total evolution time and where step 1d) includes splitting up the time ordered evolution operator of each slice using a product of exponentials; and,

after step 1e), i) evaluating how efficient it is to implement each $U^\nu_A$ by calculating a circuit depth $d^\nu_A$ required to implement each $U^\nu_A$; and ii) identifying which $U^\nu_A$ has the lowest circuit depth $d^\nu_A$.

Steps 1ei) and 1eii) may be understood to mean that the approximation $U_A$ provided in step 1e) for a decomposition, $\widetilde{H}^\nu_{1,decomp}$, in the set $H_\Delta$ is the corresponding approximation of the full-time time evolution operator $U^\nu_A$ for the decomposition $\widetilde{H}^\nu_{1,decomp}$.

Optionally, in step 1ci) identifying a set of decompositions $H_\Delta$ may comprise: partitioning $H_1$ according to its summands, $H_{1,\gamma}$, at least twice to identify at least two associated decompositions $\widetilde{H}^\nu_{1,decomp}$ that make up the set $H_\Delta$.

As above, the decomposition of $\tilde{H}_1$ can be done the other way around, i.e., by directly partitioning $\tilde{H}_1$; however, unless the partition of $\tilde{H}_1$ corresponds to a partition of $H_1$ such as those described above, applying the methods set out herein to an arbitrary direct partition of $\tilde{H}_1$ will not correctly describe the time evolution of the system, so it is generally preferable to decompose $\tilde{H}_1$ by partitioning $H_1$ directly, as described above. If a decomposition of $\tilde{H}_1$ is preferred by the user, the methods of Magnus-THRIFT (or Fer-THRIFT) could be used instead.

In the preceding paragraphs, and throughout, generally if step 1c) comprised partitioning $H_1$ according to its summands, $H_{1,\gamma}$ then the product of exponentials used in step 1d) is

$$\prod_\gamma^\Gamma U_{-H_0}\left((k+1)\frac{T}{N} + t_i, k\frac{T}{N} + t_i\right) U_{(H_0+H_{1,\gamma})}\left((k+1)\frac{T}{N} + t_i, k\frac{T}{N} + t_i\right).$$

Optionally, identifying $U_A$ in step 1) further comprises the steps of:

j) using the $U_A$ from step 1e), where step 1e) includes combining the results of steps 1a) to 1d) to provide the approximation, $U_A$, of the full-time time ordered evolution operator over the total evolution time, as a first order Trotter seed, $U_{A,Seed}$, to determine at least one higher-order Trotter approximation of the time evolution operator, $U_{A,2k}$, using a $2k$-order product formula;
k) evaluating how efficient it is to implement $U_{A,Seed}$ and each at least one higher-order Trotter approximation of the full-time time evolution operator, $U_{A,2k}$, by calculating circuit depths $d_{A,Seed}$ and $d_{A,2k}$ required to implement $U_{A,Seed}$ and each $U_{A,2k}$ respectively; and
m) identifying a $U_{A,Seed}$ or $U_{A,2k}$ with the lowest circuit depth, $d_{A,Seed}$ or $d_{A,2k}$.

Optionally, the $2k$-order product formula may be a p-order Suzuki formula which is a formula that, given some Hamiltonian $H = \Sigma_i H_i$ generates an approximation up to order $t^{p+1}$ of the full-time time ordered evolution operator by permuting products of the exponentials of the summands of $H$, with different coefficients.

Optionally, the $2k$-order product formula may be another $2k$-order product formula, for example,

$$U_{A,m} = \left(\prod_{j=1}^{m} w_{m-j+1}t\right) U_{A,seed}(w_0 t) \left(\prod_{j=1}^{m} w_j t\right),$$

where the parameters $w_j$ are found through a deterministic procedure as explained in [M. E. S. Morales, et. al. "Greatly improved higher-order product formulae for quantum simulation". In https://arxiv.org/pdf/2210.15817.pdf, arXiv:2210.15817v1, [quant-ph], 28 Oct 2022].

Advantageously, since the algorithms described above (THRIFT) use a product formula $\prod_{\gamma}^{\Gamma} U_{-H_0}\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right)$ to approximate $U_A$ in step 1e), any currently known or future product formula that starts from a seed with error $O(\alpha^2 t^2)$ may be used in place of the 2$k$-order product formula, with $U_A$ from THRIFT step 1e) as a seed, according to the steps j) to m) described above.

Optionally, if further decomposing $\tilde{H}_1$ in step 1c) further comprises:

i) identifying a set, $H_\Delta = \{\tilde{H}_{1,decomp}^{0}, \ldots, \tilde{H}_{1,decomp}^{\nu}\}$, comprising at least two decompositions of $\tilde{H}_1$ and

ii) using each decomposition in the set $H_\Delta$ to generate an approximation of the time ordered evolution operator of each slice for that decomposition,

and the method further comprises:

performing step 1d) - where step 1d) includes splitting up the time ordered evolution operator of each slice using a product of exponentials based on the decomposition of $\tilde{H}_1$ - for each approximation of the time ordered evolution operator of each slice corresponding to each decomposition in the set $H_\Delta$; and

performing step 1e) for each decomposition, $\tilde{H}_{1,decomp}^{\nu}$, in the set $H_\Delta$ - where step 1e) includes combining the results of steps 1a) to 1d) to provide the approximation, $U_A$, of the full-time time ordered evolution operator over the total evolution time - to identify a corresponding approximation of the full-time time evolution operator $U_A^{\nu}$,

and, after step 1e):

i) evaluating how efficient it is to implement each $U_A^{\nu}$ by calculating a circuit depth $d_A^{\nu}$ required to implement each $U_A^{\nu}$; and

ii) identifying which $U_A^{\nu}$ has the lowest circuit depth $d_A^{\nu}$,

and if identifying $U_A$ in step 1) further comprises steps 1j) to 1m), then:

step j) may use the $U_A^{\nu}$ with the lowest circuit depth $d_A^{\nu}$ from step 1eii) as a first order Trotter seed, $U_{A,Seed}^{\nu}$, to determine at least one higher-order Trotter approximation of the time evolution operator, $U_{A,2k}^{\nu}$, using a 2k-order product formula;

step k) may evaluate how efficient it is to implement $U_{A,Seed}^{\nu}$ and each at least one higher-order Trotter approximation of the full-time time evolution operator, $U_{A,2k}^{\nu}$, by calculating circuit depths $d_{A,Seed}^{\nu}$ and $d_{A,2k}^{\nu}$ required to implement $U_{A,Seed}^{\nu}$ and each $U_{A,2k}^{\nu}$ respectively; and

step m) may identify a $U_{A,Seed}^{\nu}$ or $U_{A,2k}^{\nu}$ with the lowest circuit depth, $d_{A,Seed}^{\nu}$ or $d_{A,2k}^{\nu}$. Optionally, in step

k), $d^{v}_{A,Seed}$ may not be (re)calculated and instead a corresponding circuit depth from, for example, step 1ei) may be reused.

Optionally, the method may further comprise:

n) performing steps 1j) to 1m) again for at least one of the one or more further decompositions $\widetilde{H}^{v}_{1,decomp}$ in the set $H_{\Delta}$;

o) comparing the circuit depths, $d^{v}_{A,Seed}$ or $d^{v}_{A,2k}$, of all the identified approximations, $U^{v}_{A,Seed}$ or $U^{v}_{A,2k}$, from step(s) 1m) in step 1n); and

p) identifying a $U^{v}_{A,Seed}$ or $U^{v}_{A,2k}$ with the lowest circuit depth, $d^{v}_{A,Seed}$ or $d^{v}_{A,2k}$, where, in step 1n), performing steps 1j) to 1m) again for at least one of the one or more further decompositions $\widetilde{H}^{v}_{1,decomp}$ in the set $H_{\Delta}$ may further comprise:

performing step j) using each identified $U^{v}_{A}$ as a first order Trotter seed, $U^{v}_{A,Seed}$, to determine at least one corresponding higher-order Trotter approximation of the time evolution operator, $U^{v}_{A,2k}$, using a 2*k*-order product formula;

performing step k) where evaluating how efficient it is to implement $U^{v}_{A,Seed}$ and each at least one higher-order Trotter approximation of the full-time time evolution operator, $U^{v}_{A,2k}$, by calculating circuit depths $d^{v}_{A,Seed}$ and $d^{v}_{A,2k}$ required to implement $U^{v}_{A,Seed}$ and each $U^{v}_{A,2k}$ respectively may comprise evaluating how efficient it is to implement each $U^{v}_{A,Seed}$ from step(s) 1j) and each at least one higher-order Trotter approximation of the full-time time evolution operator, $U^{v}_{A,2k}$, by calculating circuit depths $d^{v}_{A,Seed}$ and $d^{v}_{A,2k}$ required to implement each $U^{v}_{A,Seed}$ and each $U^{v}_{A,2k}$ respectively; and

step m) may identify a $U^{v}_{A,Seed}$ or $U^{v}_{A,2k}$ with the lowest circuit depth, $d^{v}_{A,Seed}$ or $d^{v}_{A,2k}$. Optionally, in step k), $d^{v}_{A,Seed}$ may not be (re)calculated and instead a corresponding circuit depth from, for example, step 1ei) may be reused.

In addition to comparing the circuit depths of identified approximations of the full-time time evolution operator to identify the approximation $U_A$, a user defined worst case error may be used to limit the number of approximations having their circuit depths compared in step n). The error of an approximation may be quantified according to the expression $\varepsilon_A = \|U_{exact}(T) - U_{Approx}(T)\|$. The error associated with an approximation may be compared to the user defined worst case error to determine if an approximation should be included in the comparison of associated circuit depths or subsequent identification step. For example, only approximations with small enough errors may have their circuit depths calculated, or all approximations may have their circuit depths calculated but some may be excluded from the comparison of circuit depths if their error is larger than the user defined worst case error. The user defined worst case error may also be used in this way in any or all steps comprising identification of an approximation, *U*, with lowest circuit depth.

Generally, identifying an approximation with lowest circuit depth from a group, list, or pair, of approximations comprises comparison of the circuit depths associated with the approximations that may be chosen. If multiple approximations have the same circuit depth, then identification of an approximation from the group, list, or pair, of approximations then other parameters may be used to make an identification. Alternative parameters that may be used to identify an approximation comprise: the order of the error of the approximations which may be found using $\varepsilon_A = \|U_{exact}(T) - U_{Approx}(T)\|$; a measure of the tendency of an approximation towards corruption due to noise which may be determined based on the quantum gates required to enact an approximation (some quantum gates are more prone to corruption due to noise on different QIP architectures/qubit types); a measure of the time required to execute the approximation as a quantum circuit on a given QIP architecture (some gates may take longer to implement on some types of qubits than others). Comparison of any, or all, of these measures may be used to determine which approximation to identify as $U_A$ to be implemented on the QIP in step 2.

Optionally, further decomposing $\tilde{H}_1$ in step 1c) further comprises decomposing the time ordered evolution operator of each slice, $U_{\tilde{H}_1}\left((k+1)\frac{T}{N}+t_i, k\frac{T}{N}+t_i\right)$, in terms of nested commutators $C_p(t_1, ..., t_p) = [\tilde{H}_1(t_1), [..., \tilde{H}_1(t_p)]]$ of $\tilde{H}_1(t)$ at different times, $t_p$, within the/each slice.

In cases where this refers to the broadest formulation of the method this usually means decomposing $\tilde{H}_1$ in step 1c) only in terms of nested commutators. However, when this refers to some of the more nuanced formulations discussed above, then decomposing $\tilde{H}_1$ in step 1c) may include decomposing $\tilde{H}_1$ in multiple ways, for comparison purposes.

Optionally, decomposing $\tilde{H}_1$ in step 1c) uses a p-order Magnus expansion, $\Omega^{[p]}(t, \delta t)$ where $t$ is the initial time of the slice and $\delta t = T/N$ is the size of the slice and the time ordered evolution operator of the slice can be written

$$U_{\tilde{H}_1}\left((k+1)\frac{T}{N}+t_i, k\frac{T}{N}+t_i\right) = U_{\tilde{H}_1}\left(t+\frac{T}{N}, t\right) = U_{\tilde{H}_1}(t+\delta t, t).$$

In cases where this refers to the broadest formulation of the method this usually means decomposing $\tilde{H}_1$ in step 1c) only using a Magnus expansion. However, when this refers to some of the more nuanced formulations discussed above, then decomposing $\tilde{H}_1$ in step 1c) may include decomposing $\tilde{H}_1$ in multiple ways, for comparison purposes.

Optionally, the time ordered evolution operator of each slice $U_{\tilde{H}1}(t+\delta t, t)$ is approximated using an exponential of the p-order Magnus expansion, $e^{(\Omega[p](t,\delta t))}$ defined using $\Omega^{[p]}(t, \delta t) = \sum_{j=1}^{p} \Omega_j(t, \delta t)$, wherein $\Omega_j(t, \delta t)$ is defined recursively as:

$$\Omega_n(t, \delta t) = -i \sum_{j=1}^{n-1} \frac{b_j}{j!} \sum_{k_1+\cdots+k_j=n-1} \int_t^{t+\delta t} ad\left[\Omega_{k_1}(\tau)\right]\left(... ad\left[\Omega_{k_j}(\tau)\right]\left(\tilde{H}_1\right)\right) d\tau$$

where $n \geq 1$, all indices in the sum satisfying $k_j \geq 1$, $b_j$ is the jth Bernoulli number, and $ad[A](B) = [A, B]$ is the commutator of $A$ and $B$, and further wherein $\Omega_n(t, \delta t)$ is approximated by computing a polynomial of order $(\delta t)^n$ such that

$$\Omega_n(t, \delta t) = \sum_{m=1}^{n} (\delta t)^m \sum_q f_{m,q}(t) O_q \equiv \sum_q F_q(t, \delta t) O_q$$

is a sum of time independent operators, $O_q$. For example, for $p = 4$, $1 \leq n \leq 4$, and

$$\Omega_n(t, \delta t) = -i \sum_{j=1}^{n-1} \frac{b_j}{j!} \sum_{k_1+\cdots+k_j=n-1} \int_t^{t+\delta t} ad\left[\Omega_{k_1}(\tau)\right]\left(... ad\left[\Omega_{k_j}(\tau)\right]\left(\tilde{H}_1\right)\right) d\tau$$

provides

$$\Omega_1(t) = -i\alpha \int_0^t H_1(\tau)\, d\tau,$$

$$\Omega_2(t) = \frac{(-i\alpha)^2}{2} \int_0^t dt_1 \int_0^{t_1} dt_2\, [H_1(t_1), H_1(t_2)]$$

$$\Omega_3(t) = \frac{(-i\alpha)^3}{6}\int_0^t dt_1 \int_0^{t_1} dt_2 \int_0^{t_2} dt_3 \, \Big([H_1(t_1),[H_1(t_2),H_1(t_3)]] + [H_1(t_3),[H_1(t_2),H_1(t_1)]]\Big)$$

$$\Omega_4(t) = \frac{(-i\alpha)^4}{12}\int_0^t dt_1 \int_0^{t_1} dt_2 \int_0^{t_2} dt_3 \int_0^{t_4} dt_4 \, \Big(\big[[[H_1(t_1),H_1(t_2)],H_1(t_3)],H_1(t_4)\big] + \big[H_1(t_1),[[H_1(t_2),H_1(t_3)],H_1(t_4)]\big] + \big[H_1(t_1),[H_1(t_2),[H_1(t_3),H_1(t_4)]]\big] + \big[H_1(t_2),[H_1(t_3),[H_1(t_4),H_1(t_1)]]\big]\Big)$$

and $\Omega^{[p=4]}(t,\delta t) = \Omega_1(t) + \Omega_2(t) + \Omega_3(t) + \Omega_4(t)$.

Optionally, the product of exponentials used in step 1d) to split up the time ordered evolution operator of each slice, $U_{\tilde{H}1}(t + \delta t, t)$, is

$$\prod_{q=1}^{r} e^{F_q(t,\delta t)\mathrm{O}_q} \prod_{q=r}^{1} e^{F_q(t,\delta t)\mathrm{O}_q}.$$

Advantageously, in the product of exponentials in terms of $F_q(t, \delta t)O_q$ above (and below) where the operators $O_q$ are time independent operators, any product formula could be used without worrying about the time ordering operator.

Optionally, the product of exponentials used in step 1d) is a higher-order product formula constructed using a seed,

$$Seed = \prod_{q=1}^{r} e^{F_q(t,\delta t)\mathrm{O}_q} \prod_{q=r}^{1} e^{F_q(t,\delta t)\mathrm{O}_q} ,$$

optionally wherein the higher-order product formula is a $2\kappa$-order Suzuki formula, $S_{2\kappa}(\delta t)$ or $\tilde{S}_{2\kappa}(\delta t)$, defined recursively by:

$$S_{2\kappa}(\delta t) = S_{2\kappa-2}(s_\kappa \delta t)\, S_{2\kappa-2}\big((1-2s_\kappa)\delta t\big)\, S_{2\kappa-2}(s_\kappa \delta t),\ s_\kappa = 1/\Big(2 - 2^{\frac{1}{2\kappa-1}}\Big)$$ and $S_2 = Seed$; and

$\tilde{S}_{2\kappa}(\delta t) = S_{2\kappa-2}(u_\kappa \delta t)^2\, \tilde{S}_{2\kappa-2}((1 - 4u_\kappa)\delta t)\tilde{S}_{2\kappa-2}(u_\kappa \delta t)^2$, $u_\kappa = 1/\Big(4 - 4^{\frac{1}{2\kappa-1}}\Big)$, and $S_2 = Seed$, respectively.

Optionally, either of the $2\kappa$-order Suzuki formulae, $S_{2\kappa}(\delta t)$ and $\tilde{S}_{2\kappa}(\delta t)$, as defined by the equations above may be used as the 2k-order product formula in step 1j) of the method where the $U_A$ from step 1e) is used as a first order Trotter seed, $U_{A,Seed}$, for $S_1$(t) and $\tilde{S}_1(t) = U_{seed}(t)$ respectively, and $S_2(t)$ and $\tilde{S}_2 = U_{seed}\left(\frac{t}{2}\right) U_{Seed}^{\dagger}\left(-\frac{t}{2}\right)$ instead of the *Seed* defined above and using $\delta t = t$.

Optionally, step 1c) further comprises:

i) identifying a set of $\Lambda$ Magnus expansions, $\Omega^{\Lambda} = \{\Omega^{[p=1]}(t, \delta t), ..., \Omega^{[p=\Lambda]}(t, \delta t)\}$ wherein $\Lambda \geq 2$; and

ii) using each Magnus expansion in the set $\Omega^{\Lambda}$ to generate an approximation of the time ordered evolution operator of each slice in terms of $\tilde{H}_{1,p}(t_p)$ at different times, $t_p$, within each slice,

the method further comprising:

performing step 1d) - where step 1d) includes splitting up the time ordered evolution operator of each slice using a product of exponentials based on the decomposition of $\tilde{H}_1$ from step 1c) - for each approximation of the time ordered evolution operator of each slice corresponding to each Magnus expansion in the set $\Omega^{\Lambda}$;
performing step 1e) - where step 1e) includes combining the results of steps 1a) to 1d) to provide the approximation, $U_A$, of the full-time time ordered evolution operator over the total evolution time - for each Magnus expansion in the set $\Omega^{\Lambda}$ to identify a corresponding approximation of the full-time time evolution operator $U_A^{\Lambda}$,

and after step 1e):

i) for each Magnus expansion in the set $\Omega^{\Lambda}$, evaluating how efficient it is to implement each approximation of the time evolution operator, $U_A^{\Lambda}$, by calculating a circuit depth $d_A^{\Lambda}$ required to implement each $U_A^{\Lambda}$; and
ii) identifying a $U_A^{\Lambda}$ with the lowest circuit depth, $d_A^{\Lambda}$.

In cases where this refers to the broadest formulation of the method this usually means decomposing $\tilde{H}_1$ in step 1c) only using a set of Magnus expansions. However, when this refers to some of the more nuanced formulations discussed above, then decomposing $\tilde{H}_1$ in step 1c) may include decomposing $\tilde{H}_1$ in multiple ways, for comparison purposes.

Optionally, if further decomposing $\tilde{H}_1$ in step 1c) further comprises:

i) identifying a set of $\Lambda$ Magnus expansions, $\Omega^{\Lambda} = \{\Omega^{[p=1]}(t, \delta t), ..., \Omega^{[p=\Lambda]}(t, \delta t)\}$ wherein $\Lambda \geq 2$; and
ii) using each Magnus expansion in the set $\Omega^{\Lambda}$ to generate an approximation of the time ordered evolution operator of each slice in terms of $\tilde{H}_{1,p}(t_p)$ at different times, $t_p$, within each slice,

the method further comprising:

performing step 1d) - where step 1d) includes splitting up the time ordered evolution operator of each slice using a product of exponentials based on the decomposition of $\tilde{H}_1$ from step 1c) - for each approximation of the time ordered evolution operator of each slice corresponding to each Magnus expansion in the set $\Omega^{\Lambda}$;
performing step 1e) - where step 1e) includes combining the results of steps 1a) to 1d) to provide the approximation, $U_A$, of the full-time time ordered evolution operator over the total evolution time - for each Magnus expansion in the set $\Omega^{\Lambda}$ to identify a corresponding approximation of the full-time time evolution operator $U_A^{\Lambda}$,

and after step 1e):

i) for each Magnus expansion in the set $\Omega^{\Lambda}$, evaluating how efficient it is to implement each approximation of the time evolution operator, $U_A^{\Lambda}$, by calculating a circuit depth $d_A^{\Lambda}$ required to implement each $U_A^{\Lambda}$; and
ii) identifying a $U_A^{\Lambda}$ with the lowest circuit depth, $d_A^{\Lambda}$,

and step 1d) includes using the product of exponentials, $\prod_{q=1}^{r} e^{F_q(t,\delta t)O_q} \prod_{q=r}^{1} e^{F_q(t,\delta t)O_q}$, to split up the time ordered evolution operator of each slice, $U_{\tilde{H}1}(t + \delta t, t)$, then the method may further comprise, after step eii):

performing step 1d) again using as the product of exponentials at least one higher-order product formula constructed using a seed, wherein the seed is the product of exponentials associated with the $U_A^{\Lambda}$ with the lowest circuit depth $d_A^{\Lambda}$ from step 1eii), optionally wherein the higher order-product formula is a $2\kappa$-order Suzuki formula, $S_{2\kappa}(\delta t)$ or $\tilde{S}_{2\kappa}(\delta t)$, defined recursively as above;
performing step 1e) again to identify a corresponding approximation of the full-time time evolution operator $U_{A,\text{higher order}}^{\Lambda}$ using the at least one higher-order product formula from each additional step 1d);

performing step ei) again to evaluate how efficient it is to implement each at least one $U^{\Lambda}_{A,\text{higher order}}$ by calculating a circuit depth $d^{\Lambda}_{A,\text{higher order}}$ required to implement each at least one $U^{\Lambda}_{A,\text{higher order}}$; and performing step eii) again to identify a $U^{\Lambda}_{A}$ or $U^{\Lambda}_{A,\text{higher order}}$ with the lowest circuit depth, $d^{\Lambda}_{A}$ or $d^{\Lambda}_{A,\text{higher order}}$. Optionally, if step 1d) is performed additionally more than once after step 1eii) then each further instance may correspond to performing this step for a different order of the higher order formula.

Optionally, in the method of the previous paragraph, performing step 1d) for each approximation of the time ordered evolution operator of each slice corresponding to each Magnus expansion in the set $\Omega^{\Lambda}$ may comprise - in addition, or as an alternative, to using the product of exponentials $\prod_{q=1}^{r} e^{F_q(t,\delta t)O_q} \prod_{q=r}^{1} e^{F_q(t,\delta t)O_q}$ to split up the time ordered evolution operator of each slice, $U_{\tilde{H}1}(t + \delta t, t)$ - using as the product of exponentials at least one higher-order product formula constructed using a seed $\prod_{q=1}^{r} e^{F_q(t,\delta t)O_q} \prod_{q=r}^{1} e^{F_q(t,\delta t)O_q}$, to split up the time ordered evolution operator of each slice, $U_{\tilde{H}1}(t + \delta t, t)$, rather than additionally performing steps 1d)-1eii) as described in the preceding paragraph. In this case, step 1e) may be performed multiple times for each Magnus expansion in the set $\Omega^{\Lambda}$ to identify corresponding approximation(s) of the full-time time evolution operator $U^{\Lambda}_{A}$ and/or $U^{\Lambda}_{A,\text{higher order}}$(s). Steps i) and ii) may then be performed as described above, so that for each Magnus expansion in the set $\Omega^{\Lambda}$ the efficiency of each $U^{\Lambda}_{A}$ and/or $U^{\Lambda}_{A,\text{higher order}}$ approximation(s) is evaluated by calculation of a corresponding circuit depth, $d^{\Lambda}_{A}$ and/or $d^{\Lambda}_{A,\text{higher order}}$, and the $U^{\Lambda}_{A}$ or $U^{\Lambda}_{A,\text{higher order}}$ with the lowest circuit depth is identified.

That is, in general terms, the method may comprise performing the steps 1d) and 1e) at least once more for each Magnus expansion in the set $\Omega^{\Lambda}$, wherein the product of exponentials used in step 1d) is a higher-order product formula constructed using a seed $Seed = \prod_{q=1}^{r} e^{F_q(t,\delta t)O_q} \prod_{q=r}^{1} e^{F_q(t,\delta t)O_q}$, optionally wherein the higher-order product formula is a $2\kappa$-order Suzuki formula, $S_{2\kappa}(\delta t)$ or $\tilde{S}_{2\kappa}(\delta t)$, defined recursively as above, and wherein each step 1e) identifies a corresponding approximation of the full-time time evolution operator $U^{\Lambda}_{A,\text{higher order}}$. If the steps 1d) and 1e) are performed more than once more for each Magnus expansion in the set $\Omega^{\Lambda}$, then each additional performance may relate to a different order of the higher-order product formula.

Optionally, in general terms, the method may comprise the steps of:

1$\alpha$) performing step 1 according to any of the methods described herein where $H_1$ is partitioned according to its summands, $H_{1,\gamma}$, based on the at least one subset of quantum gates $g_{\xi}$ to identify an approximation of the full-time time evolution operator, $U_{A,\alpha}$, with an associated circuit depth, $d_{A,\alpha}$; and
1$\beta$) performing step 1 again according to any of the above methods where decomposing $\tilde{H}_1(t)$ uses a p-order Magnus expansion, $\Omega^{[p]}(t, \delta t)$ to identify an approximation of the full-time time evolution operator, $U_{A,\beta}$, with an associated circuit depth, $d_{A,\beta}$;

1$\varrho$) identifying an approximation of the full-time time ordered evolution operator, $U_A$, for use in step 2 chosen out of $U_{A,\alpha}$ and $U_{A,\beta}$ based on their associated circuit depths; and

performing step 2) using the approximation of the full-time time ordered evolution operator from step 1$\varrho$) in step 2b).

It will be appreciated by those skilled in the art that, in the preceding paragraph and throughout, step 1$\alpha$) may additionally or alternatively comprise performing step 1 according to any of the methods described herein where $\tilde{H}_1$ is

partitioned according to its summands, $\tilde{H}_{1,\gamma}$, based on the at least one subset of quantum gates $g_\xi$ to identify an approximation(s) of the full-time time evolution operator, $U_{A,\alpha}$, with an associated circuit depth, $d_{A,\alpha}$.

Herein, and throughout, 'performing step 1α)' preferably connotes 'performing step 1 according to any of the methods described herein where $H_1$ is partitioned according to its summands, $H_{1,\gamma}$, based on the at least one subset of quantum gates $g_\xi$ to identify an approximation of the full-time time evolution operator, $U_{A,\alpha}$, with an associated circuit depth, $d_{A,\alpha}$' and performing 'step 1β)' preferably connotes 'performing step 1 according to any of the above methods where decomposing $H_1(t)$ uses a p-order Magnus expansion, $\Omega^{[p]}(t, \delta t)$ to identify an approximation of the full-time time evolution operator, $U_{A,\beta}$, with an associated circuit depth, $d_{A,\beta}$'.

Optionally, if the method comprises the steps of performing step $1\alpha$) and step $1\beta$) then these steps may be performed in either order, i.e., $1\alpha$) followed by $1\beta$), or $1\beta$) followed by $1\alpha$). It will be appreciated by those skilled in the art that steps $1\alpha$) and $1\beta$) may be performed in either order and the labelling of steps $1\alpha$) and $1\beta$) and approximations $U_{A,\alpha}$ and $U_{A,\beta}$ (and their associated circuit depths) is preferably intended to indicate a type of method used to further decompose $\tilde{H}_1$ in a step (or to obtain an approximation), rather than an order in which steps ought to be performed (or order that approximations ought to be calculated).

Optionally, if the method would comprise the steps of performing step $1\alpha$) and step $1\beta$) then the method may comprise, additionally or as an alternative to either step $1\alpha$) or step $1\beta$), an appropriately denoted step, e.g. $1\phi$), which comprises performing step 1 wherein further decomposing $\tilde{H}_1$ is carried out using an alternative appropriate partitioning or expansion method, for example employment of a Fer expansion.

The following examples of methods comprising steps $1\alpha$), $1\beta$), and $1\varrho$) are provided by way of example only and are not intended to limit the interpretation of the preceding paragraphs.

For example, the method may comprise the following steps $1\alpha$), $1\beta$), and $1\varrho$):

**Step $1\alpha$)**

Performing step 1) to identify an approximation of the full-time time evolution operator, $U_{A,\alpha}$, with an associated circuit depth, $d_{A,\alpha}$, as described above by:

1a) decomposing the Hamiltonian, $H$, based on the, or at least one of the, at least one subset(s) of quantum gates, $g_\xi$;
1b) splitting the total evolution time, $T$, of the full-time time evolution operator of $\tilde{H}_1$ into $N$ slices of size $T/N$;
1c) approximating the time ordered evolution operator of each slice by further decomposing $\tilde{H}_1$ based on the, or at least one of the, at least one subset(s) of quantum gates, $g_\xi$, by:

i) identifying a set, $H_\Delta = \{\widetilde{H}^0_{1,decomp}, \ldots, \widetilde{H}^\nu_{1,decomp}\}$ comprising at least two decompositions of $\tilde{H}_1$, where further decomposing $\tilde{H}_1$ comprises partitioning $H_1$ according to its summands, $H_{1,\gamma}$, based on the, or at least one of the, at least one subset(s) of quantum gates $g_\xi$, to arrive at an associated decomposition of $\widetilde{H}^\nu_{1,decomp} = \sum_\gamma \widetilde{H}_{\mathbf{1},\gamma}$; and
ii) using each decomposition in the set $H_\Delta$ to generate an approximation of the time ordered evolution operator of each slice for that decomposition;

1d) for each approximation of the time ordered evolution operator of each slice corresponding to each decomposition in the set $H_\Delta$, splitting up the time ordered evolution operator of each slice $U_{\tilde{H}_1}\left(\left(k+1\right)\frac{T}{N}+t_i, k\frac{T}{N}+t_i\right)$ using a product of exponentials $\prod_\gamma^\Gamma U_{-H_0}\left(\left(k+1\right)\frac{T}{N}+t_i, k\frac{T}{N}+t_i\right) U_{(H_0+H_{1,\gamma})}\left(\left(k+1\right)\frac{T}{N}+t_i, k\frac{T}{N}+t_i\right)$ based on the associated decomposition of $\tilde{H}_1$ from step 1c), $\widetilde{H}^\nu_{1,decomp} = \sum_\gamma \widetilde{H}_{1,\gamma}$; and

1e) combining the results of steps 1a) to 1d) for each decomposition, $\widetilde{H}^\nu_{1,decomp}$, in the set $H_\Delta$, to provide the approximation, $U_A$, of the full-time time ordered evolution operator over the total evolution time for each decomposition, $\widetilde{H}^\nu_{1,decomp}$, in the set $H_\Delta$, each approximation denoted $U^\nu_A$,

and then i) evaluating how efficient it is to implement each $U_A^\nu$ by calculating a circuit depth $d_A^\nu$ required to implement each $U_A^\nu$; and ii) identifying the $U_A^\nu$ with the lowest circuit depth $d_A^\nu$, as $U_{A,\alpha}$ with associated circuit depth, $d_{A,\alpha}$.

**Step 1$\beta$)**

Performing step 1) to identify an approximation of the full-time time evolution operator, $U_{A,\beta}$, with an associated circuit depth, $d_{A,\beta}$, as described above by:

1a) decomposing the Hamiltonian, $H$, based on the, or at least one of the, at least one subset(s) of quantum gates, $g_\xi$;
1b) splitting the total evolution time, $T$, of the full-time time evolution operator of $\tilde{H}_1$ into $N$ slices of size $T/N$;
1c) approximating the time ordered evolution operator of each slice, $U_{\tilde{H}1}(t+\delta t, t)$, by further decomposing $\tilde{H}_1$ based on the, or at least one of the, at least one subset(s) of quantum gates, $g_\xi$, by:

i) identifying a set of $\Lambda$ Magnus expansions, $\Omega^\Lambda = \{\Omega^{[p=1]}(t, \delta t), ..., \Omega^{[p=\Lambda]}(t, \delta t)\}$, wherein $\Lambda \geq 2$; and
ii) using each Magnus expansion in the set $\Omega^\Lambda$ to generate an approximation of the time ordered evolution operator of each slice in terms of $\tilde{H}_{1,p}(t_p)$ at different times, $t_p$, within each slice using an exponential of the p-order Magnus expansion, $e^{(\Omega[p](t,\delta t))}$;

1d) for each approximation of the time ordered evolution operator of each slice corresponding to each Magnus expansion in the set $\Omega^\Lambda$, splitting up the time ordered evolution operator of each slice using a product of exponentials, $\prod_{q=1}^{r} e^{F_q(t,\delta t)\mathrm{O}_q} \prod_{q=r}^{1} e^{F_q(t,\delta t)\mathrm{O}_q}$, based on the decomposition of $\tilde{H}_1$ using a Magnus expansion from step 1c); and
1e) for each Magnus expansion in the set $\Omega^\Lambda$, combining the results of steps 1a) to 1d) to identify a corresponding approximation of the full-time time evolution operator $U_A^\Lambda$; and then i) evaluating how efficient it is to implement each $U_A^\Lambda$ by calculating a circuit depth $d_A^\Lambda$ required to implement each $U_A^\Lambda$; and ii) identifying the $U_A^\Lambda$ with the lowest circuit depth, $d_A^\Lambda$, as $U_{A,\beta}$, with associated circuit depth, $d_{A,\beta}$.

**Step 1$\varrho$)**

Identifying whether $U_{A,\alpha}$ or $U_{A,\beta}$ has the lowest associated circuit depth; and performing steps 2a) to 2d) using the $U_A$ having the lowest associated circuit depth.

As noted previously, the decomposition of $\tilde{H}_1$ in step 1c) of 1$\alpha$ can be done the other way around, i.e., by directly partitioning $\tilde{H}_1$ into its summands $\Sigma_\gamma \tilde{H}_{1,\gamma}$; however, unless this partition of $\tilde{H}_1$ corresponds to a partition of $H_1$ such as those described above, applying the methods set out herein to an arbitrary partition of $\tilde{H}_1$ into summands $\Sigma_\gamma \tilde{H}_{1,\gamma}$ will not correctly describe the time evolution of the system, so it is generally preferable to decompose $\tilde{H}_1$ by partitioning $H_1$ directly, as described above.

Optionally, in a method according to the preceding example including the steps 1$\alpha$), 1$\beta$), and 1$\varrho$), step 1$\alpha$) may further comprise the steps of:

j) using the $U_A$ from step 1e) - where step 1e) includes combining the results of steps 1a) to 1d) for each decomposition, $\tilde{H}_{1,decomp}^\nu$, in the set $H_\Delta$, to provide the approximation, $U_A$, of the full-time time ordered evolution operator over the total evolution time for each decomposition, $\tilde{H}_{1,decomp}^\nu$, in the set $H_\Delta$, each approximation denoted $U_A^\nu$ - as a first order Trotter seed, $U_{A,Seed}^\nu$, to determine at least one higher-order Trotter approximation of the time evolution operator, $U_{A,2k}^\nu$, using a $2k$-order product formula;

k) evaluating how efficient it is to implement $U_{A,Seed}^\nu$ and each at least one higher-order Trotter approximation of the full-time time evolution operator, $U_{A,2k}^{\nu}$, by calculating circuit depths $d_{A,Seed}^{\nu}$ and $d_{A,2k}^{\nu}$ required to implement $U_{A,Seed}^{\nu}$ and each $U_{A,2k}^{\nu}$ respectively; and

m) identifying a $U_{A,Seed}^{\nu}$ or $U_{A,2k}^{\nu}$ with the lowest circuit depth, $d_{A,Seed}^{\nu}$ or $d_{A,2k}^{\nu}$.

Optionally, in a method according to the preceding example including the steps 1$\alpha$), 1$\beta$), and 1$\varrho$), step 1$\alpha$) may further comprise the steps of:

n) performing steps 1j) to 1m) again for at least one of the one or more further decompositions $\widetilde{H}_{1,decomp}^{\nu}$ in the set $H_{\Delta}$;

o) comparing the circuit depths, $d_{A,Seed}^{\nu}$ or $d_{A,2k}^{\nu}$, of all the identified approximations, $U_{A,Seed}^{\nu}$ or $U_{A,2k}^{\nu}$, from step(s) 1m) in step 1n); and

p) identifying a $U_{A,Seed}^{\nu}$ or $U_{A,2k}^{\nu}$ with the lowest circuit depth, $d_{A,Seed}^{\nu}$ or $d_{A,2k}^{\nu}$, where, in step 1n), performing steps 1j) to 1m) again for at least one of the one or more further decompositions $\widetilde{H}_{1,decomp}^{\nu}$ in the set $H_{\Delta}$ may further comprise:

performing step j) using each identified $U_{A}^{\nu}$ as a first order Trotter seed, $U_{A,Seed}^{\nu}$, to determine at least one corresponding higher-order Trotter approximation of the time evolution operator, $U_{A,2k}^{\nu}$, using a 2*k*-order product formula;

performing step k) where evaluating how efficient it is to implement $U_{A,Seed}^{\nu}$ and each at least one higher-order Trotter approximation of the full-time time evolution operator, $U_{A,2k}^{\nu}$, by calculating circuit depths $d_{A,Seed}^{\nu}$ and $d_{A,2k}^{\nu}$ required to implement $U_{A,Seed}^{\nu}$ and each $U_{A,2k}^{\nu}$ respectively may comprise evaluating how efficient it is to implement each $U_{A,Seed}^{\nu}$ from step(s) 1j) and each at least one higher-order Trotter approximation of the full-time time evolution operator, $U_{A,2k}^{\nu}$, by calculating circuit depths $d_{A,Seed}^{\nu}$ and $d_{A,2k}^{\nu}$ required to implement each $U_{A,Seed}^{\nu}$ and each $U_{A,2k}^{\nu}$ respectively; and

step m) may identify a $U_{A,Seed}^{\nu}$ or $U_{A,2k}^{\nu}$ with the lowest circuit depth, $d_{A,Seed}^{\nu}$ or $d_{A,2k}^{\nu}$.

Optionally, in step k), $d_{A,Seed}^{\nu}$ may not be (re)calculated and instead a corresponding circuit depth from, for example, step 1ei) may be reused.

Optionally, if the method includes a step 1$\varrho$), then the method may further comprise a step 1$\tau$) before step 1$\varrho$), approximating the full-time time evolution operator using a Trotter method, $U_{Tr}$, and calculating an associated circuit depth, $d_{Tr}$, and wherein the step 1$\varrho$) instead comprises identifying whether $U_{A,\alpha}$, $U_{A,\beta}$, or $U_{Tr}$ has the lowest associated circuit depth and performing steps 2a) to 2d) using the $U_A$ identified in step 1$\varrho$).

Optionally, the method may comprise: performing step 1$\alpha$) or step 1$\beta$) to identify an approximation of the full-time time evolution operator $U_{A,\chi}$ with associated circuit depth $d_{A,\chi}$; performing step 1$\tau$), i.e., approximating the full-time time evolution operator using a Trotter method, $U_{T,r}$, and calculating an associated circuit depth, $d_{T,r}$; and performing step 1$\varrho$) identifying whether $U_{A,\chi}$ or $U_{Tr}$ has the lowest associated circuit depth, and performing steps 2a) to 2d) using the $U_{A,\chi}$ or $U_{Tr}$ identified in step 1$\varrho$) as $U_A$.

Optionally, the at least one subset of quantum gates implementable in parallel, $g_{\xi}$; is dependent on the connectivity and/or layout of the *n* qubits of the quantum information processor. Quantum gates may be performed in parallel if they act on different qubits. Optionally, the at least one subset of quantum gates implementable in parallel may be a native 2-qubit quantum gate of the quantum computer.

Some non-limiting examples of current quantum information processor architectures and their respective qubit connectivity and native 2-qubit gates are provided in Table 1 below.

Table 1

| Provider - QIP | Qubit Type | Connectivity/Layout | Exemplary Native 2-qubit Gates |
|---|---|---|---|
| Google - Sycamore | Transmon (Superconducting charge qubits) | Square Lattice | FSim |
| IBM | Superconducting qubits | Heavy Hexagon | CNOT or ECR |
| Quantinuum - H1 | Trapped Ion qubits | All to all | ZZ |

Generally, a given QIP has a given connectivity and a given set of native gates and one does not determine the other. The connectivity determines which sets of gates can be done in parallel. For example, taking a single square on a square connectivity, the vertical gates can be done in parallel, and then the horizontal gates can be done in parallel (or vice versa). Any combination of vertical and horizontal cannot be performed simultaneously as they require operating on at least a shared qubit. In general, the set of gates that can be done in parallel may be obtained by running a simple colouring algorithm over the graph that defines the connectivity. Currently, an additional algorithm is not necessary for most available QIPs, since they have very simple connectivity structures and the set of parallel gates may be found by inspection instead.

Optionally, the circuit depth(s) calculated: $d_{A,S\xi}$, $d_A^{\nu}$, $d_{A,Seed}$, $d_{A,2k}$, $d_A^{\Lambda}$, $d_{A,\alpha}$, and/or $d_{A,\beta}$, is(are) a 2-qubit circuit depth(s).

A working assumption is that (in quantum computers without full fault tolerance), the error of implementing a single 2-qubit gate can accumulate when the gates are done in series. This is why it is preferable to have a layer of gates that is as shallow as possible. In light of this, a method to simulate a system where the layer depth scales with the size of the system is undesirable. An innovation in the present document is that this adverse effect is reduced or eliminated, so any system size can be simulated with an improved (in some cases fixed) circuit depth.

A hybrid quantum-classical computation system comprising at least one quantum computer and at least one classical computer configured to provide control signals to the quantum computer may be configured to perform any of the methods for time-dynamics simulation, TDS, of a quantum system described herein.

Optionally, the at least one quantum computer may be a plurality of quantum computers. Optionally, a plurality of quantum computers may comprise at least two quantum processors. The at least two quantum processors may have the same or different hardware specifications, where parameters of the hardware specifications may comprise number of qubits, types of qubits, qubit connectivities, etc. Access to the at least two quantum processors may be local to, or remote from, the at least one classical computers. A plurality of quantum computers may be geographically dispersed and accessed remotely via wired or wireless connection with their classical controllers (e.g. via internet connection).

Optionally, the at least one quantum computer herein may be a noisy intermediate scale quantum computer (NISQ).

Optionally, at least one of the at least one classical computer(s) is/are configured to perform step 1 according to any of the methods for time-dynamics simulation, TDS, of a quantum system described herein and at least one of the at least one quantum computer(s), or at least one quantum computer in the plurality of quantum computers, is configured to perform step 2 of the method(s) for time-dynamics simulation, TDS, of a quantum system. Optionally, the hybrid quantum-classical computation system may be configured to perform a plurality of the methods for time-dynamics simulation, TDS, of a quantum system described herein, consecutively or concurrently.

Optionally, the at least one, or another, classical computer of the hybrid quantum-classical computation system is configured to perform steps 2a), 2b), and 2d) of the method(s) for time-dynamics simulation, TDS, of a quantum system with the at least one quantum computer. This may be understood to mean that the at least one, or another, classical computer of the hybrid quantum-classical computation system is used to configure and control the at least one quantum computer during steps 2a) to 2d).

A non-transient computer readable medium comprising instructions may cause a computer, or hybrid quantum-classical computation system, to enact the method steps of any one of claims 1 to 21.

Herein, and throughout, the term 'implementable with' referring to implementation of an operator using a quantum gate, set of quantum gates, or subset of quantum gates, preferably connotes 'implementable with an error independent of circuit depth'.

Herein, and throughout, the term 'not implementable with' referring to implementation of an operator using a quantum gate, set of quantum gates, or subset of quantum gates, preferably connotes 'not implementable with an error independent of circuit depth'.

Herein, and throughout, 'easily implementable' preferably connotes 'implementable with a quantum gate, a set of quantum gates, or a subset of quantum gates, with an error independent of circuit depth', or 'implementable with a quantum gate, a set of quantum gates, or a subset of quantum gates, with an error that scales as $(t\alpha)^2$ or better' (where better preferably means powers of $\alpha$ larger than 2) and preferably wherein $\alpha$ is small (<1).

Herein, and throughout, 'quantum-computationally demanding' preferably connotes those aspects of a Hamiltonian that cannot be performed by quantum gates in parallel with an error independent of quantum circuit depth.

Herein, and throughout, the terms 'quantum information processor (QIP)','quantum computer (QC)', 'Noisy intermediate scale quantum (NISQ) processor', and 'hybrid quantum-classical computation system' may be used interchangeably to mean a computation system having at least one quantum information processor therein.

Herein, and throughout, the terms 'quantum circuit' and 'circuit' may be used interchangeably. Similarly, throughout, the terms 'quantum circuit depth(s)' and 'circuit depth(s)' may be used interchangeably.

Herein, and throughout, the term 'universal', used when referring to a set of quantum gates, preferably connotes a set of quantum gates that, by repeated application, can approximate any other multi-qubit gate. The specific universal set may vary depending on the specific quantum information processor (QIP).

Herein, and throughout, the term 'hybrid classical-quantum information processor system' preferably connotes a computation system comprising at least one hybrid quantum-classical computation system and at least one classical computer in wired or wireless communication with each other.

## BRIEF DESCRIPTION OF THE FIGURES

Some practical implementations will now be described, by way of example only, with reference to the accompanying drawings in which:

Figure 1 is a flow chart showing a high-level overview of the steps 1a) to 1e) and 2a) to 2d) in a method for time-dynamics simulation, TDS, of a quantum system on a quantum information processor;

Figure 2 is a flow chart showing an overview of the steps 1a) to 1h) in another embodiment of a method for time-dynamics simulation, TDS, of a quantum system on a quantum information processor, the embodiment being capable of considering multiple subsets of quantum gates implementable in parallel on a QIP;

Figures 3A and 3B are flow diagrams showing a detailed and high-level view of another embodiment of a method for time-dynamics simulation, TDS, of a quantum system on a quantum information processor having: a step 1) comprising the processes 1$\alpha$), 1$\beta$), 1$\tau$), and 1$\rho$) and a step 2) comprising processes 2a) to 2d);

Figure 4 shows a flow diagram detailing the processes that make up step 1a) in the embodiments of the method(s) shown in Figures 1 to 3B, and Figures 5, 8, and 9, including equations;

Figure 5 shows a flow chart detailing the processes that make up step 1b) in the embodiments of the method(s) shown in Figures 1 to 4, and Figures 6A and 6B, including equations;

Figures 6A and 6B are flow diagrams illustrating embodiments of step 1c) and detail the processes that make up each embodiment of step 1c) including steps ci) and cii):

Figure 6A is an embodiment of step 1c) as shown in: Figures 1 and 2, process 1$\alpha$) of Figures 3A and 3B, and Figures 5 and 7A;
Figure 6B is an embodiment of step 1c) as shown in Figures 1 and 2, process 1$\beta$) of Figures 3A and 3B, and Figures 5 and 7B;

Figures 7A and 7B are flow diagrams illustrating embodiments of step 1d) and detail the processes that make up each embodiment of step 1d):

Figure 7A is an embodiment of step 1d) as shown in Figures 1 and 2, process 1$\alpha$) of Figures 3A and 3B, and Figures 6A and 8A;
Figure 7B is an embodiment of step 1d) as shown in Figures 1 and 2, process 1$\beta$) of Figures 3A and 3B, and Figures 6B and 8B;

Figures 8A and 8B are flow diagrams illustrating embodiments of step 1e) and detail the processes that make up each embodiment of step 1e):

Figure 8A is an embodiment of step 1e) as shown in Figures 1 and 2, process 1$\alpha$) of Figures 3A and 3B, and Figures 7A and 9A;
Figure 8B is an embodiment of step 1e) as shown in Figures 1 and 2, process 1$\beta$) of Figures 3A and 3B, and Figures 7B and 9B;

Figures 9A and 9B are flow diagrams illustrating embodiments of step 1g) and detail the processes that make up each embodiment of step 1g):

Figure 9A is an embodiment of step 1g) as shown in Figures 1 and 2, process 1$\alpha$) of Figures 3A, 3B, 8A, and Figure 10;
Figure 9B is an embodiment of step 1g) as shown in Figures 1 and 2, process 1$\beta$) of Figures 3A, 3B, 8B, and Figure 10;

Figure 10 shows a flow chart detailing the processes that make up step 1h) in the embodiments of the method(s) shown in Figures 2, 3A, 3B, 9A, and 9B;

Figure 11 is a diagram of the Hubbard model spin states for a 1D chain of atoms, this coincides with the layout of a simple quantum information processor;

Figure 12 shows the decomposition of hopping and interaction quantum gates of the Hubbard model in quantum circuit notation, where the decomposition uses a subset of quantum gates comprising the 2-qubit CNOT gate and any 1-qubit gate;

Figure 13 shows the decomposition of hopping and interaction quantum gates of the Hubbard model in quantum circuit notation, where the decomposition uses a subset of quantum gates comprising the 2-qubit fSim($\theta$, $\phi$) gate and any 1-qubit gate;

Figures 14 illustrate three possible further decompositions of $\tilde{H}_1$ according to the THRIFT algorithm which is derived in Appendix 1;

Figure 15 shows a further decomposition of $\tilde{H}_1$ according to the Magnus-THRIFT algorithm which is derived in Appendix 2 - this decomposition employs a first order Magnus expansion;

Figure 16 illustrates a standard Trotter decomposition into three parallel layers;

Figures 17A and 17B relate to a specific example of time-dynamics simulations (TDS) for the transverse field Ising model (TFIM) for a 16$\times$1 Ising chain:

Figure 17A shows a landscape of the 'best' (in terms of 2-qubit depth) TDS algorithm out of several orders THRIFT algorithms, and several orders of standard Trotter algorithms - as measured by the worst-case error $\|U_A - U_{exact}\|$, as a function of field strength J and total evolution time T at identical circuit depth;
Figure 17B shows the 2-qubit depth required to achieve a worst-case error $\|U_A - U_{exact}\| \leq 0.01$ using 1$^{st}$ order, 2$^{nd}$ order, and 4$^{th}$ order THRIFT algorithms, 1$^{st}$ and 2$^{nd}$ order Magnus-THRIFT algorithms, and 1$^{st}$ order, 2$^{nd}$ order, 4$^{th}$ order, and 8$^{th}$ order standard Trotter algorithms;
Figures 18A and 18B relate to a specific example of time-dynamics simulations (TDS) for the transverse field Ising model (TFIM) for a 3$\times$3 lattice:

Figure 18A shows a landscape of the best TDS algorithm out of several orders THRIFT algorithms, and several orders of standard Trotter algorithm - as measured by the worst-case error $\|U_A - U_{exact}\|$, as a function of field strength J and total evolution time $T$ at identical circuit depth;
Figure 18B shows the 2-qubit depth required to achieve a worst-case error $\|U_A - U_{exact}\| \leq 0.01$ using 1$^{st}$ order, 2$^{nd}$ order, 4$^{th}$ order, and 8$^{th}$ order THRIFT algorithms, and 1$^{st}$ order, 2$^{nd}$ order, 4$^{th}$ order, and 8$^{th}$ order standard Trotter algorithms;

Figures 19A and 19B relate to the specific example of time-dynamics simulations (TDS) for the Heisenberg model for 1×8 atomic sites:

Figure 19A shows a landscape of the best TDS algorithm out of several orders THRIFT algorithms, and several orders of standard Trotter algorithm - as measured by the worst-case error $\|U_A - U_{exact}\|$, as a function of field strength J and total evolution time *T* at identical circuit depth;
Figure 19B shows the 2-qubit depth required to achieve a worst-case error $\|U_A - U_{exact}\| \leq 0.01$ using 1$^{st}$ order, 2$^{nd}$ order, 4$^{th}$ order, and 8$^{th}$ order THRIFT algorithms, and 1$^{st}$ order, 2$^{nd}$ order, 4$^{th}$ order, and 8$^{th}$ order standard Trotter algorithms;

Figures 20A and 20B relate to the specific example of time-dynamics simulations (TDS) for the Fermi-Hubbard model for 5 atomic sites:

Figure 20A shows a landscape of the best TDS algorithm out of several orders THRIFT algorithms, and several orders of standard Trotter algorithm - as measured by the worst-case error $\|U_A - U_{exact}\|$, as a function of hopping parameter *t* and total evolution time T at identical circuit depth;
Figure 20B shows the 2-qubit depth required to achieve a worst-case error $\|U_A - U_{exact}\| \leq 0.01$ using 1$^{st}$ order, 2$^{nd}$ order, 4$^{th}$ order, and 8$^{th}$ order THRIFT algorithms, and 1$^{st}$ order, 2$^{nd}$ order, 4$^{th}$ order, and 8$^{th}$ order standard Trotter algorithms;

Figure 21 is a schematic of a quantum information processor, controlled by a classical computer, which may be used to implement Step 2) of the method shown in Figures 1, 2, 9A, 9B, and 10;

Figure 22 is a schematic of a hybrid quantum-classical computation system which can be used to implement the methods of Figures 1 to 10;

## DETAILED DESCRIPTION

In this work, we approach the problem of time dynamics simulation of quantum systems using quantum algorithms running on quantum computers. Specific embodiments of the methods disclosed herein for implementing the time-evolution of quantum system using product formulas for simulation of quantum systems are provided by way of example only.

An overview of the methods disclosed herein is provided, with reference to the flow diagrams of Figures 1 to 10 and Appendices 1 to 3 which contain the theoretical results proving favourable scaling of the algorithms. Concurrently, a worked example is expounded wherein methods for identifying an approximation of the full-time time ordered operator are described in the context of preparation of the Hubbard model for simulation on a hypothetical QIP with known capabilities. Finally, we present results from numerical experiments for the Ising model, Heisenberg model, and Fermi-Hubbard model in practically relevant regimes - i.e., where the interaction field terms (here this is the small 'hard' part of the Hamiltonian, $H_1$) are of relevant size for time-dynamics simulation of physical quantum systems and not so small as to make the methods applied mere curiosities - which show that our algorithms outperform standard methods for time dynamics simulation of quantum systems. These results are shown in Tables 1 to 5 and Figures 17A to 21B.

## Overview of the method

Figure 1 provides an overview of the steps, or processes, of a method for time dynamics simulation (TDS) of a quantum system on a quantum information processor, i.e. method 1. The method has two main processes: 1) identification of an approximation of the full-time time ordered evolution operator, shown as process 10; and 2) performance of a TDS of the quantum system, shown as process 20. Each process is made up of a number of steps. For clarity specific embodiments of processes 10 and 20 will be discussed in turn.

### Step 1 (Process 10) - identifying an approximation(s) of $U_A$: A simple worked example

Process 10 in Figure 1 provides an overview of the processes that are performed to identify an approximation of the full-time time ordered evolution operator - $U_A$ - in an embodiment of step 1). Process 10 takes in information about the available quantum information processor and the quantum system to be simulated and executes process 100 to split up the Hamiltonian *H*, process 110 to split up the full-time time ordered evolution operator of the 'hard' part of the Hamiltonian i.e. $U_{\tilde{H}1}$, process 120 to approximate each slice of $U_{\tilde{H}1}$, by further decomposing $\tilde{H}_1$ based on a subset of quantum gates, process 130 to split up each slice of $U_{\tilde{H}1}$, using a product of exponentials based on the further decomposition of $\tilde{H}_1$, and process 140 to combine the results of processes 100, 110, 120, and 130 to identify an approximation of the full-time time ordered evolution operator of the Hamiltonian i.e., $U_A$.

Figure 2 provides an overview of the steps that are performed by a method 1 to identify an approximation of the full-time time ordered evolution operator - $U_A$ - using another embodiment of step 1) (process 10) where there may be multiple subsets of quantum gates that are executable in parallel that exist for the QIP to be used in step 2). In this embodiment of step 1), process 10 takes in information about the available QIP and the quantum system to be simulated and then executes processes 150, 160, and 170. Process 150 takes one of the subsets of quantum gates that are executable in parallel and the Hamiltonian H as an input 151 and executes processes 100 to 130 as described above for that subset of quantum gates. Stopping condition 152 checks if processes 100 to 130 have been performed for each of the subsets of quantum gates and in 153 iterates to another subset of gates if there are subsets for which these processes have not been performed. Otherwise, if processes 100 to 130 have been performed for all the subsets - i.e. a $U_{A,g_\xi}$ has been found for each subset of gates $g_\xi$ - then process 150 outputs the approximations $U_{A,g_\xi}$ to process 160, i.e. step 1g). Process 160 evaluates the efficiency of each of the approximations $U_{A,g_\xi}$ by calculating a 2-qubit circuit depth that is required to implement the approximation on the QIP in step 2). Then process 170 identifies the approximation $U_{A,g_\xi}$ with the lowest circuit depth as the approximation $U_A$ to be implemented in step 2). Clearly, the embodiment of the method shown in Figure 2 simplifies to the embodiment of the method shown in Figure 1 when only one subset of quantum gates $g_\xi$ implementable in parallel exists. This may be because only one subset is possible for a given QIP or because only one subset is provided as an input to Step 1). The general form and purpose of processes 150, 160, and 170 as described here is to allow for generation, and comparison (based on efficiency, or otherwise), of multiple approximations, each relating to a subset of quantum gates that is implementable in parallel with the aim being to choose an 'optimum' approximation of the full-time time ordered evolution operator to implement to simulate a specific quantum system on a known QIP.

Figures 3A and 3B show a method 3 comprising an embodiment of step 1 comprising: step 1$\alpha$) i.e. process 10A; step 1$\beta$) i.e. process 10B; step 1. Processes 10A and 10B have the same step 1a) (process 100), 1b) (process 110), and 1h) (process 170) but comprise different embodiments of steps 1c) to 1g) (processes 120 to 160). Therefore, the processes corresponding to step 1c) (process 120) to 1g) (process 160) are labelled 120A to 160A in process 10A and detailed in Figures 6A, 7A, 8A, and 9A. Similarly, the processes corresponding to step 1c) (process 120) to 1g) (process 160) are labelled 120B to 160B in process 10B and detailed in Figures 6B, 7B, 8B, and 9B.

In general, process 100 corresponds to step 1a) which splits up the Hamiltonian of the quantum system based on a subset of quantum gates, $g_\xi$, that can be performed in parallel on a given QIP to obtain an $H_0$ that is easily implementable and an $H_1$ that is not easily implementable. The methods disclosed herein aim to provide adaptable, scalable methods of approximating the full-time time ordered evolution operator of the part of the Hamiltonian that is not easily implementable, which methods being tailored to the available QIP to be used in step 2). The time evolution of the 'hard' part of the Hamiltonian can be defined using the interaction picture as in equation (28) of Appendix 1.

Generally, process 110 - shown in Figure 5 - corresponds to step 1b) which splits the full-time time ordered evolution operator of the 'hard' part of the Hamiltonian in the interaction picture, $U_{\tilde{H}1}$ into $N$ time steps of size $\frac{T}{N}$ so that each step can be approximated in step 1c) rather than needing to approximate $U_{\tilde{H}1}$ over the full time duration of the simulation T. This method is also used with standard Trotter algorithms and step 1b) corresponds to equations 26 and 27 in the derivation of the THRIFT algorithm in Appendix 1.

Process 120 generally corresponds to step 1c) which approximates the time ordered evolution operator of each time slice in step 1b) by further decomposing the time evolution of the hard part of the Hamiltonian in the interaction picture, i.e. further decomposing $\tilde{H}_1$. Two specific embodiments of step 1c) are described in detail and these correspond to the two algorithms derived in detail in Appendices 1 and 2. In both cases, the further decomposition of $\tilde{H}_1$ is based on the subset(s) of quantum gates, $g_\xi$, that can be performed in parallel.

In a first embodiment of step 1c), labelled process 120A, the further decomposition of $\tilde{H}_1$ corresponds to employing the THRIFT algorithm defined in equation (45) of Appendix 1 by further decomposing $\tilde{H}_1$ by partitioning the hard part of the Hamiltonian, $H_1$, into summands based on the quantum gates $g_\xi$. Generation of the time dependence of $H_1$ in the interaction picture (i.e. $\tilde{H}_1$) using the partition of $H_1$ leads to a corresponding decomposition of $\tilde{H}_1$ which is used to approximate the time ordered evolution operator of each time slice from step 1b). This process is described in more detail in the specific example below and shown in Figure 6A.

In a second embodiment of step 1c), labelled process 120B, the further decomposition of $\tilde{H}_1$ corresponds to employing the Magnus-THRIFT algorithm defined in equations (52) and (53) of Appendix 2 by further decomposing $\tilde{H}_1$ as a p-order Magnus expansion $\sum_{j=1}^{p} \Omega_j(t)$, i.e. as a sum of Magnus terms $\Omega_j(t)$. A specific example of the terms in a fourth order Magnus expansion is provided in Appendix 2, equations (54) to (57). The Magnus-THRIFT decomposition of $\tilde{H}_1$ is used to approximate the time ordered evolution operator of each time slice from step 1b). This process is described in more detail in the specific example below and shown in Figure 6B.

Process 130 generally corresponds to step 1d) which splits up the time ordered evolution operator of each slice from step 1b) using a product of exponentials based on the further decomposition of $\tilde{H}_1$ found in step 1c). Two specific embodiments of step 1d) corresponding to the specific decompositions of $\tilde{H}_1$ are described below.

In a first embodiment of 1d), labelled 130A and detailed in Figure 7A, the product of exponentials corresponds to the decomposition from 120A as shown in equation (45) of Appendix 1.

In a second embodiment of 1d), labelled 130B and detailed in Figure 7B, the product of exponentials corresponds to the decomposition from 120B as shown in equations (52) and (53) of Appendix 2.

As mentioned above, process 140 generally combines the results of processes 100, 110, 120, and 130, that is to say corresponds to step 1e) combines the results of steps 1a) to 1d), to produce an approximation of the full-time time ordered evolution operator. Since two embodiments of processes 120 and 130 have been detailed herein (labelled A and B respectively) two embodiments of process 140 are also described, 140A and 140B respectively.

The general form and purpose of processes 150, 160, and 170 has been described above in relation to Figure 2. A and B embodiments relating to processes 150 and 160 are shown in Figures 3A and 9A respectively. Figure 10 illustrates the general decision step - 1h) process 170 - which is used to identify an 'optimum' approximation of the full-time time ordered evolution operator related to an embodiment A or B of the preceding processes.

Generally, the processes labelled A feed into each other to produce approximations with subscripts $\alpha$ and related to decompositions denoted v according to the THRIFT algorithm. Likewise, the processes labelled B feed into each other to produce approximations with subscripts $\beta$ and related to decompositions denoted $\Lambda$ according to the Magnus-THRIFT algorithm. Where this is not specified, a process may be according to either embodiment, but once an embodiment is introduced the embodiment is retained for further processes until an approximation $\alpha$ or $\beta$ is defined. Figures 3A and 3B illustrate how steps 1$\alpha$), 1$\beta$), and 1$\tau$) may be performed in parallel or in series. In Figure 3B, when these steps are performed in series this may be understood to mean that process 10A is performed according to the processes in Figure 3A but outputs its original inputs (i.e. subsets of quantum gates and the Hamiltonian to be simulated) in addition to an approximation $U_{A,\alpha}$ having circuit depth $d_{A,\alpha}$ to process 10B. Process 10 B can then be performed as shown in Figure 3A using the same inputs as process 10A and outputs its original inputs (i.e. subsets of quantum gates and the Hamiltonian to be simulated *and* $U_{A,\alpha}$ and $d_{A,\alpha}$) in addition to its approximation $U_{A,\beta}$. Likewise, step 1$\tau$) - process 11 - uses the same Hamiltonian input to processes 10A and 10B and passes the approximations $U_{A,\alpha}$, $U_{A,\beta}$ (and their associated circuit depths) to be output with its approximation $U_{Tr}$ (an approximation generated using a standard Trotter algorithm as detailed below) to the comparative step, 1$\rho$) which identifies a final 'optimal' approximation from $U_{A,\alpha}$, $U_{A,\beta}$, and $U_{Tr}$.

The embodiments 10A and 10B of process 10 and process 11 in Figures 3A and 3B will now be detailed for a specific Hamiltonian and example QIP parameters.

*The quantum information processor:*

Considering a hypothetical quantum information processor (or NISQ) sharing a qubit layout with the Hubbard Hamiltonian, i.e. having a nearest neighbour connectivity, then the only native gates are two qubit gates that can be implemented between nearest neighbour qubits. Here we compare two native sets of quantum gates that may be implemented on a QIP with nearest neighbour connectivity:

$g_{\xi=1}$ = Gate Set I: {CNOT, any single qubit rotation}

$g_{\xi=2}$ = Gate Set II: {fSim($\theta$, $\phi$), any single qubit rotation}

where some examples of single qubit rotations are the Hadamard gate $\mathcal{H}$, $w = e^{-i\frac{\pi}{4}X}$, $u_1 =$ $u_2 = e^{-itX}$, and $v_1 = e^{-itZ}$. These subsets of quantum gates have been chosen as a specific example of inputs to the methods shown in Figures 1 to 3B because they include the 2-qubit gates CNOT and fSim($\theta$, $\phi$) which are native to currently available quantum information processors, for example those provided by IBM have CNOT as a native gate and Google's Sycamore has fsim($\theta$, $\phi$)as a native gate.

Later, we assume a cost model that only accounts for two qubit gates, so single qubit gates do not change the cost of a quantum circuit to be implemented on the QIP.

*The quantum system, electrons in a solid*

In this exemplary embodiment of the method, the quantum system to be simulated is the behaviour of electrons in a solid which gives rise to an understanding of the transition between conducting and insulating systems. For simplicity, a 1D Hubbard model - i.e. a one-dimensional chain of atoms of length L- will be considered as an example quantum system to demonstrate steps 1a) to 1h) in Figures 1 to 3B. This model can be extended to include additional dimensions and/or interactions and is frequently used as a starting point to describe a variety of condensed matter systems - e.g. magnetism, and strongly correlated electron physics - that are relevant when modelling materials for application to various industrial and technological fields, e.g. material design for improvements in magnetism-based data storage, high-temperature superconductors, general semi-conductor physics, etc.

To aid understanding Figures 11 to 16 demonstrate aspects of this worked example of the identification of an approximation of the full-time time ordered evolution operator ($U_A$) are provided in addition to the general flow diagrams in Figures 3A and 3B. Figure 11 shows the different interactions appearing in the Fermi-Hubbard model, where the black circles correspond to atomic sites where electrons may be located. An electron on a site, *i,* has two possible spin states, $\sigma_i = \uparrow$ (labelled 2001) and $\sigma_i = \downarrow$ (labelled 2002). Likewise, an electron at a site $i + 1$ can be in either of the two spin states, $\sigma_{i+1} = \uparrow$ (labelled 2003) and $\sigma_{i+1} = \downarrow$ (labelled 2004). In this way, the possible spin states of an electron in each of the sites of a 1D chain of atoms are represented by the top and bottom rows of circles respectively. In the Fermi-Hubbard model the electrons experience only same-site interactions and nearest-neighbour site-hopping interactions. The Hamiltonian of the model is given by the sum over nearest-neighbour hopping terms and the same-site interaction terms at every site. The dashed vertical lines correspond to same-site interactions, where the same-site interactions on sites *i* and $i + 1$ are labelled 2005 and 2006 respectively. The solid horizontal lines correspond to nearest neighbour interactions with the interaction between the spin state of *i* and the spin state of $i + 1$ labelled 2007. In terms of creation and annihilation operators, $c^{\dagger}_{i,\sigma}$ and $c_{i+1,\sigma}$, and the spin-density operators, $n_{i\uparrow}$ and $n_{i\downarrow}$ the Hamiltonian for the Fermi-Hubbard model is

$$H_{FH} = -J \sum_{i,\sigma} c^{\dagger}_{i,\sigma}\, c_{i+1,\sigma} \;+\; c^{\dagger}_{i+1,\sigma} c_{i,\sigma} \;+\; U \sum_{i} n_{i\uparrow}\, n_{i\downarrow} \qquad (1)$$

where the first term corresponds to the nearest neighbour hopping terms and the second term corresponds to the same-site interactions.

Using a Jordan-Wigner (JW) encoding with the JW string along the 1D direction to transform from creation, annihilation, and spin-density operators into spin-1/2 Pauli operators, $H_{FH}$ becomes (up to irrelevant constants):

$$H_{FH} = -\frac{J}{2} \sum_{\langle i,j\rangle,\sigma} \left(X_{i,\sigma}X_{i+1,\sigma} + Y_{i,\sigma}Y_{i+1,\sigma}\right) + \frac{U}{4}\sum_{i} Z_{i\uparrow}Z_{i\downarrow} \qquad (2)$$

where the first term is the sum of the nearest neighbour hopping terms and the second term is the sum of the same-site interactions. Again, the solid horizontal lines 2007 in Figure 10 correspond to the nearest neighbour interactions $X_{i,\sigma}X_{i+1,\sigma} + Y_{i,\sigma}Y_{i+1,\sigma}$ and the dashed vertical lines 2005 correspond to the same-site interactions $Z_{i\uparrow}Z_{i\downarrow}$.

For simplicity, in this example we assume that the layout of the atoms of the Hubbard model shown in Figure 11 coincides with the layout of the quantum computer and therefore the black circles in Figure 11 correspond to both the spin states of the atomic sites of the Hubbard model and to the states of a chain of qubits for our hypothetical QIP with the native gate sets given above.

## Gate decompositions

There are two types of 2-qubit gates that will enter the considerations of THRIFT. Here we give their decompositions in terms of the gate sets discussed above, found analytically as an example only. Figures 12 and 13 show these 2-qubit gates, and their decompositions, in quantum circuit notation where the horizontal lines between gates indicate an individual qubit being acted on by said gates such that the left hand end of the line is the initial state of a qubit and the right hand end of the line is the final state of a qubit (following implementation of the quantum gates through which the line passes).

Figure 12 shows the gate decomposition of the hopping and interaction gates in terms of various single qubit gates and two CNOT gates 3001 in each decomposition (each CNOT quantum gate is surrounded by a dashed rectangle). Here, $\mathcal{H}$ represents a Hadamard gate, $\mathcal{W} = e^{-i\frac{\pi}{4}X}$ , $u_1 = u_2 = e^{-itX}$ and $v_1 = e^{-itZ}$; each of these gate act on one qubit.

Figure 13 shows the gate decomposition of the hopping and interaction gates in terms of single qubit and fSim($\theta$, $\phi$) gates. Again, $\mathcal{H}$ represents a Hadamard gate, and here X is the Pauli X gate.

Knowing that these decompositions of the hopping and interaction terms exists - for this simplified example - corresponds to the procedure of Step 2b) of Figure 1 which converts the approximation of the full-time time ordered evolution operator into a series of quantum gates to be executed on the QIP. The series of quantum gates corresponds to a quantum circuit that can be constructed using the gate decompositions shown in Figures 12 and 13.

Given a Hamiltonian *H,* we want to choose $H_0$ made from gates that can be implemented in parallel. We look at two choices based on the subsets $g_{\xi=1}$ = {CNOT, any single qubit rotation) and $g_{\xi=2}$ = {fSim($\theta$,$\phi$), any single qubit rotation) for the Fermi-Hubbard Hamiltonian as defined above. These choices correspond to the general process detailed in Figure 4 which is common to both the THRIFT and Magnus-THRIFT algorithm processes 10A and 10B respectively. For example, consider the subsets $g_{\xi=1}$ and $g_{\xi=2}$ and Fermi-Hubbard Hamiltonian as input 101 in Figure 4. Process 102 then corresponds to decomposing the Fermi-Hubbard Hamiltonian according to $g_{\xi=1}$ (for example). Stopping condition 103 checks to see if the Fermi-Hubbard Hamiltonian has been decomposed based on all the subsets ($g_{\xi=1}$ and $g_{\xi=2}$) and iterates to the next subset ( here $g_{\xi=2}$) if not. The output 106 in Figure 4 produces the following decompositions of the Fermi-Hubbard Hamiltonian.

**Choice 1**: $H_0 = \frac{U}{4}\sum_i Z_{i\uparrow}Z_{i\downarrow}$ which describes all the vertical bonds shown in Figure 11 and can be implemented using the gate 3005 in Figures 12 and 13, i.e. it can be implemented using both subsets: $g_{\xi=1}$ and $g_{\xi=2}$. For this $H_0$, $H_1 = -\frac{J}{2}\sum_{\langle i,j\rangle,\sigma}(X_{i,\sigma}X_{i+1,\sigma} + Y_{i,\sigma}Y_{i+1,\sigma})$.

**Choice 2**: $H_0 = -\frac{J}{2}\sum_{i\sigma}(X_{2i-1,\sigma}X_{2i,\sigma} + Y_{2i-1,\sigma}Y_{2i,\sigma})$ which describes every other horizontal bond in Figure 11 and can also be implemented using both subsets: $g_{\xi=1}$ and $g_{\xi=2}$. For this $H_0$, $H_1 = -\frac{J}{2}\sum_{i\sigma}\left(X_{2i,\sigma}X_{2i+1,\sigma} + Y_{2i,\sigma}Y_{2i+1,\sigma}\right) + \frac{U}{4}\sum_i Z_{i\uparrow}Z_{i\downarrow}$.

**Step 1$\alpha$) - THRIFT algorithm**

As briefly discussed in the overview above, the flow diagram in Figure 6A illustrates the general processes relating to the specific embodiment of step 1c) that corresponds to the THRIFT algorithm described here.

For a given choice of $H_0$ above, we need to split $H_1$ into layers that can be performed in parallel. This corresponds to the process detailed in Figure 6A which decomposes $\tilde{H}_1$ by splitting up $H_1$ in process 1202.

Some options for splitting up 1202 that consist of layers of two qubits gates are shown in Figures 14:

**Figure 14A** - **Choice 1, Decomposition** 1: $H_1 = -\frac{J}{2}\sum_{\langle i,j\rangle,\sigma}(X_{i,\sigma}X_{i+1,\sigma} + Y_{i,\sigma}Y_{i+1,\sigma})$ is split into

$$H_{1,1} = -\frac{J}{2}\sum_{i,\sigma}\left(X_{2i-1,\sigma}X_{2i,\sigma} + Y_{2i-1,\sigma}Y_{2i,\sigma}\right) \quad (3)$$

and

$$H_{1,2} = -\frac{J}{2}\sum_{i,\sigma}\left(X_{2i,\sigma}X_{2i+1,\sigma} + Y_{2i,\sigma}Y_{2i+1,\sigma}\right) \quad (4)$$

**Figure 14B** - **Choice 1, Decomposition 2**: $H_1 = -\frac{J}{2}\sum_{\langle i,j\rangle,\sigma}(X_{i,\sigma}X_{i+1,\sigma} + Y_{i,\sigma}Y_{i+1,\sigma})$ is split into

$$H_{1,1} = -\frac{J}{2}\left(\sum_{k,\sigma}\left(X_{4k+1,\sigma}X_{4k+2,\sigma} + Y_{4k+1,\sigma}Y_{4k+2,\sigma}\right) + \sum_{k}\left(X_{4k+2,\sigma}X_{4k+3,\sigma} + Y_{4k+2,\sigma}Y_{4k+3,\sigma}\right)\right) \quad (5)$$

and

$$H_{1,2} = -\frac{J}{2}\left(\sum_{k,\sigma}\left(X_{4k+3,\sigma}X_{4k+4,\sigma} + Y_{4k+3,\sigma}Y_{4k+4,\sigma}\right) + \sum_{k}\left(X_{4k+4,\sigma}X_{4k+5,\sigma} + Y_{4k+4,\sigma}Y_{4k+5,\sigma}\right)\right) \quad (6)$$

**Figure 14C** - **Choice** 2, Decomposition 1: $H_1 = -\frac{J}{2}\sum_{i\sigma}\left(X_{2i,\sigma}X_{2i+1,\sigma} + Y_{2i,\sigma}Y_{2i+1,\sigma}\right) + \frac{U}{4}\sum_i Z_{i\uparrow}Z_{i\downarrow}$ is split into

$$H_{1,1} = -\frac{J}{2}\sum_{i,\sigma}\left(X_{2i,\sigma}X_{2i+1,\sigma} + Y_{2i,\sigma}Y_{2i+1,\sigma}\right) \quad (7)$$

and

$$H_{1,2} = \frac{U}{4}\sum_{i} Z_{i\uparrow}Z_{i\downarrow} \quad (8)$$

Considering these splittings, the THRIFT algorithm requires the implementation of the gates $e^{-it(H1,1+H0)}e^{itH0}e^{-it(H1,2+H0)}$ (that is gates 1401, 1400, and 1402 in Figures 14). These gates are depicted in Figures 14A, 14B, and 14C for choice 1 decomposition 1, choice 1 decomposition 2, and choice 2 decomposition 1 respectively.

Choice 1 decomposition 1 requires the execution of 4-qubit gates 1401A and 1402A, and 2-qubit gates 1400A.

Choice 1 decomposition 2 requires the execution of 6-qubit gates 1401B and 1402B, and 2-qubit gates 1400B.

Choice 2 decomposition 1 requires the execution of N-qubit gates 1402C for a system of size *N*, 4-qubit gates 1401C, and 2 qubit-gates 1400C.

Finally, we can determine the cost of executing the approximations $U^{\nu}_{A,g_\xi}$ that were found in step 1e) (process 140A). The cost is determined by evaluating the 2-qubit circuit depth of the approximations during step 1g) (process 160A) as shown in Figure 9A, which approximations correspond to the decompositions identified above during step 1c) (process 120A).

**Choice 1 decomposition 1**:

The 4-qubit gates appearing in this decomposition - 1401A and 1402A in Figure 14A - can be decomposed into three consecutive repetitions of a 2-qubit gate layer using the product of gates 3007 and 3005 in Figures 12 or 13 having parameters *t*, that are found numerically, to approximate the 4-qubit gates needed to the required machine precision. That is to say that the two-qubit layer count of 1401A and 1402A is 3 times the 2-qubit depth of each product of gates 3007 and 3005. Finding a numerical decomposition of a gate is efficient if the number of qubits is small. The 2-qubit gate depth of this splitting is $d_{1.1} = 3 \times d_{2q\text{-}layer}(1401A) + 1 \times d_{2q\text{-}layer}(1400A) + 3 \times d_{2q\text{-}layer}(1402A) = 6 + 1 + 6 = 13$ where 6 is the two-qubit layer count for the 4-qubit gate that appears in the decomposition, since

$$d_{2q-layer}(1401A) = d_{2q-layer}(1402A) = d_{2q-layer}(3007 \times 3005) = 2,$$

where $d_{2q\text{-}layer}(3007 \times 3005) = d_{2q\text{-}layer}(3007) + d_{2q\text{-}layer}(3005) = 1 + 1$, and since 1400A is already a 2-qubit layer and requires only implementation of 3005, $d_{2\text{-}qubit}(1400A) = 1$.

Now, also taking into account the different gate sets, we have a 2-qubit depth of

$$D_{1.1}(\text{Gate Set I}) = 2d_{1.1} = 12 + 2 + 12 = 26 \quad (11)$$

since each two-qubit gate, 3007 and 3005, can be implemented using two CNOT gates as shown in Figure 12, i.e., the 2-qubit depth of each 2-qubit layer is 2. In a similar way,

$$D_{1.1}(\text{Gate Set II}) = 3 \times d_{2q-layer}(3007 \times 3005) + 1 \times d_{2q-layer}(3005) + 3 \times d_{2q-layer}(3007 \times 3005) = 9 + 2 + 9 = 20 \quad (12)$$

since each product of gates 3007 and 3005 is implemented by 3 fSim($\theta$, $\phi$) gates so the 2-qubit depth of $d_{2q\text{-}layer}$ (3007 × 3005) = $d_{2\text{-}qubit}$(3007) + $d_{2\text{-}qubit}$(3005) = 1 + 2 = 3, as shown in Figure 13 and three of these two-qubit layers of the product of gates 3007 and 3005 are needed to approximate the 4-qubit gate of the approximation up to numerical precision.

**Choice 1 decomposition 2:**

Following the same approach, we look for a decomposition of the 6-qubit gates $e^{-it(H1,1+H0)}$ and $e^{-it(H1,2+H0)}$ appearing in this splitting (in 1401B and 1402B of Figure 14B) in terms of a product of 2-qubit gates generated by the terms in the Hamiltonian. For definiteness, let's take a further splitting of $H_{1,1} + H_0 = H_{1,2} + H_0 = \sum_\gamma H_\gamma^{C1D1}$ with: $H_1^{C1D1} = 3$ vertical bonds, $H_2^{C1D1}$ = left-upper and left-lower horizontal bonds, $H_3^{C1D1}$ = right-upper and right-lower horizontal bonds. We can already see that to execute a single layer of this 6-qubit gate we need 3 layers of 2-qubit gates.

So a numerical search can be done just over one or two repetitions of these 2-qubit layers only, as anything further will give a depth larger than Splitting 1.1.

Let's say that we found a decomposition of the 6-qubit gate in terms of 2 repetitions of these 2-qubit layers with numerically optimized times. In this case the depth will be $D_{1.2}$ = 6 + 1 + 6 = 13, where 6 is the two-qubit layer count for the 6-qubit gate appearing in the decomposition which comes from two repeats of the three 2-qubit layers. Note that at this level the $D_{1.1}$ = $D_{1.2}$.

Let's see how the particular gate set affects this. Referring to Figure 12,we have

$$D_{1.2}(\text{Gate Set I}) = 12 + 2 + 12 = 26 \quad (13)$$

since, again, each 2-qubit layer (relating to $H_1^{C1D1}$, $H_2^{C1D1}$, and $H_3^{C1D1}$) is implemented by two *CNOT* gates. Similarly, referring to Figure 13, we have

$$D_{1.2}(\text{Gate Set II}) = 8 + 2 + 8 = 18 \quad (14)$$

since the 2 qubit layers relating to $H_1^{C1D1}$ (the vertical bonds), $H_2^{C1D1}$ (left-upper and left-lower horizontal bonds), and $H_3^{C1D1}$ (right-upper and right-lower horizontal bonds), are implemented by two fSim($\theta$, $\phi$) gates (3005), one fSim($\theta$, $\phi$) gate (3007), and one fSim($\theta$, $\phi$) gate (3007), respectively (i.e. the 2-qubit depth of the 6-qubit gate layer implemented as two repeats of three 2-qubit layers is 8 from 2 repeats with 2-qubit depth of $d_{2\text{-}qubit}$(3005) + $d_{2\text{-}qubit}$(3007) + $d_{2\text{-}qubit}$(3007) = 2 + 1 + 1 = 4).

The numerical search for these 2-qubit layers can be done through standard gradient descent of the cost function $\|U_{1401B} - U_{app}\|$, where $U_{app}$ is the proposed approximation, that depends on parameters that can be varied to minimise the cost function.

**Choice 2 decomposition 1:**

Here we need to implement an N-qubit gate, so this splitting is not competitive in a gate model based on 2-qubit gates as primitives.

The description above where the 2-qubit gate depth was evaluated for each approximation associated with each choice of $H_0$, further decomposition, and gate set, corresponds to the iterative loops of processes 162A to 167A as shown in Figure 9A.

**Step 1$\tau$) - A Standard Trotter decomposition**

Figures 3A and 3B include the step 1$\tau$) - process 11 - which finds an approximation using a standard Trotter decomposition. A standard Trotter decomposition of the 1D Hubbard Hamiltonian separates the pieces of the Hamiltonian into parallelizable gates. One such possible decompositions is shown in Figure 16 and is a standard Trotter splitting.

The 2-qubit gate depth of this decomposition calculated in process 11,is $d_{Tr}$ = 3 since it consists of three layers, each made up of 2-qubit gates realized in parallel. Figure 16 shows the three layers 1600, 1601, and 1602 each made up of 2-qubit gates. Considering the gate sets, the total depth of this becomes

$$D_{Tr}(\text{Gate set I}) = 6 \quad (15)$$

because each of the 2-qubit gates needed has to be implemented using 2 CNOT gates, whereas

$$D_{Tr}(\text{Gate set II}) = 4 \quad (16)$$

because the 2-qubit hopping gate, $e^{it(X_\sigma X_{i+1,\sigma} + Y_\sigma Y_{i+1,\sigma})}$ (3007 in Figure 13), can be implemented directly with an fSim($\theta$, $\phi$) gate, while the interaction gate, $e^{itZ_{i\uparrow} Z_{i\downarrow}}$ (3005 in Figure 13), requires 2 fSim($\theta$, $\phi$) gates. This means that in Figure 16 the total count is 2 (for the interaction gate 1600 implemented as 2 fSim($\theta$, $\phi$) gates) + 1 (for the hopping gate in $H_{1,1}$ 1601, implemented as a single fSim($\theta$, $\phi$) gate) + 1 (for the hopping gate in $H_{1,2}$ 1602, implemented as a single fSim($\theta$, $\phi$) gate). Explicit circuits for the interaction and hopping gates appear in Figures 12 and 13 respectively.

**Competitiveness of THRIFT vs Trotter**

The THRIFT algorithm generates a sequence of gates that has lower error than normal Trotter in the case when one of the terms in the Hamiltonian dominates. This means that even if the THRIFT decomposition is deeper than a Trotter decomposition, it still could perform better than a comparable number of Trotter layers if the scale of part of the Hamiltonian is larger than the rest such as to compensate for that extra overhead.

The error of the approximations that we propose has a better scaling in terms of the Hamiltonian parameters *J* and *U*. THRIFT has an error that is $\frac{J}{U}$ better than naive Trotter, meaning that while the error of Trotter is E, the error of THRIFT is $\frac{J}{U}E$.

Assuming that we can fit *M* layers of THRIFT and *N* layers of Trotter on a QIP having Gate Set I, the THRIFT error is $M\frac{J}{U}E$ while the Trotter error is *NE*. Factors that may affect the maximum number of layers, M, are, for example, noise levels such that after some number of layers the noise in the output is too high to make any meaningful prediction from the results of the simulation, or extra limiting factors, like the amount of real time that a QIP can be used in a session. From the analysis above we know that a single layer of THRIFT (equation 11) has the same depth as roughly 4 layers of Trotter (equation 15) so *M~4N,* and therefore the error of a THRIFT approximation is smaller than a naive Trotter approximation if $M\frac{J}{U}E = 4N\frac{J}{U}E < NE$, i.e. if $\frac{U}{J} > 4$. Considering Gate Set II, and equations (12) and (16) - which give *M~5N* - the same analysis leads to the error of a THRIFT approximation being smaller than a naive Trotter approximation if $\frac{U}{J} > 5$.

This means that for Choice 1 Decomposition 1, the THRIFT splitting $H_{1,1}$ is equation (3) and $H_{1,2}$ is equation (4) is competitive with naive Trotter for $\frac{U}{J} \gtrsim 4$ and $\frac{U}{J} \gtrsim 5$ for gate sets I and II respectively, where the extra circuit depth needed for a THRIFT decomposition leads to a smaller error compared with the same circuit depth using a naive Trotter decomposition. This type of assessment of competitiveness may be considered an alternative to identification of the approximation with the lowest circuit depth in step 1h), process 170, in Figure 10.

**Step 1$\beta$) - Maanus-THRIFT: Figure 6B, process 120B**

Given that THRIFT produced some decompositions that could be useful, we can start from the same decompositions of the Fermi-Hubbard Hamiltonian from step 1a) (process 100) and do a Magnus-THRIFT expansion in step 1c) (process 120B) in Figure 3A instead for comparison. The same scaling of the error ($O(\alpha^2 t^2)$) as THRIFT is obtained with the Magnus-THRIFT approximant $e^{\Omega^{[1]}(0,\delta t)}$ which leads to the following decomposition

$$e^{\Omega^{[1]}(0,\delta t)} = e^{i\alpha \int_0^{\delta t} H_1(s)ds} \quad (17)$$

$$= e^{i\alpha \int_0^{\delta t} H_1^e(s)ds} e^{i\alpha \int_0^{\delta t} H_1^o(s)ds} + O(\alpha^2 t^2) \quad (18)$$

where $H_1^{o,e}(t)$ are given by

$$H_1^e(t) = -\frac{J}{2}\sum_{i,\sigma}\left(X_{2i,\sigma}X_{2i+1,\sigma} + Y_{2i,\sigma}Y_{2i+1,\sigma}\right)\left(1 + \frac{1}{4}(\cos tU - 1)\left(Z_{2i+1,\bar{\sigma}} - Z_{2i,\bar{\sigma}}\right)^2\right)$$
$$+\frac{J}{4}\sin tU \sum_{i,\sigma}\left(Y_{2i,\sigma}X_{2i+1,\sigma} - X_{2i,\sigma}Y_{2i+1,\sigma}\right)\left(Z_{2i,\bar{\sigma}} - Z_{2i+1,\bar{\sigma}}\right) \quad (19)$$

$$H_1^o(t) = -\frac{J}{2}\sum_{i,\sigma}\left(X_{2i-1,\sigma}X_{2i,\sigma} + Y_{2i-1,\sigma}Y_{2i,\sigma}\right)\left(1 + \frac{1}{4}(\cos tU - 1)\left(Z_{2i,\bar{\sigma}} - Z_{2i-1,\bar{\sigma}}\right)^2\right)$$
$$+\frac{J}{4}\sin tU \sum_{i,\sigma}\left(Y_{2i-1,\sigma}X_{2i,\sigma} - X_{2i-1,\sigma}Y_{2i,\sigma}\right)\left(Z_{2i-1,\bar{\sigma}} - Z_{2i,\bar{\sigma}}\right) \quad (20)$$

Note that $H_1^{o,e}(t)$ is a sum of disconnected 4-qubit operators. This decomposition is depicted in Figure 15, with 1501 related to $H_1^e(t)$ and 1502 related to $H_1^o(t)$ and the splitting is based on the Magnus-THRIFT algorithm derived in Appendix 2. The squares with wiggly lines in Figure 15 denote the 4-qubit gates needed to implement the evolution operator in this decomposition. Note that these 4-qubit gates require different Pauli operators and functions of $t$ than the ones needed in the previous approaches, i.e. they do not relate to the 4-qubit layers in Figure 14A, nor the decompositions of Figures 12 and 13. Additionally, the $H_0$ contribution is implemented implicitly in parts 1501 and 1502 by layers of single qubit gates which do not contribute to the 2-qubit cost model considered here.

Let's call the two-qubit gate splitting of the required 4-qubit gates $d_M$ (for either 1501 or 1502). The total two-qubit depth of this Magnus-THRIFT decomposition is $D_M = 2d_M$.

This splitting has an error that scales the same as THRIFT because THRIFT error scales with $O(\alpha^2 t^2)$ - see Theorem 1 in Appendix 1, and Magnus-THRIFT error scales with $O(\alpha^{k+1} t^{k+1}) = O(\alpha^2 t^2)$ since, in this example, a first order Magnus expansion i.e., $k$ = 1, is used - see Theorem 2 in Appendix 2. Therefore, in order for Magnus-THRIFT to be competitive with THRIFT in this example, we need to find a decomposition of the 4-qubit gates in terms of the gate set that is at most

$$d_M(\text{Gate set I}) \leq 13 \quad (21)$$

$$d_M(\text{Gate set II}) \leq 10. \quad (22)$$

Appropriate decompositions of the 4-qubit gates can be found by numerical minimization as above, i.e. using gradient descent of the relevant cost function, e.g. $\|U_{1501} - U_{app}\|$ for the 4-qubit gate 1501.

**Representative results**

The representative results presented here for embodiments of the method disclosed herein, i.e. application of THRIFT and Magnus-THRIFT of multiple orders to the 1D transverse field Ising model with weak coupling, the Heisenberg model, and Fermi-Hubbard model are provided by way of example only and are not intended to limit the scope of the claims to any of: the exemplary Hamiltonian models chosen, the approximations - type of approximation or order thereof, or user-defined parameters such as a maximum simulation error, worst case error, etc.

*The 1D Transverse field Ising model with weak coupling (TFIM)*

The transverse field Ising model (TFIM) in 1 dimension is a very well-studied model in condensed-matter physics. While exactly solvable classically, it is nevertheless a useful benchmark for the performance of time-dynamics simulation algorithms for this reason. The Hamiltonian of the transverse field Ising model reads

$$H_{TFIM} = h\sum_{j} Z_j + J\sum_{\langle i,j\rangle} X_i X_j \quad (23)$$

where $h$ is the interaction strength, and $X_j$ and $Z_j$ are the spin-1/2 operators in x and z-direction respectively. For the purposes of studying the THRIFT-family of algorithms we fix the interaction strength to be $h = 1$ in this section and let the interaction strength $J = \varepsilon = \alpha$ be the small parameter. Since the transverse field part $H_0 = \sum_j Z_j$ only consists of one-qubit terms this has the advantage that the interaction picture Hamiltonian, $H_1(t)$, has the same locality as the original $H_1 = J\sum_{\langle i,j\rangle} X_i X_j$ and hence the THRIFT circuits have the same depth as the Trotter circuits.

*The Heisenberg Hamiltonian*

The Heisenberg Hamiltonian is a generalised version of the Ising model which can be used to model the Heisenberg exchange, or 'magnetic dipole-dipole', interaction between atoms having magnetic dipoles. For a 1D atomic chain, the Hamiltonian of the Heisenberg model considered here is

$$H_{Heisenberg} = -J\sum_{i=1}^{N-1} X_i X_{i+1} + Y_i Y_{i+1} + Z_i Z_{i+1} + \sum_{i=1}^{N} h_i Z_i \qquad (24)$$

where $J$ is the exchange interaction strength and $X_i$, $Y_i$, and $Z_i$ are the Pauli matrices at site *i.* The field is taken to be a random variable at each site, uniformly distributed between *h and -h.* Unlike the Ising model, here the exchange interaction term is not limited to point along one specific direction (x in equation 23). Likewise, the magnetic field term is no longer limited to a single direction transverse (z in equation 23) to the exchange interaction.

*The Fermi-Hubbard Model*

Another Hamiltonian that is commonly used for materials modelling is the Fermi-Hubbard Hamiltonian which describes the behaviour of fermions (most commonly electrons) on atomic sites. The 1D Fermi Hubbard model is described by the Hamiltonian

$$H_{FH} = -t\sum_{\langle ij\rangle,\sigma}^{L}\left(c_{i,\sigma}^{\dagger}c_{j,\sigma} + c_{j,\sigma}^{\dagger}c_{i,\sigma}\right) + \sum_{i}^{L} U n_{i,\uparrow} n_{i,\downarrow} + \sum_{i=1}^{L} V_{\text{ext}}(i)\hat{n}_i, \qquad (25)$$

where $U$ is the interaction strength between fermions on the same atomic site, $t$ is the hopping amplitude for fermions moving between neighbouring atomic sites, and $V_{ext}(i)$ is a function representing the chemical potential at the different atomic sites. In equation 25, the Fermi-Hubbard model is given in complex fermionic representation - that is in terms of fermion creation and annihilation operators, $c_{i,\sigma}$ and $c_{i,\sigma}^{\dagger}$, and spin density operators, $n_{i,\uparrow}$ and $n_{i,\downarrow}$. In equation 25, the first term describes the movement of fermions between neighbouring atomic sites, the second term arises from the interaction between fermions on the same atomic site having opposite spins, and the third term describes the interaction of the fermions with any external potentials that may be present due to, for example, an externally applied magnetic field. This model is frequently used to understand correlated electron systems where electron behaviours are important, for example semi-conducting, magnetic, and superconducting materials.

**Example 1**: *TDS for a 1×16 Ising Chain*

In this first example, THRIFT and Magnus-THRIFT algorithms for TDS of a 1×16 Ising chain are compared with standard Trotter algorithms, as shown in Figures 17A and 17B and Table 2.

The asymptotics derived in Theorems 1 and 2 of Appendices 1 and 2 respectively show that, for $\alpha$ small enough, Magnus-THRIFT will eventually outperform Trotter or ordinary THRIFT methods. Similarly, higher order methods will outperform lower order methods for small enough *T,* and also small enough $\alpha$ in the case of Magnus-THRIFT. Here it can be seen that the presently disclosed methods allow for improved error in performing a computation on a QIP, by leveraging the massive capacity of classical computation to re-write the problem and thereby improve the applicability of quantum computers in providing high quality, low-error computations, despite the noise and capacity limitations of QIPs. To find the exact values of the total time evolution *T* or $\alpha$ where higher order or more sophisticated THRIFT methods start to become advantageous over lower order or simpler methods we performed numerical experiments, making use of the integrability of the transverse field Ising model to push them to large system sizes.

In Figure 17A, we show which of the different Trotter, THRIFT, or Magnus-THRIFT algorithms performs best at a given *T* and $\alpha$ for a wide range of these two quantities. This may be considered analogous to the identification of an approximation with the lowest circuit depth in step 1h), process 172, Figure 10, except where the identification of the 'optimum' approximation is performed by finding the lowest worst-case error rather than lowest circuit depth, since in this analysis the circuit depth was fixed. This is illustrated as a landscape of the best TDS algorithm, as measured by the worst-case error $\|U_A - U_{exact}\|$, as a function of field strength J and total evolution time T at identical circuit depth for a 1 × 16 Ising chain. The circuit depth was fixed to 1 layer of Magnus-2 evolution and for the other algorithms the number of layers was chosen to match the 2-qubit depth as close as possible according to the 2-qubit depths shown in Table 2 below. The regions of the landscape are labelled with the name and order of the algorithm that achieved the lowest error at those values of J and total evolution time *T* while the grey-scale brightness indicates the magnitude of the worst-case error associated with that approximation at each value of J and total evolution time *T.*

As expected from the asymptotics (i.e. the theoretical error scalings derives in Appendices 1 and 2), second order Magnus-THRIFT eventually performs best if $\alpha$ is small enough, but due to the added complexity and circuit depth when evolving with the Magnus Hamiltonian this crossover only happens for $\alpha < 10^{-2}$ and evolution time $T > 1$. For larger values of $\alpha$, Opt THRIFT-8, THRIFT-4, and THRIFT-2 perform best for increasing values of *T* respectively, where time is measured in units of $\frac{1}{h}$ since in equation (23) the units are set so that $h = 1$. First order methods are never advantageous for the transverse field Ising model, because for Hamiltonians that can be split into only 2 parts for Trotterisation the second order methods have the same amortised depth per layer as first order methods.

To investigate the scaling of the different algorithms with the system size, *L*, we performed a binary search in the 2-qubit depth d to find the lowest d such that each algorithm was able to achieve a worst case error $\|U_A - U_{exact}\| \leq 0.01$ to simulate evolution for a time of $T = L$, i.e. long enough to spread entanglement throughout the whole system. The results of this are shown in Figure 17B and Table 2.

Table 2: Quantitative comparison of the different TDS algorithms investigated and shown in Figures 17A and 17B. We also did the same analysis for other values of the field strength *J* and found that the fit exponents *k* were independent of the field strength *J,* but the prefactors *a* depended on it and shrunk faster for THRIFT methods than for Trotter methods.

**TABLE 2**: 1×16 Ising Chain
Comparison of THRIFT, Magnus-THRIFT, and standard Trotter algorithms

| Algorithm | 2-qubit depth, *d* | Fit exponent, *k* | Fit factor, *a* |
|---|---|---|---|
| Trotter-1 | 2 | 1.99 | 10.47 |
| Trotter-2 | 2 | 2 | 1.45 |
| Trotter-4 | 10 | 1.51 | 4.62 |
| Opt Trotter-8 | 30 | 1.26 | 15.45 |
| THRIFT-1 | 2 | 2.01 | 1.53 |
| THRIFT-2 | 2 | 2.01 | 0.76 |
| THRIFT-4 | 10 | 1.5 | 2.25 |
| Opt THRIFT-8 | 30 | 0.73 | 18.82 |
| Magnus-THRIFT -1 | 2 | 2.01 | 1.95 |
| Magnus-THRIFT-2 | 12 | 1.53 | 5.09 |

The 2-qubit depth required to achieve $\|U_A - U_{exact}\| \leq 0.01$ is shown for first, second, and fourth order standard Trotter algorithms and first, second, and fourth order THRIFT algorithms for a field strength of $J = \frac{1}{16}$. and evolution time $T = L$ in Figure 17B. The required circuit depths follow a power law of the form $d = aL^k$ whose parameters *a* and *k* have been determined via a least-squares fit and reported in Table 2.

Table 2 shows the variation in required 2-qubit depth for approximations generated using the methods THRIFT and Magnus described herein. THRIFT indicates an approximation generated from a step 1$\alpha$) (process 10A) in Figure 3A, and detailed in the 'A' Figures 6 to 9. THRIFT-2 and THRIFT-4 correspond to THRIFT-2*k* and indicate use of a 2*k*-order product formula generated using the THRIFT approximation as a seed, as described in Appendix 1, equations (48) and (49). Magnus indicates an approximation generated from a step 1$\beta$) (process 10B) in Figure 3A and detailed in the 'B' Figures 6 to 9. Magnus-2 indicates the use of a p-order Suzuki formula generated using the Magnus approximation as a seed according to Appendix 2, equations (63) and (64).

It can be seen that for first and second order Trotter and THRIFT and first order Magnus-THRIFT the required depth scales with $L^2$, but only with $L^{3/2}$ for fourth order Trotter and THRIFT and second order Magnus-THRIFT. Note that for Opt THRIFT-8 the scaling is $L^{3/4}$. We also see from Figure 17B that at $\alpha = \frac{1}{8}$, Opt THRIFT-8 needs at least an order of magnitude less circuit depth than any of the standard Trotter methods to achieve the same precision.

## Further Examples

Analogous results to those provided above for the 1$\times$16 Ising chain are now provided for more complicated systems: a 2D Ising lattice; a 1D Heisenberg model; and a 1D Fermi-Hubbard model, as non-limiting examples of the industrial applicability of the methods disclosed herein.

Comparisons of THRIFT, Magnus-THRIFT, and standard Trotter algorithms for the TFIM on a 3x3 2D lattice (Figure 18A), the 1D Heisenberg model on 8 sites (Figure 19A), and the Fermi-Hubbard model on 5 sites (Figure 20A) are also presented. For these examples the error, $\|U - U_{\text{app}}\|$, between the true unitary evolution, *U,* and the approximation $U_{app}$ is computed numerically for different values of the smallness parameter, $\alpha$, and different total evolution times *T,* with the total number of 2-qubit layers, *D,* fixed to accommodate one repetition of the most costly algorithm. The other algorithms are repeated an integer number of times such that the total number of 2-qubit layers coincides with *D.* The different shades of gray indicate the regions where a given algorithm performs better than the others. The dashed contour lines represent lines of constant error. In the TFIM and the 1D Heisenberg model the smallness parameter, $\alpha$, corresponds to the ratio between strength of local fields and the interaction strength. In the Fermi-Hubbard model, $\alpha$ corresponds to the ratio between the hopping and interaction strengths.

Additionally, plots showing the 2-qubit gate depth needed to achieve an error of 0.01 with respect to the true evolution for different algorithms as a function of the system's size are also provided for the TFIM on a 3x3 2D lattice (Figure 18B), the 1D Heisenberg model on 8 sites (Figure 19B), and the Fermi-Hubbard model on 5 sites (Figure 20B). Here the total evolution time is proportional to the size of the system, denoted by *L*. The dashed lines represent a fit of the form $d = aL^k$ and the particular values of the parameters *d, k,* and *a* are presented for each algorithm and model in Tables 3 to 5 below. Additionally, the value of the scale *a* is shown in each plot.

**Example 2**: *TDS for a 3$\times$3 Ising Lattice*

**TABLE 3**: *3$\times$3* Ising Lattice

| Algorithm | 2-qubit depth, *d* | Fit exponent, *k* | Fit factor, *a* |
|---|---|---|---|
| Trotter-1 | 4 | 1.03 | 235.35 |
| Trotter-2 | 6 | 1.49 | 17.31 |
| Trotter-4 | 30 | 1.25 | 27.8 |
| Opt Trotter-8 | 90 | 1.13 | 65.47 |
| THRIFT-1 | 4 | 1.5 | 10.41 |
| THRIFT-2 | 6 | 1.5 | 7.82 |
| THRIFT-4 | 30 | 1.2 | 14.79 |
| Opt THRIFT-8 | 90 | 0.58 | 91.17 |
| Magnus-THRIFT-1 | 4 | 1.5 | 15.43 |
| Magnus-THRIFT-2 | 104 | 1.26 | 110.79 |

**Example 3**: *TDS for a 1×8 Heisenberg Chain*

**TABLE 4**: 1×8 Heisenberg Chain

| Algorithm | 2-qubit depth, *d* | Fit exponent, *k* | Fit factor, *a* |
|---|---|---|---|
| Trotter-1 | 2 | 1.69 | 1.72 |
| Trotter-2 | 2 | 1.57 | 0.9 |
| Trotter-4 | 10 | 1.09 | 5.92 |
| Opt Trotter-8 | 30 | 1.07 | 12.12 |
| THRIFT-1 | 2 | 1.69 | 1.06 |
| THRIFT-2 | 2 | 1.33 | 0.72 |
| THRIFT-4 | 10 | 1.19 | 3.2 |
| Opt THRIFT-8 | 30 | 0.91 | 11.3 |

**Example 4**: *TDS for a 1×5 Fermi-Hubbard Chain*

**TABLE 5**: 1×5 Fermi-Hubbard Chain

| Algorithm | 2-qubit depth, *d* | Fit exponent, *k* | Fit factor, *a* |
|---|---|---|---|
| Trotter-1 | 3 | 1.7 | 7.81 |
| Trotter-2 | 4 | 1.64 | 6.45 |
| Trotter-4 | 20 | 1.02 | 33.95 |
| Opt Trotter-8 | 60 | 1.04 | 80.9 |
| THRIFT-1 | 7 | 2.15 | 4.94 |
| THRIFT-2 | 8 | 1.86 | 3.71 |
| THRIFT-4 | 40 | 1.68 | 9.85 |
| Opt THRIFT-8 | 120 | 1.25 | 61.21 |

**Step 2 (Process 20) - Performing a time dynamics simulation of a quantum system: Example Computing Environments and Architectures**

Figure 21 is a simplified schematic of hybrid computing system 190, comprising a quantum information processor controlled by a classical computer, for implementing the methods described herein. It is noted that this is a simplified schematic intended to highlight the general operational principles. The quantum computer system 190 may comprise a controller for example a "classical" computer 192; an input 191; a quantum computer 193 comprising a set of data qubits; and an output 194. The controller 192 can be used to control the input for inputting parameters into the quantum computer, for example the input 191 may be an ancilla qubit which the classical computer controls to perform the local generalised measurements described above. The output 194, outputs information measured from the data qubits of the quantum computer and transmits the information to the controller 192 where it can be displayed to a user. The output and input may be the same, for example the ancilla qubit described above could be implemented as both the input and output in quantum computer system. Such a quantum computer system is one example of a quantum computer system that could be used to perform the methods described herein. The quantum computer 193 may comprise photonic qubits, ion trap qubits, or superconducting qubits. Other quantum computing qubits may also be used, the methods described herein are not restricted to any one particular quantum technology. The quantum computer 193 may comprise quantum processing unit(s) (not shown) that execute a quantum circuit(s) relating to the series of quantum gates in step 2b) (process 210), Figure 1.

In the methods described above, and illustrated in Figures 1 to 10, step 1 (processes 10A and/or 10B) may be executed on a classical computer which can be a classical computer also acting as controller 192. In a specific example of Step 2 (process 20) as shown in Figure 1, step 2a) (process 200) initialising a state of the quantum system on the quantum information processor can be carried out by controller 192. Controller 192 may comprise a plurality of classical computers configured to control apparatus which initialising a state of the quantum system. Step 2b) (process 210), converting the approximation of the full-time time ordered evolution operator into a series of quantum gates to be implemented, may also be carried out by controller 192. In some embodiments, controller 192 is also configured to control the operation of the series of quantum gates on the quantum computer 193 which takes place in Step 2c) (process 220). In Step 1d) (process 230) the controller 192 can initiate a measurement on the output 194 of the quantum computer 193 after the series of quantum gates have operated on the data qubits. The controller 192 receives the result of the measurement from the output 194. The controller 192 can then produce the result of the time dynamics simulation of the quantum system by reconstruction of the signal using the result of the measurement of the output 194.

Figure 22 shows an exemplary schematic of a hybrid quantum-classical computation system 2000 for implementing the methods described herein, although it is noted that this is a simplified schematic intended to highlight the general operational principles. In an embodiment of the methods described herein, for example the methods illustrated in Figures 3A and 3B comprising steps 1$\alpha$), 1$\beta$), 1$\tau$), 1$\rho$) and step 2, steps 1$\alpha$) to 1$\rho$) are executed on a classical computer (or network of classical computers) 2002 which is in communication (by appropriate wired or wireless means, e.g. via internet connection) with a plurality of quantum computers 2001. Before performing steps 1$\alpha$) to 1$\rho$) the classical computer (or network of classical computers) 2002 may query the controllers of the plurality of quantum computers to obtain information about the available hybrid quantum-classical computation systems 2010 and 2020, for example this information may include the number of qubits available, the native gate sets of the systems 2010 and 2020 etc. and this information can be used as the input to steps 1$\alpha$) to 1$\rho$). In the example embodiment shown in Figure 22, the plurality of quantum computers 2001 includes two hybrid quantum-classical computation systems 2010 and 2020 which each have the same high-level simplified structure as the hybrid quantum-classical computer system described above (shown in Figure 21) but they may have different numbers of qubits and/or types of qubits and/or be capable of performing different native quantum gate sets etc. and therefore be capable of performing step 2) of the method with different quantum circuits having different depths. Having performed steps 1$\alpha$) to 1$\rho$) to identify an approximation $U_A$ having the lowest 2-qubit circuit depth, the classical computer (or classical computer network) 2002 can choose the hybrid quantum-classical computation system 2010 or 2020 based on which hybrid system has the hardware requirements associated with the identified approximation. Additional, or alternative, user requirements may be imposed when choosing an approximation, e.g. the worst-case error of an approximation. It will be appreciated that identification of an approximation to be implemented on a quantum computer in step 2) may be chosen by balancing the accuracy and required quantum resources to implement the approximation. For example, an approximation having a lower worst-case error, but slightly higher 2-qubit depth requirement may be chosen in step 1hii) (process 172, Figure 10) instead of just naively choosing the approximation requiring the lowest 2-qubit circuit depth.

Other embodiments of the methods disclosed herein may include the use of a hybrid quantum-classical computation system, similar to the one discussed above, where the plurality of quantum computers are each themselves hybrid quantum-classical computation systems so the classical controllers of the respective hybrid systems may be connected to each other and an additional classical computer in a network. This would allow for a classical computer like 2002 to retrieve information about the available quantum information processors, for example in the form of lists of parameters, e.g. number of qubits, maximum number of 2-qubit layers available, maximum real-time runtime available for a session, etc, from the classical controllers of the QIPs. Step 1 of the methods disclosed herein, for example as shown in Figures 3A and 3B, may be executed by the classical computer 2002 to determine both the best algorithm to use, and to tailor this choice to the current availability of quantum resources. In such a way, the methods disclosed herein may be used to determine the ‘best’ TDS algorithm for a given simulation while taking into account access and availability of quantum resources. Similarly, it will be appreciated that such a method could be modified to execute multiple TDS algorithms in parallel using the quantum information processor most suited to each algorithm, for comparison purposes.

It will be appreciated that the exact number of hybrid quantum-classical computation systems, and classical computers in the plurality of quantum computers 2002 is not important to the function of the methods described herein. Likewise, the exact division of the ’classical’ (generally step 1) and ’quantum’ (generally step 2) computational steps of the methods described herein is not essential to realise the benefits of the methods disclosed herein and the ’classical’ tasks may be split between the at least one classical computer 2002 and the controller 2012 or 2022 of a chosen hybrid quantum-classical computation system.

Other hybrid systems are possible, for example, comprising a hybrid quantum-classical computation system, like 2010 or 2020 in Figure 22, in wired or wireless communication with a separate classical computer (or network of classical computers) like 2002 to produce a variation on the hybrid classical-quantum information processor network of Figure 22 which variation has only one hybrid quantum-classical computation system.

It will be appreciated by those skilled in the art that access to the controllers (classical computers) of the at least two quantum processors may be local to, or remote from, the at least one classical computers (or network of classical computers) and that a plurality of quantum computers (or hybrid quantum-classical computation systems) like 2001 in Figure 22 may be geographically dispersed and accessed remotely via wired or wireless connection to their classical controllers (e.g. via the internet).

APPENDIX 1: Theory - THRIFT

In a first example, Trotter Heuristic Resource Improved Formula for Time-dynamics (THRIFT) is an improved method for simulating the time evolution of a quantum system, using the structure of the Hamiltonian and a knowledge of the gates that are efficiently implementable in the quantum computer. The approximation of the full-time time ordered operator achieved through this algorithm is shown to have provably better scaling (in terms of gate complexity and circuit depth) than naive application of well-known Trotter formulas - particularly for systems where the evolution is determined by a Hamiltonian with different energy scales (one part is "large" and another part is "small"). This situation can occur, for example, for physical systems made up of strong short-range interactions and weaker long-range interactions.

The THRIFT decomposition - equation (45) - derived below can be used in the embodiments of step 1c) labelled process 120 in Figures 1, 2, and 5, and is detailed in process 120A in Figures 3A, 6A, and 7A as previously described.

Let's consider a Hamiltonian $H = H_0 + \alpha H_1$ where $\alpha \ll 1$, the norms of $H_0$ and $H_1$ are comparable and the unitary $U_0 = e^{-itH0}$ can be implemented exactly for arbitrary times with an efficient quantum circuit. For simplicity, $H$ considered here is a time independent expression; however, the methods described herein are also applicable for time dependent Hamiltonians. We are interested in approximating the full evolution time evolution operator of the Hamiltonian which is given by $U(t) = e^{-itH}$ for time independent Hamiltonians. A first order Trotter formula with $N$ steps for approximating $U(t)$ is

$\left(e^{i\frac{t}{N}H_0}e^{i\frac{t}{N}\alpha H_1}\right)^N$ and gives an error

$$\left\|e^{-it(H_0+\alpha H_1)} - \left(e^{i\frac{t}{N}H_0}e^{i\frac{t}{N}\alpha H_1}\right)^N\right\| \leq \frac{t^2|\alpha|}{N}\|[H_0, H_1]\| = O\left(\frac{t^2}{N}|\alpha|\right) \qquad (26)$$

We can use that $U_0$ is implementable exactly to improve this error. Going to the interaction picture, we can as well write

$$\begin{aligned} U &= \lim_{N\to\infty}\prod_{k=1}^{N} e^{-i\frac{t}{N}H_0}e^{-i\frac{t}{N}\alpha H_1}, \\ &= e^{-itH_0}\lim_{N\to\infty} e^{i\frac{(N-1)t}{N}H_0}e^{-i\frac{t}{N}\alpha H_1}e^{-i\frac{(N-1)t}{N}H_0}\ \ldots\ e^{-i\frac{t}{N}\alpha H_1}e^{i\frac{t}{N}H_0}e^{-i\frac{t}{N}\alpha H_1}e^{-i\frac{t}{N}H_0}e^{-i\frac{t}{N}\alpha H_1}, \qquad (27) \\ &= e^{-itH_0}\mathcal{T}e^{-i\int_0^t \alpha H_1(\tau)d\tau}, \end{aligned}$$

where in the second line above we have just inserted identities between each exponential of $H_1$. Here $\mathcal{T}$ is a time ordering operator (smaller times to the right) and $H_1(t) = e^{itH0}H1e^{-itH0}$. This expression for $H_1(t)$ in the interaction picture is found by evaluating

$$\tilde{H}_1 = U_{H_0}(t_i, t)H_1U_{H_0}(t, t_i) \qquad (28)$$

for the case

$$U_{H_0}(t, t_i = 0) = e^{-i\int_0^t H_0\,ds} = e^{-itH_0} \qquad (29)$$

and the specific situation where $H_0$ is time independent. The most general form of the time evolution of $H_1$ in the interaction picture - where $H_0$ and $H_1$ may be time dependent, or time independent - is denoted $\tilde{H}_1$ in this document, in particular in step 1b) of the methods described herein, and has an associated full-time time ordered evolution operator, $U_{\tilde{H}1}(t_f, t_i)$, where $t_i$ is the starting time, $t_f$ is the final time, and $T = t_f - t_i$ is the full-time over which the full-time time ordered operator acts. Equation (28) provides the time evolution of $H_1$ in the interaction picture for time dependent and time independent Hamiltonians.

The simplest way of understanding the time-ordered evolution operator generated by $H(t)$ is the definition

$$U(t) = \mathcal{T}e^{-i\int_0^t H(s)ds} = \lim_{N\to\infty}\prod_{k=1}^{N} e^{-i\frac{t}{N}H\left(k\frac{t}{N}\right)} = e^{-i\frac{t}{N}H(t)}e^{-i\frac{t}{N}H\left(\frac{(N-1)t}{N}\right)}\ldots e^{-i\frac{t}{N}H\left(\frac{2t}{N}\right)}e^{-i\frac{t}{N}H\left(\frac{t}{N}\right)} \qquad (30)$$

which is used in (2) above. This is not the only representation of this object. Another is given by taking the first order Taylor expansion of the terms in the product

$$U(t) = \mathcal{T}e^{-i\int_0^t H(s)ds} = \lim_{N\to\infty}\prod_{k=1}^{N}\left(1-\frac{it}{N}H\left(k\frac{t}{N}\right)\right) = \left(1-\frac{it}{N}H(t)\right)\dots\left(1-\frac{it}{N}H\left(\frac{t}{N}\right)\right). \qquad (31)$$

Expanding the product above we find

$$U(t) = \lim_{N\to\infty}\left(1-\frac{it}{N}\sum_{k=1}^{N}H\left(k\frac{t}{N}\right)+\frac{(it)^2}{N}\sum_{k=2}^{N}\sum_{r=1}^{k}H\left(k\frac{t}{N}\right)H\left(r\frac{t}{N}\right)+\cdots\right). \qquad (32)$$

Taking the limit transforms the sums into integrals

$$U(t) = 1 - i\int_0^t H(s)ds + (it)^2\int_0^t\int_0^{t_1} H(t_1)H(t_2)\,dt_1\,dt_2 + \cdots. \qquad (33)$$

Note that the third term is an integral where the arguments of the integrands are ordered with the smaller to the right (that is $H(t_2)$). It would be more convenient to have all the integrals in the expression to extend from 0 to $t$ as in the second term. We can achieve that by introducing the time ordering operator $\mathcal{T}$ that orders operators of smaller time to the right, so

$$\mathcal{T}\big(f(t_1)g(t_2)\big) = \begin{cases} f(t_1)g(t_2), & t_1 \ge t_2 \\ g(t_2)f(t_1), & t_1 < t_2 \end{cases}. \qquad (34)$$

Such that

$$\mathcal{T}\left(\int_0^t\int_0^t H(t_1)H(t_2)\,dt_1\,dt_2\right) = \int_0^t\int_0^{t_1}\mathcal{T}\big(H(t_1)H(t_2)\big)\,dt_2\,dt_1 + \int_0^t\int_{t_1}^{t}\mathcal{T}\big(H(t_1)H(t_2)\big)\,dt_2\,dt_1$$
$$= \int_0^t\int_0^{t_1} H(t_1)H(t_2)\,dt_2dt_1 + \int_0^t\int_{t_1}^{t} H(t_2)H(t_1)\,dt_2dt_1 \qquad (35)$$

Where the first equality is just splitting the time integral, while the second is just using the definition of $\mathcal{T}$. Using the identity $\int_0^t\int_{t_1}^t F(t_1,t_2)\,dt_2dt_1 = \int_0^t\int_0^{t_2} F(t_1,t_2)\,dt_1dt_2$, this becomes

$$\mathcal{T}\left(\int_0^t\int_0^t H(t_1)H(t_2)\,dt_1\,dt_2\right)$$
$$= \int_0^t\int_0^{t_1} H(t_1)H(t_2)\,dt_2dt_1 + \int_0^t\int_0^{t_2} H(t_2)H(t_1)\,dt_1dt_2 \qquad (36)$$

Relabelling the time variables in the last term on the right, we arrive at

$$\mathcal{T}\left(\int_0^t\int_0^t H(t_1)H(t_2)\,dt_1\,dt_2\right) = 2\int_0^t\int_0^{t_1} H(t_1)H(t_2)\,dt_1dt_2 \qquad (37)$$

Similarly, it is possible to show that for m integrals

$$\mathcal{T}\left(\int_0^t\int_0^t\dots\int_0^t H(t_1)H(t_2)\dots H(t_m)\,dt_1\,dt_2\dots dt_m\right) = m!\int_0^t\int_0^{t_1}\dots\int_0^{t_{m-1}} H(t_1)H(t_2)\dots H(t_m)\,dt_1\,dt_2\dots dt_m \quad (38)$$

So we can write

$$\begin{aligned} U(t) &= 1 - i\int_0^t H(s)ds + (it)^2\int_0^t\int_0^{t_1} H(t_1)H(t_2)\,dt_1\,dt_2 + \cdots \\ &= \mathcal{T}\left(1 - i\int_0^t H(s)ds + (it)^2\int_0^t\int_0^t H(t_1)H(t_2)\,dt_1\,dt_2 + \cdots\right) \quad (39) \\ &= \mathcal{T}e^{-i\int_0^t H(s)ds} \end{aligned}$$

which motivates the use of the time ordering operator $\mathcal{T}$. Although all of the above are different representations of the same object, once we truncate - either by:

choosing a finite $N$ in $U(t) = \lim_{N\to\infty}\prod_{k=1}^N e^{-i\frac{t}{N}H\left(k\frac{t}{N}\right)} = e^{-i\frac{t}{N}H(t)}e^{-i\frac{t}{N}H\left(\frac{(N-1)t}{N}\right)}\dots e^{-i\frac{t}{N}H\left(\frac{2t}{N}\right)}e^{-i\frac{t}{N}H\left(\frac{t}{N}\right)}$ ; or keeping only some terms in the full sum

$$U(t) = 1 - i\int_0^t H(s)ds + (it)^2\int_0^t\int_0^{t_1} H(t_1)H(t_2)\,dt_1\,dt_2 + \cdots \quad ,$$

or doing something else - then different approximation errors arise. Trying to reduce the different approximation errors is what motivates our methods.

$$U(t) = e^{-itH_0}\mathcal{T}e^{-i\int_0^t \alpha H_1(\tau)d\tau}$$

is a better starting expression for bounding the error of the Trotter formula. Let

$$\left[\mathcal{T}e^{-i\int_0^t \alpha H_1(\tau)d\tau}\right]_{THRIFT}$$

denote an improved 'Trotter-like' THRIFT formula (to be defined and also referred to as a THRIFT decomposition herein) for approximating

$$\mathcal{T}e^{-i\int_0^t \alpha H_1(\tau)d\tau},$$

and let $U_{THRIFT}$ denote the overall approximation to $U(t)$ obtained by the use of this formula. So we have

$$\begin{aligned} \|U - U_{THRIFT}\| &= \left\|e^{-itH_0}\mathcal{T}e^{-i\int_0^t \alpha H_1(\tau)d\tau} - e^{-itH_0}\left[\mathcal{T}e^{-i\int_0^t \alpha H_1(\tau)d\tau}\right]_{THRIFT}\right\| \\ &= \left\|\mathcal{T}e^{-i\int_0^t \alpha H_1(\tau)d\tau} - \left[\mathcal{T}e^{-i\int_0^t \alpha H_1(\tau)d\tau}\right]_{THRIFT}\right\|, \quad (40) \end{aligned}$$

By invariance of the operator norm under unitary transformations. Using for $\left[\mathcal{T}e^{-i\int_0^t \alpha H_1(\tau)d\tau}\right]_{THRIFT}$ the first order generalized Trotter formula $\left[\mathcal{T}e^{-i\int_0^t \alpha H_1(\tau)d\tau}\right]_{THRIFT} = \mathcal{T}e^{-i\int_0^t \alpha H_{1,1}(\tau)d\tau}\mathcal{T}e^{-i\int_0^t \alpha H_{1,2}(\tau)d\tau}$, where $H_1(\tau) = H_{1,1}(\tau) + H_{1,2}(\tau)$ is some splitting of $H_1(\tau)$ we have

$$\|U - U_{THRIFT}\| = \left\|\mathcal{T}e^{-i\int_0^t \alpha H_1(\tau)d\tau} - \mathcal{T}e^{-i\int_0^t \alpha H_{1,1}(\tau)d\tau}\mathcal{T}e^{-i\int_0^t \alpha H_{1,2}(\tau)d\tau}\right\|,$$
$$\leq \alpha^2 \int_0^t dv \int_0^v ds \left\|\left[H_{1,1}(s), H_{1,2}(v)\right]\right\| = O(\alpha^2 t^2), \qquad (41)$$

for small $t$, assuming that $\|[H_{1,1}(s),H_{1,2}(v)]\| = O(1)$. Note that the error now scales as $\alpha^2$ instead of $\alpha$. For general time, we can divide the evolution into $N$ Trotter steps, with an error

$$\|U - U_{THRIFT}\| = \left\|\mathcal{T}e^{-i\int_0^t \alpha H_1(\tau)d\tau} - \prod_{j=0}^{N-1}\mathcal{T}e^{-i\int_{j\frac{t}{N}}^{(j+1)\frac{t}{N}} \alpha H_{1,1}(\tau)d\tau}\mathcal{T}e^{-i\int_{j\frac{t}{N}}^{(j+1)\frac{t}{N}} \alpha H_{1,2}(\tau)d\tau}\right\|$$
$$\leq \alpha^2 \sum_{j=0}^{N-1} \int_{j\frac{t}{N}}^{(j+1)\frac{t}{N}} dv \int_{j\frac{t}{N}}^{v} ds \left\|\left[H_{1,1}(s), H_{1,2}(v)\right]\right\| = O\left(\frac{\alpha^2 t^2}{N}\right) \qquad (42)$$

To turn this approach into a useful Trotter decomposition, we need a way of implementing the time ordered exponentials. This can be done using the definition of the time-ordered exponential in the other direction

$$\mathcal{T}e^{-i\int_a^b \alpha A(\tau)\, d\tau} = e^{ibH_0}e^{-i(b-a)(H_0+\alpha A)}e^{-iaH_0}, \qquad (43)$$

valid for any Hermitian operator $A(t) = e^{iH0t}Ae^{-iH0t}$. This leads to the following decomposition

$$U_{THRIFT} = e^{-itH_0}\mathcal{T}e^{-i\int_0^t \alpha H_{1,A}(\tau)d\tau}\mathcal{T}e^{-i\int_0^t \alpha H_{1,B}(\tau)d\tau} = e^{-it(H_0+\alpha H_{1,A})}e^{itH_0}e^{-it(H_0+\alpha H_{1,B})}. \qquad (44)$$

This decomposition is equivalent to the usual first order Trotter decomposition of the Hamiltonian $H = H_0 + \alpha(H_{1,A} + H_{1,B})$ using the summands $H = (H_0 + \alpha H_{1,A}) - H_0 + (H_0 + \alpha H_{1,B})$. The decomposition in equation (44) has an error $\alpha$ time smaller than usual first order Trotter, as long as each of the exponentials in the sum can be implemented with an error smaller than $O(t^2\alpha^2)$. If that is not possible, the same approach can be used iteratively for each of the pieces. Alternatively, each of the pieces can be approximated using a 1st order Magnus expansion.

This allows us to state the following theorem:

**Theorem 1** (THRIFT decomposition):

*We call a Hamiltonian H $\varepsilon$-implementable if the evolution operator U = $e^{-itH}$ can be implemented with an error $0(\varepsilon)$ with a circuit depth independent of $\varepsilon$. Given a Hamiltonian $H = H_0 + \alpha H_1$ where $H_1 = \sum_{\gamma=1}^{\Gamma} H_{1,\gamma}$ and both $H_0$ and $H_{1,\gamma} + H_0$ are $(t\alpha)^2$ implementable then the decomposition*

$$U_{THRIFT}(t) = e^{-itH_0}\prod_{\gamma=1}\left(e^{itH_0}e^{-it(H_0+\alpha H_{1,\gamma})}\right), \qquad (45)$$

*approximates $U(t) = e^{-itH}$ with an error $O(t^2\alpha^2)$ for small times t.*

*Proof:* Using equation (45) as the base case, perform induction over $\Gamma$.

For $\alpha < 1$ the error of this approximation scales better than a normal Trotter decomposition. As the partition

$H_1 = \sum_{\gamma=1}^{\Gamma} H_{1,\gamma}$ is not unique and follows an heuristic determined by the available gates, we call this approach Trotter Heuristic Resource Improved Formula for Time-dynamics, or THRIFT for short.

$\Pi_{\gamma=1}(e^{itH0}e^{-it(H0+\alpha H1,\gamma)})$ in equation 45 can also be written in the general form

$$\prod_{k=0}^{N-1}\prod_{\gamma}^{\Gamma} U_{-H_0}\left((k+1)\frac{T}{N}+t_i, k\frac{T}{N}+t_i\right)U_{(H_0+H_{1,\gamma})}\left((k+1)\frac{T}{N}+t_i, k\frac{T}{N}+t_i\right). \quad (46)$$

So, in step 1d) process 130A, the time ordered evolution operator of each slice from step 1b) (process 110) is approximated by

$$U_{\tilde{H}_1}\left((k+1)\frac{T}{N}+t_i, k\frac{T}{N}+t_i\right) = \prod_{\gamma}^{\Gamma} U_{-H_0}\left((k+1)\frac{T}{N}+t_i, k\frac{T}{N}+t_i\right)U_{(H_0+H_{1,\gamma})}\left((k+1)\frac{T}{N}+t_i, k\frac{T}{N}+t_i\right) \quad (47)$$

as , shown in Figure 7A, which were discussed in the detailed description.

The THRIFT decomposition in equation 45 corresponds to a first order Trotter formula and as such it can be used as a seed, $U_{seed}$, to obtain higher order THRIFT approximations using an appropriate higher order formula. For example, a higher order formula that may be used is a 2k-order Suzuki formula, $S_k$, defined recursively by

$$S_1 = U_{seed}(t)$$
$$S_2 = U_{seed}\left(\frac{t}{2}\right)U_{Seed}^{\dagger}\left(-\frac{t}{2}\right)$$
$$S_{2k}(t) = S_{2k-2}^2(u_k t)\, S_{2k-2}^2\big((1-4u_k)\, t\big)\, S_{2k-2}^2(u_k t), \quad (48)$$

where $u_k = \frac{1}{4-4^{1/(2k-1)}}$. We call these higher order formulas 2$k$-order THRIFT as they approximate $U(t) = e^{-itH}$ with an error $O(t^{2k+1}\alpha^2)$. This procedure leads to the decomposition

$$U_p(T) = \prod_{k=1}^{N} S_k\left(\frac{T}{N}\right) + O\left(N\alpha^2\left(\frac{T}{N}\right)^{p+1}\right), \quad (49)$$

where $p = 2k$.

We have proven that no Trotter-style formula can achieve better scaling than this in $\alpha$. This motivates the following approach based on the Magnus expansion with error scaling $O(t\alpha)^{k+1}$.

APPENDIX 2: Theory - Magnus-THRIFT

**Beyond $\alpha^2$ scaling**

Motivated by equations (27), we look for approximations of the time-ordered operator. Writing

$$U = \mathcal{T}e^{-i\int_0^t A(s)ds} = e^{\Omega(t)} \quad (50)$$

it is easy to show that $\frac{de^{\Omega(t)}}{dt}e^{-\Omega(t)} = -iA(t)$. Magnus used this to find an equation for $\Omega$ by means of the inverse of the derivative of the exponential map, i.e.,

$$\frac{de^{\Omega(t)}}{dt}e^{-\Omega(t)} = \frac{e^{ad_\Omega}-1}{ad_\Omega}\frac{d\Omega}{dt} \rightarrow \frac{d\Omega}{dt} = \frac{ad_\Omega}{e^{ad_\Omega}-1}(-iA) = \sum_{k=0}^{\infty}\frac{b_k}{k!}ad_\Omega^j(-iA), \qquad (51)$$

where $ad_\Omega(\cdot) = [\Omega, \cdot]$ and $ad_\Omega^j(\cdot) = ad_\Omega^{j-1}([\Omega, \cdot])$. The coefficients $b_j$, are Bernoulli numbers, defined through $\frac{x}{e^x-1} = \sum_{j=0}^{\infty}\frac{b_j}{j!}x^j$. The equation for Ω can now be solved through Picard iteration. Using these results we can state

**Theorem 2** (Magnus-THRIFT decomposition).

*Given a Hamiltonian $H = H_0 + \alpha H_1$, and defining $H_1(t) = e^{itH0} H_1 e^{-itH0}$ the expression*

$$U_M(t) = e^{-itH_0}e^{\left(\Omega^{[k]}(t)\right)} = e^{-itH_0}e^{\left(\sum_{j=1}^{k}\Omega_j(t)\right)} \qquad (52)$$

*where $\Omega_j(t)$ is defined recursively from* $S_m^{(0)} = -i\delta_{m,1}\alpha H_1(t),\ S_n^{(j)} = \sum_{m=1}^{n-j}[\Omega_m,\ S_{n-m}^{(j-1)}]$ *with* $1 \le j \le n - 1$ *and*

$$\Omega_1 = -i\int_0^t \alpha H_1(s)\,ds, \quad \Omega_n = \sum_{j=1}^{n-1}\frac{b_j}{j!}\int_0^t S_n^{(j)}(s)\,ds, \quad (n > 1), \qquad (53)$$

*approximates $U(t) = e^{-itH}$ up to order $(t\alpha)^{k+1}$ for small times. Here $b_j$ is the $j^{th}$ Bernoulli number, with* $b_1 = -\frac{1}{2}$.

The expansion for $\Omega(t)$ becomes cumbersome very fast. The first four terms are

$$\Omega_1(t) = -i\alpha\int_0^t H_1(\tau)\,d\tau, \qquad (54)$$

$$\Omega_2(t) = \frac{(-i\alpha)^2}{2}\int_0^t dt_1\int_0^{t_1} dt_2\,[H_1(t_1), H_1(t_2)] \qquad (55)$$

$$\Omega_3(t) = \frac{(-i\alpha)^3}{6}\int_0^t dt_1\int_0^{t_1} dt_2\int_0^{t_2} dt_3\,\big([H_1(t_1),[H_1(t_2),H_1(t_3)]] + [H_1(t_3),[H_1(t_2),H_1(t_1)]]\big) \qquad (56)$$

$$\Omega_4(t) = \frac{(-i\alpha)^4}{12}\int_0^t dt_1\int_0^{t_1} dt_2\int_0^{t_2} dt_3\int_0^{t_4} dt_4\,\Big(\big[[[H_1(t_1),H_1(t_2)],H_1(t_3)],H_1(t_4)\big] + \big[H_1(t_1),[[H_1(t_2),H_1(t_3)],H_1(t_4)]\big] + \big[H_1(t_1),[H_1(t_2),[H_1(t_3),H_1(t_4)]]\big] + \big[H_1(t_2),[H_1(t_3),[H_1(t_4),H_1(t_1)]]\big]\Big) \qquad (57)$$

An example of an efficient way of algorithmically generating these terms is based on their representation using binary rooted trees as in [A. Iserles and S. P. Norsett. "On the solution of linear differential equations in Lie groups". Phil. Trans. Royal Soc. A, 357:983-1019, 1999].

**Magnus-THRIFT Algorithm**

To approximate the time evolution over time $T$, generated by the Hamiltonian $H$ - where $H = H_0 + \alpha H_1$ -- with precision $O[(t\alpha)^{k+1}]$ where $U_{H0} = e^{-iTH0}$ is $(T\alpha)^{k+1}$-implementable and $H_1(t) = e^{itH0} H_1 e^{-itH0}$ is efficiently computable:

1. Write the evolution operator $U(T) = e^{-iT(H0+\alpha H1)}$ in the interaction picture, with $H_0$ as the dominant part, i.e.,

$$U(T) = e^{-iTH_0}\mathcal{T}e^{-i\int_0^T \alpha H_1(t)\,dt} \qquad (58)$$

where $\mathcal{T}$ is a time ordered operator with smaller times ordered from right to left and $\alpha < 1$.
2. Slice the time $T$ into $N$ intervals

$$\mathcal{T}e^{-i\int_0^T \alpha H_1(t)\,dt} = \prod_{k=1}^{N} \mathcal{T}e^{-i\int_{(k-1)\frac{T}{N}}^{k\frac{T}{N}} \alpha H_1(t)\,dt} \qquad (59)$$

where a general form for

$$\prod_{k=1}^{N} \mathcal{T}e^{-i\int_{(k-1)\frac{T}{N}}^{k\frac{T}{N}} \alpha H_1(t)\,dt} \qquad (60)$$

is

$$\prod_{k=0}^{N-1} U_{\tilde{H}_1}\left((k+1)\frac{T}{N} + t_i,\ k\frac{T}{N} + t_i\right) \qquad (61)$$

as in step 1b) (process 110 detailed in Figure 5) of the method shown in Figures 1, 2, 3A, and 3B, which takes the expression for the time evolution of $H_1$ in the interaction picture, $\tilde{H}_1 = U_{H0}(t_i,t)H_1U_{H0}(t,t_i)$, as an input 111, generates the associated time ordered operator $U_{\tilde{H}1}$ in process 112, and splits the total time $T$ into $N$ slices in process 113, so that the time ordered operator $U_{\tilde{H}1}$ is the product of the time ordered evolution operators of each slice of size $T/N$ as in equation (61) and shown in Figure 5.

3. Approximate the time ordered exponential of a slice using its Magnus expansion up to order $O\left(\frac{\alpha T}{N}\right)^p$:

$$\mathcal{T}e^{-i\int_t^{t+\delta t} \alpha H_1(t)} = e^{\left(\Omega^{[p]}(t,\delta t)\right)} + O((\delta t\alpha)^{p+1}). \qquad (62)$$

This step corresponds to step 1c) of the method shown in Figure 3A, where process 120B approximates the time ordered evolution operator of each slice, $U_{\tilde{H}_1}\left((k+1)\frac{T}{N} + t_i, k\frac{T}{N} + t_i\right)$, by further decomposing $\tilde{H}_1$ based on the, or at least one of the, at least one subset(s) of quantum gates, $g_\xi$ - in this specific example further decomposing $\tilde{H}_1$ employs a p-order Magnus expansion $\Omega^{[p]}(t, \delta t)$ to decompose $\tilde{H}_1(t)$ (the specific form of $\tilde{H}_1$) as shown in detail in Figure 6B processes 1200B and 1210B.
4. Approximate the exponential, $e^{(\Omega[p](t,\delta t)})$, obtained from the Magnus expansion using a $p$ order Suzuki formula in terms of $(\delta t\alpha)^{p+1}$-implementable gates

$$e^{\left(\Omega^{[p]}(t,\delta t)\right)} = S_p(t,\delta t) + O((\delta t\alpha)^{p+1}) \qquad (63)$$

This procedure leads to the decomposition

$$U(T) = e^{-iTH_0} \prod_{k=1}^{N} S_p\left((k-1)\frac{T}{N}, \frac{T}{N}\right) + O\left(N\left(\frac{T\alpha}{N}\right)^{p+1}\right) \qquad (64)$$

Expanding the time dependent Hamiltonian as a sum of time independent operators $O_q$ and functions of time $\beta_q(t)$ i.e. $H(t) = \sum_{q=1}^{Q} \beta_q(t) O_q$ , the Magnus-2 term therefore becomes

$$\Omega^{(2)}(t, \delta t) = -i\alpha\delta t\left(\sum_{q=1}^{Q} A_1(t, \delta t) O_q + \sum_{q>p}^{Q} B_{qp}(t, \delta t)\left[O_p, O_q\right]\right) \qquad (65)$$

where $A_q(t, \delta t) = \frac{1}{\delta t}\int_t^{t+\delta t} \beta_q(s)\, ds$ and $B_{qp}(t, \delta t) = -i\frac{\alpha}{4\delta t}\int_t^{t+\delta t} \beta_q(s)\beta_p(r)\mathrm{sign}(s-r)\, dsdr$ , and the functions $A_q$ and $B_{qp}$ can be computed classically. Based on this, we can approximate $e^{\Omega(2)(t,\delta t)}$ using a second order product formula as

$$e^{\Omega^{(2)}(t,\delta t)} = e^{-i\alpha\delta t\left(\sum_{q=1}^{Q} A_1(t,\delta t) \mathrm{O}_q + \sum_{q>p}^{Q} B_{qp}(t,\delta t)\left[\mathrm{O}_p, \mathrm{O}_q\right]\right)}$$

$$= e^{-i\alpha\frac{\delta t}{2}\sum_{q=1}^{Q} A_1(t,\delta t) \mathrm{O}_q}\, e^{-i\alpha\delta t\sum_{q>p}^{Q} B_{qp}(t,\delta t)\left[\mathrm{O}_p, \mathrm{O}_q\right]}\, e^{-i\alpha\frac{\delta t}{2}\sum_{q=1}^{Q} A_1(t,\delta t) \mathrm{O}_q}. \qquad (66)$$

If each of the products needs to be decomposed further, this could be done using a second order product formula again, to keep the error at most $O(\alpha^3 t^3)$.

APPENDIX 3

### Alternative expansions for decomposing $\tilde{H}_1$

Alternative methods which employ other expansions to approximate the time-ordered exponential of a time slice are also possible and may provide approximations of the full time time-ordered evolution operator that have errors that scale than THRIFT and Magnus in some situations (e.g. for some Hamiltonians, and/or at certain energy scales and/or for some interaction strengths, and/or when the time dynamics simulation is to be executed on certain quantum computing hardware types). Other suitable expansions with potential for application with any of the methods disclosed may comprise a Fer expansion.

### Fer-THRIFT

To approximate the time evolution over time $T$, generated by the Hamiltonian $H = H_0 + \alpha H_1$ with precision $O\left(N\left(\frac{T\alpha}{N}\right)^{p+1}\right)$ where $H_0$ is $(T\alpha)^{p+1}$-implementable and $H_1(t) = e^{itH0} H_1 e^{-itH0}$ is efficiently computable:

1. Write the evolution operator $U(T) = e^{-iT(H0+\alpha H1)}$ in the interaction picture, with $H_0$ as the dominant part, i.e.

$$U(T) = e^{-iTH_0} \mathcal{T} e^{-i\int_0^T \alpha H_1(t)\, dt} \qquad (67)$$

where T is the time ordered operator from smaller times ordered from right to left.
2. Slice the time T into N intervals:

$$\mathcal{T} e^{-i\int_0^T \alpha H_1(t)} = \prod_{k=1}^{N} \mathcal{T} e^{-i\int_{(k-1)\frac{T}{N}}^{k\frac{T}{N}} \alpha H_1(t)} \qquad (68)$$

3. Approximate the time ordered exponential of a slice using its Fer expansion up to order $O\left(\left(\frac{T}{N}\alpha\right)^p\right)$:

$$\mathcal{T}e^{-i\int_t^{t+\delta t}\alpha H_1(t)} = \prod_{j=0}^{\log(p)} e^{-i\int_t^{t+\delta t}A_j(s)\,ds} + O((\delta t\alpha)^{p+1}) \qquad (69)$$

which can be considered as another possible step 1c) (process 120) variant.

4. Approximate each exponential in the product using a $p$-order Suzuki formula in terms of $(\delta t\alpha)^{p+1}$-implementable gates:

$$e^{-i\int_t^{t+\delta t}A_j(s)\,ds} = S_p^j(t,\delta t) + O((\delta t\alpha)^{p+1}) \qquad (70)$$

The p-order Suzuki formula may be defined recursively as it is where it is used for the method employing the Magnus expansion, or using another higher order product formula.

This procedure leads to the approximation

$$U(T) = e^{iTH_0}\prod_{k=1}^{N}\prod_{j=0}^{\log(p)} S_p^j\left((k-1)\frac{T}{N},\frac{T}{N}\right) + O\left(N\left(\frac{T\alpha}{N}\right)^{p+1}\right). \qquad (71)$$

These alternative steps could be used to create another, alternative or additional, 'Fer-THRIFT' version of processes 120, 130, 140, 150, and 160 analogous to processes 120A/B to 160A/B as detailed in Figures 6A/B to 9A/B respectively. Likewise, these steps could be incorporated as an additional or alternative step 1$\Phi$), analogous to steps 1$\alpha$) and 1$\beta$) in the methods shown in Figures 3A and 3B.

## Clauses

The disclosure also extends to the following clauses.

Clause 1. A method for time-dynamics simulation, TDS, of a quantum system on a quantum information processor with $n$ qubits, the quantum information processor capable of executing quantum gates $G = \{G_0, \ldots, G_\eta\}$ on at least one of the $n$ qubits, wherein at least one subset of the quantum gates, $g_\xi = \{g_0, \ldots, g_\mu\}$, is executable in parallel with an error independent of circuit depth, $d$, and the quantum system is described by a Hamiltonian, $H$, with a full-time time ordered evolution operator, $U_H(t_f,t_i) = \mathcal{T}e^{-i\int_{t_i}^{t_f}H\,ds}$ where $\mathcal{T}$ is a time ordering operator, the method comprising:

1) identifying an approximation, $U_A$, of the full-time time ordered evolution operator over a total evolution time, $T = t_f - t_i$, by:

a) decomposing the Hamiltonian, H, based on the, or at least one of the, at least one subset(s) of quantum gates, $g_\xi$, such that $H = H_0 + H_1$, wherein $H_0$ has a full-time time ordered evolution operator, $U_{H0}$, that is implementable with the subset of gates $g_\xi$ with an error independent of circuit depth and the time evolution of $H_1$ in the interaction picture is given by $\tilde{H}_1 = U_{H0}(t_i,t)H_1U_{H0}(t,t_i)$ which has an associated full-time time ordered evolution operator, $U_{\tilde{H}1}(t_f,t_i)$, that is not implementable with only the subset of gates $g_\xi$ with an error independent of circuit depth;

b) splitting the total evolution time, $T$, of the full-time time evolution operator of $\tilde{H}_1$, $U_{\tilde{H}1},(T+t_i,t_i)$, into $N$ slices of size $T/N$ having the form $U_{\tilde{H}_1}(T+t_i,t_i) = \prod_{k=0}^{N-1}U_{\tilde{H}_1}\left((k+1)\frac{T}{N}+t_i, k\frac{T}{N}+t_i\right)$ wherein the slices each correspond to a time ordered evolution operator, $U_{\tilde{H}_1}\left((k+1)\frac{T}{N}+t_i, k\frac{T}{N}+t_i\right)$, generated from $\tilde{H}_1$;

c) approximating the time ordered evolution operator of each slice, $U_{\tilde{H}_1}\left((k+1)\frac{T}{N}+t_i, k\frac{T}{N}+t_i\right)$, by further decomposing $\tilde{H}_1$ based on the, or at least one of the, at least one subset(s) of quantum gates, $g_\xi$;

d) splitting up the time ordered evolution operator of each slice, $U_{\tilde{H}_1}\left((k+1)\frac{T}{N}+t_i, k\frac{T}{N}+t_i\right)$, using a product of exponentials based on the decomposition of $\tilde{H}_1$ from step 1c);
e) combining the results of steps 1a) to 1d) to provide the approximation, $U_A$, of the full-time time ordered evolution operator over the total evolution time, and

2) performing a TDS of the quantum system by:

a) initialising a state of the quantum system on the quantum information processor;
b) converting the approximation of the full-time time ordered evolution operator, $U_A$, into a series of quantum gates to operate on at least one of the *n* qubits of the quantum information processor;
c) executing the series of quantum gates on the quantum information processor to time evolve the state of the quantum system; and
d) performing a measurement on at least one of the *n* qubits of the quantum information processor to obtain a result of the TDS.

Clause 2. The method according to clause 1, wherein decomposing the Hamiltonian, *H,* in step 1a) comprises decomposing *H* based on the at least one subset(s) of quantum gates, $g_\xi$, such that $H = \sum_\xi H_0^\xi + H_1$, wherein each $H_0^\xi$ has a full-time time ordered evolution operator, $U_{H_0}^\xi$, that is implementable with one of the at least one subset(s) of quantum gates, $g_\xi$ with an error independent of circuit depth, and $H_1$ has a full-time time ordered evolution operator, $U_{H1}$, that is not implementable with any one of the at least one subset(s) of quantum gates, $g_\xi$, with an error independent of circuit depth.

Clause 3. The method according to clause 1 or clause 2, wherein identifying $U_A$ in step 1) further comprises:

f) performing steps 1a) to 1e) for each of the at least one subset(s) of gates, $g_\xi = \{g_0, ..., g_\mu\}$. to obtain an approximation of the full-time time evolution operator for each subset of gates, $U_A, g_\xi$;
g) evaluating how efficient it is to implement each approximation of the full-time time evolution operator, $U_{A,g\xi}$, by calculating a circuit depth, $d_{A,g\xi}$, required to implement each $U_{A,g\xi}$; and
h) identifying a $U_{A,g\xi}$ with the lowest circuit depth $d_{A,g\xi}$.

Clause 4. The method according to any one of the preceding clauses, wherein further decomposing $\tilde{H}_1$ in step 1c) comprises partitioning $H_1$ according to its summands, $H_{1,\gamma}$, based on the, or at least one of the, at least one subset(s) of quantum gates $g_\xi$ and $\tilde{H}_1 = U_{H0}(t_i,t)(\sum_\gamma H_{1,\gamma})U_{H0}(t,t_i)$ to arrive at an associated decomposition of $\tilde{H}_{1,decomp} = \sum_\gamma \tilde{H}_{1,\gamma}$.

Clause 5. The method according to clause 4, wherein the product of exponentials used in step 1d) to split up the time ordered evolution operator of each slice, $U_{\tilde{H}_1}\left((k+1)\frac{T}{N}+ t_i, k\frac{T}{N}+t_i\right)$, is

$$\prod_{\gamma}^{\Gamma} U_{-H_0}\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right).$$

Clause 6. The method according to clause 5, wherein further decomposing $\tilde{H}_1$ in step 1c) further comprises:

i) identifying a set, $H_\Delta = \{\tilde{H}_{1,decomp}^0, \ldots, \tilde{H}_{1,decomp}^\nu\}$, comprising at least two decompositions of $\tilde{H}_1$; and
ii) using each decomposition in the set $H_\Delta$ to generate an approximation of the time ordered evolution operator of each slice for that decomposition,

the method further comprising:

performing step 1d) for each approximation of the time ordered evolution operator of each slice corresponding to each decomposition in the set $H_\Delta$;

performing step 1e) for each decomposition, $\tilde{H}_{1,decomp}^\nu$, in the set $H_\Delta$, to identify a corresponding approximation of the full-time time evolution operator $U_A^\nu$,

and, after step 1e):

i) evaluating how efficient it is to implement each $U_A^\nu$ by calculating a circuit depth $d_A^\nu$ required to implement each $U_A^\nu$; and

ii) identifying which $U_A^\nu$ has the lowest circuit depth $d_A^\nu$.

Clause 7. The method according to any one of clauses 4 to 6, wherein identifying $U_A$ in step 1) further comprises:

j) using the $U_A$ from step 1e) as a first order Trotter seed, $U_{A,seed}$, to determine at least one higher-order Trotter approximation of the time evolution operator, $U_{A,2k}$, using a 2$k$-order product formula;
k) evaluating how efficient it is to implement $U_{A,seed}$ and each at least one higher-order Trotter approximation of the full-time time evolution operator, $U_{A,2k}$, by calculating circuit depths $d_{A,seed}$ and $d_{A,2k}$ required to implement $U_{A,seed}$ and each $U_{A,2k}$ respectively; and
m) identifying a $U_{A,seed}$ or $U_{A,2k}$ with the lowest circuit depth, $d_{A,Seed}$ or $d_{A,2k}$.

Clause 8. The method according to clause 7 as dependent on claim 6, further comprising:

n) performing steps 1j) to 1m) again for at least one of the one or more further decompositions $\tilde{H}_{1,decomp}^\nu$ in the set $H_\Delta$;

o) comparing the circuit depths, $d_{A,Seed}^\nu$ or $d_{A,2k}^\nu$, of all the identified $U_{A,Seed}^\nu$ or $U_{A,2k}^\nu$ from step 1n); and

p) identifying a $U_{A,Seed}^\nu$ or $U_{A,2k}^\nu$ with the lowest circuit depth, $d_{A,Seed}^\nu$ or $d_{A,2k}^\nu$.

Clause 9. The method according to any one of the preceding clauses, wherein further decomposing $\tilde{H}_1$ in step 1c) further comprises decomposing the time ordered evolution operator of each slice, $U_{\tilde{H}_1}\left((k+1)\frac{T}{N}+t_i, k\frac{T}{N}+t_i\right)$, in terms of nested commutators $C_p(t_1, \ldots, t_p) = [\tilde{H}_1,(t_1), [\ldots, \tilde{H}_1(t_p)]]$ of $H_1(t)$ at different times, $t_p$, within the/each slice. Clause 10. The method according to clause 9, wherein decomposing $\tilde{H}_1$ in step 1c) uses a p-order Magnus expansion, $\Omega^{[p]}(t, \delta t)$ where $t$ is the initial time of the slice and $\delta t = T/N$ is the size of the slice and the time ordered evolution operator of the slice can be written

$$U_{\tilde{H}_1}\left((k+1)\frac{T}{N}+t_i, k\frac{T}{N}+t_i\right) = U_{\tilde{H}_1}\left(t+\frac{T}{N}, t\right) = U_{\tilde{H}_1}(t+\delta t, t).$$

Clause 11. The method according to clause 10, wherein the time ordered evolution operator of each slice $U_{\tilde{H}1}(t+\delta t,\ t)$ is approximated using an exponential of the p-order Magnus expansion, $e^{(\Omega[p](t,\delta t))}$ defined using $\Omega^{[p]}(t,\delta t) = \sum_{j=1}^{p}\Omega_j(t,\delta t)$, wherein $\Omega_j(t,\delta t)$ is defined recursively as:

$$\Omega_n(t,\delta t) = -i\sum_{j=1}^{n-1}\frac{b_j}{j!}\sum_{k_1+\cdots+k_j=n-1}\int_t^{t+\delta t} ad\left[\Omega_{k_1}(\tau)\right]\left(\ldots ad\left[\Omega_{k_j}(\tau)\right]\left(\tilde{H}_1\right)\right)d\tau$$

where $n \geq 1$, all indices in the sum satisfying $k_j \geq 1$, $b_j$ is the jth Bernoulli number, and $ad[A](B) = [A, B]$ is the commutator of $A$ and $B$, and further wherein $\Omega_n(t, \delta t)$ is approximated by computing a polynomial of order $(\delta t)^n$ such that

$$\Omega_n(t,\delta t) = \sum_{m=1}^{n} (\delta t)^m \sum_q f_{m,q}(t)\mathrm{O}_q \equiv \sum_q^{r} F_q(t,\delta t)\mathrm{O}_q$$

is a sum of time independent operators, $\mathrm{O}_q$,

Clause 12. The method according to clause 11, wherein the product of exponentials used in step 1d) to split up the time ordered evolution operator of each slice, $U_{\tilde{H}1}(t + \delta t, t)$, is

$$\prod_{q=1}^{r} e^{F_q(t,\delta t)\mathrm{O}_q} \prod_{q=r}^{1} e^{F_q(t,\delta t)\mathrm{O}_q}.$$

Clause 13. The method according to clause 11 or clause 12, wherein the product of exponentials used in step 1d) is a higher-order product formula constructed using a seed,

$$Seed = \prod_{q=1}^{r} e^{F_q(t,\delta t)\mathrm{O}_q} \prod_{q=r}^{1} e^{F_q(t,\delta t)\mathrm{O}_q} \ ,$$

optionally wherein the higher order-product formula is a $2\kappa$-order Suzuki formula, $S_{2\kappa}(\delta t)$ or $\tilde{S}_{2\kappa}(\delta t)$, defined recursively by:

$$S_{2\kappa}(\delta t) = S_{2\kappa-2}(s_\kappa \delta t)\, S_{2\kappa-2}\big((1-2s_\kappa)\delta t\big)\, S_{2\kappa-2}(s_\kappa \delta t),\ \ s_\kappa = 1/\left(2 - 2^{\frac{1}{2\kappa-1}}\right),\ \text{and}\ \ S_2 = Seed;$$

and

$\tilde{S}_{2\kappa}(\delta t) = \tilde{S}_{2\kappa-2}(u_\kappa \delta t)^2\, \tilde{S}_{2\kappa-2}((1 - 4u_\kappa)\delta t)\, \tilde{S}_{2\kappa-2}(u_\kappa \delta t)^2$, $u_\kappa = 1/\left(4 - 4^{\frac{1}{2\kappa-1}}\right)$, and $\tilde{S}_2 = Seed$, respectively.

Clause 14. The method according to clause 12 or clause 13, wherein step 1c) further comprises:

i) identifying a set of $\Lambda$ Magnus expansions, $\Omega^\Lambda = \{\Omega^{[p=1]}(t, \delta t), ..., \Omega^{[p=\Lambda]}(t, \delta t)\}$ wherein $\Lambda \geq 2$; and
ii) using each Magnus expansion in the set $\Omega^\Lambda$ to generate an approximation of the time ordered evolution operator of each slice in terms of $\tilde{H}_{1,p}(t_p)$ at different times, $t_p$, within each slice,

the method further comprising:

performing step 1d) for each approximation of the time ordered evolution operator of each slice corresponding to each Magnus expansion in the set $\Omega^\Lambda$;
performing step 1e) for each Magnus expansion in the set $\Omega^\Lambda$ to identify a corresponding approximation of the full-time time evolution operator $U_A^\Lambda$ ,

and after step 1e):

i) for each Magnus expansion in the set $\Omega^\Lambda$, evaluating how efficient it is to implement each approximation of the time evolution operator, $U_A^\Lambda$ , by calculating a circuit depth $d_A^\Lambda$ required to implement each $U_A^\Lambda$ ; and
ii) identifying a $U_A^\Lambda$ with the lowest circuit depth, $d_A^\Lambda$ .

Clause 15. The method according to clause 14 as dependent on any one of claims 6 to 8, comprising the steps: 1$\alpha$) performing step 1) according to the any one of claims 6 to 8 to identify an approximation of the full-time time evolution operator, $U_{A,\alpha}$, with an associated circuit depth, $d_{A,\alpha}$:

1$\beta$) performing step 1) according to clause 14 to identify an approximation of the full-time time evolution operator, $U_{A,\beta}$, with an associated circuit depth, $d_{A,\beta}$;

1$\varrho$) identifying whether $U_{A,\alpha}$ or $U_{A,\beta}$ has the lowest associated circuit depth and performing steps 2a) to 2d) using the $U_A$ having the lowest associated circuit depth.

Clause 16. The method according to clause 15, further comprising:

1$\tau$) before step 1$\varrho$), approximating the full-time time evolution operator using a Trotter method, $U_{Tr}$, and calculating an associated circuit depth, $d_{Tr}$, and

wherein the step 1$\varrho$) instead comprises identifying whether $U_{A,\alpha}$, $U_{A,\beta}$, or $U_{Tr}$ has the lowest associated circuit depth and performing steps 2a) to 2d) using the $U_A$ identified in step 1$\varrho$).

Clause 17. The method according to clause 16, comprising the steps:

performing step 1$\alpha$) or step 1$\beta$) to identify an approximation of the full-time time evolution operator $U_{A,\chi}$ with associated circuit depth $d_{A,\chi}$;
performing step 1T);

1$\varrho$) identifying whether $U_{A,\chi}$ or $U_{Tr}$ has the lowest associated circuit depth; and

performing steps 2a) to 2d) using the $U_{A,\chi}$ or $U_{Tr}$ identified in step 1$\varrho$) as $U_A$.

Clause 18. The method according to any one of the preceding clauses, wherein the at least one subset of quantum gates implementable in parallel, $g_\xi$, is dependent on the connectivity and/or layout of the *n* qubits of the quantum information processor.

Clause 19. The method according to any of the preceding clauses, wherein the circuit depth(s) calculated: $d_{A,S\xi}$, $d_A^{\nu}$, $d_{A,Seed}$, $d_{A,2k}$, $d_A^{\Lambda}$, $d_{A,\alpha}$, and/or $d_{A,\beta}$, is a 2-qubit circuit depth

Clause 20. A hybrid quantum-classical computation system configured to perform the method according to any one of the preceding clauses comprising:

at least one quantum computer; and
at least one classical computer configured to provide control signals to the quantum computer.

Clause 21. The hybrid quantum-classical computation system according to clause 20 wherein at least one classical computer is configured to perform step 1 and at least one quantum computer is configured to perform step 2.

Clause 22. The hybrid quantum-classical computation system according to clause 20 or clause 21, wherein the at least one, or another, classical computer is configured to perform steps 2a), 2b), and 2d) with the at least one quantum computer.

Clause 23. A non-transient computer readable medium comprising instructions which cause a computer, or hybrid quantum-classical computation system, to enact the method steps of any one of clauses 1 to 19.

## Claims

**1.** A method for time-dynamics simulation, TDS, of a quantum system on a quantum information processor with *n* qubits, the quantum information processor capable of executing quantum gates G = $\{G_0, \ldots, G_\eta\}$ on at least one of the *n* qubits, wherein at least one subset of the quantum gates, $g_\xi = \{g_0, \ldots, g_\mu\}$, is executable in parallel with an error independent of circuit depth, d, and the quantum system is described by a Hamiltonian, *H,* with a full-time time ordered evolution operator, $U_H(t_f, t_i) = \mathcal{T} e^{-i\int_{t_i}^{t_f} H\, ds}$ where $\mathcal{T}$ is a time ordering operator, the method comprising:

1) identifying an approximation, $U_A$, of the full-time time ordered evolution operator over a total evolution time, $T = t_f - t_i$, by:

a) decomposing the Hamiltonian, *H*, based on the, or at least one of the, at least one subset(s) of quantum gates, $g_\xi$, such that $H = H_0 + H_1$, wherein $H_0$ has a full-time time ordered evolution operator, $U_{H0}$, that is implementable with the subset of gates $g_\xi$ with an error independent of circuit depth and the time evolution of

$H_1$ in the interaction picture is given by $\tilde{H}_1 = UH_0(t_i, t)H_1U_{H0}(t, t_i)$ which has an associated full-time time ordered evolution operator, $U_{\tilde{H}1}(t_f, t_i)$, that is not implementable with only the subset of gates $g_\xi$ with an error independent of circuit depth;

b) splitting the total evolution time, $T$, of the full-time time evolution operator of $\tilde{H}_1$, $U_{H1}(T + t_i, t_i)$, into $N$ slices of size $T/N$ having the form $U_{\tilde{H}1}(T + t_i, t_i) = \prod_{k=0}^{N-1} U_{\tilde{H}_1}\left((k+1)\frac{T}{N} + t_i, k\frac{T}{N} + t_i\right)$ wherein the slices each correspond to a time ordered evolution operator, $U_{\tilde{H}_1}\left((k+1)\frac{T}{N} + t_i, k\frac{T}{N} + t_i\right)$, generated from $\tilde{H}_1$;

c) approximating the time ordered evolution operator of each slice, $U_{\tilde{H}_1}\left((k+1)\frac{T}{N} + t_i, k\frac{T}{N} + t_i\right)$, by further decomposing $\tilde{H}_1$ based on the, or at least one of the, at least one subset(s) of quantum gates, $g_\xi$;

d) splitting up the time ordered evolution operator of each slice, $U_{\tilde{H}_1}\left((k+1)\frac{T}{N} + t_i, k\frac{T}{N} + t_i\right)$, using a product of exponentials based on the decomposition of $\tilde{H}_1$ from step 1c);

e) combining the results of steps 1a) to 1d) to provide the approximation, $U_A$, of the full-time time ordered evolution operator over the total evolution time, and

2) performing a TDS of the quantum system by:

a) initialising a state of the quantum system on the quantum information processor;

b) converting the approximation of the full-time time ordered evolution operator, $U_A$, into a series of quantum gates to operate on at least one of the $n$ qubits of the quantum information processor;

c) executing the series of quantum gates on the quantum information processor to time evolve the state of the quantum system; and

d) performing a measurement on at least one of the $n$ qubits of the quantum information processor to obtain a result of the TDS.

**2.** The method according to claim 1, wherein decomposing the Hamiltonian, $H$, in step 1a) comprises decomposing $H$ based on the at least one subset(s) of quantum gates, $g_\xi$, such that $H = \sum_\xi H_0^\xi + H_1$, wherein each $H_0^\xi$ has a full-time time ordered evolution operator, $U_{H_0}^\xi$, that is implementable with one of the at least one subset(s) of quantum gates, $g_\xi$ with an error independent of circuit depth, and $H_1$ has a full-time time ordered evolution operator, $U_{H1}$, that is not implementable with any one of the at least one subset(s) of quantum gates, $g_\xi$, with an error independent of circuit depth.

**3.** The method according to claim 1 or claim 2, wherein identifying $U_A$ in step 1) further comprises:

f) performing steps 1a) to 1e) for each of the at least one subset(s) of gates, $g_\xi = \{g_0, ..., g_\mu)$. to obtain an approximation of the full-time time evolution operator for each subset of gates, $U_{A,g\xi}$;

g) evaluating how efficient it is to implement each approximation of the full-time time evolution operator, $U_{A,g\xi}$, by calculating a circuit depth, $d_{A,g\xi}$, required to implement each $U_{A,g\xi}$; and

h) identifying a $U_{A,g\xi}$, with the lowest circuit depth $d_{A,g\xi}$.

**4.** The method according to any one of the preceding claims, wherein further decomposing $\tilde{H}_1$ in step 1c) comprises partitioning $H_1$ according to its summands, $H_{1,\gamma}$, based on the, or at least one of the, at least one subset(s) of quantum gates $g_\xi$ and $\tilde{H}_1 = U_{H0}(t_i, t)(\sum_\gamma H_{1,\gamma})U_{H0}(t, t_i)$ to arrive at an associated decomposition of $\tilde{H}_{1,decomp} = \sum_\gamma \tilde{H}_{1,\gamma}$; optionally wherein the product of exponentials used in step 1d) to split up the time ordered evolution operator of each slice, $U_{\tilde{H}_1}\left((k+1)\frac{T}{N} + t_i, k\frac{T}{N} + t_i\right)$, is

$$\prod_{\gamma}^{\Gamma} U_{-H_0}\left(\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right)\right).$$

**5.** The method according to claim 4, wherein further decomposing $\tilde{H}_1$ in step 1c) further comprises:

i) identifying a set, $H_\Delta = \{\tilde{H}_{1,decomp}^{0}, \ldots, \tilde{H}_{1,decomp}^{\nu}\}$, comprising at least two decompositions of $\tilde{H}_1$; and
ii) using each decomposition in the set $H_\Delta$ to generate an approximation of the time ordered evolution operator of each slice for that decomposition,
the method further comprising:

performing step 1d) for each approximation of the time ordered evolution operator of each slice corresponding to each decomposition in the set $H_\Delta$;

performing step 1e) for each decomposition, $\tilde{H}_{1,decomp}^{\nu}$, in the set $H_\Delta$, to identify a corresponding approximation of the full-time time evolution operator $U_A^{\nu}$,

and, after step 1e):

i) evaluating how efficient it is to implement each $U_A^{\nu}$ by calculating a circuit depth $d_A^{\nu}$ required to implement each $U_A^{\nu}$; and

ii) identifying which $U_A^{\nu}$ has the lowest circuit depth $d_A^{\nu}$.

**6.** The method according to claim 4 or claim 5, wherein identifying $U_A$ in step 1) further comprises:

j) using the $U_A$ from step 1e) as a first order Trotter seed, $U_{A,Seed}$, to determine at least one higher-order Trotter approximation of the time evolution operator, $U_{A,2k}$, using a 2$k$-order product formula;
k) evaluating how efficient it is to implement $U_{A,Seed}$ and each at least one higher-order Trotter approximation of the full-time time evolution operator, $U_{A,2k}$, by calculating circuit depths $d_{A,Seed}$ and $d_{A,2k}$ required to implement $U_{A,Seed}$ and each $U_{A,2k}$ respectively; and
m) identifying a $U_{A,Seed}$ or $U_{A,2k}$ with the lowest circuit depth, $d_{A,Seed}$ or $d_{A,2k}$;

optionally further comprising:

n) performing steps 1j) to 1m) again for at least one of the one or more further decompositions $\tilde{H}_{1,decomp}^{\nu}$ in the set $H_\Delta$;

o) comparing the circuit depths, $d_{A,Seed}^{\nu}$ or $d_{A,2k}^{\nu}$, of all the identified $U_{A,Seed}^{\nu}$ or $U_{A,2k}^{\nu}$ from step 1n); and

p) identifying a $U_{A,Seed}^{\nu}$ or $U_{A,2k}^{\nu}$ with the lowest circuit depth, $d_{A,Seed}^{\nu}$ or $d_{A,2k}^{\nu}$.

**7.** The method according to any one of the preceding claims, wherein further decomposing $\tilde{H}_1$ in step 1c) further comprises decomposing the time ordered evolution operator of each slice, $U_{\tilde{H}_1}\left((k+1)\frac{T}{N}+t_i, k\frac{T}{N}+t_i\right)$, in terms of nested commutators $C_p(t_1, \ldots, t_p) = [\tilde{H}_1(t_1), [\ldots, \tilde{H}_1(t_p)]]$ of $\tilde{H}_1(t)$ at different times, $t_p$, within the/each slice; and/or wherein decomposing $\tilde{H}_1$ in step 1c) uses a p-order Magnus expansion, $\Omega^{[p]}(t, \delta t)$ where $t$ is the initial time of the slice and $\delta t = T/N$ is the size of the slice and the time ordered evolution operator of the slice can be written

$$U_{\tilde{H}_1}\left((k+1)\frac{T}{N}+t_i, k\frac{T}{N}+t_i\right)=U_{\tilde{H}_1}\left(t+\frac{T}{N}, t\right)=U_{\tilde{H}_1}(t+\delta t, t);$$

optionally wherein the time ordered evolution operator of each slice $U_{\tilde{H}1}(t+\delta t, t)$ is approximated using an exponential of the p-order Magnus expansion, $e^{(\Omega[p](t,\delta t))}$ defined using $\Omega^{[p]}(t,\delta t)=\sum_{j=1}^{p}\Omega_j(t,\delta t)$, wherein $\Omega_j(t, \delta t)$ is defined recursively as:

$$\Omega_n(t,\delta t)=-i\sum_{j=1}^{n-1}\frac{b_j}{j!}\sum_{k_1+\cdots+k_j=n-1}\int_t^{t+\delta t} ad\left[\Omega_{k_1}(\tau)\right]\left(\dots ad\left[\Omega_{k_j}(\tau)\right]\left(\tilde{H}_1\right)\right)d\tau$$

where $n \geq 1$, all indices in the sum satisfying $k_j \geq 1$, $b_j$ is the jth Bernoulli number, and $ad[A](B) = [A, B]$ is the commutator of $A$ and $B$, and further wherein $\Omega_n(t, \delta t)$ is approximated by computing a polynomial of order $(\delta t)^n$ such that

$$\Omega_n(t,\delta t)=\sum_{m=1}^{n}(\delta t)^m\sum_q f_{m,q}(t)O_q \equiv \sum_q^{r} F_q(t,\delta t)O_q$$

is a sum of time independent operators, $O_q$.

**8.** The method according to claim 7, wherein the product of exponentials used in step 1d) to split up the time ordered evolution operator of each slice, $U_{\tilde{H}1}(t + \delta t, t)$, is

$$\prod_{q=1}^{r} e^{F_q(t,\delta t)O_q}\prod_{q=r}^{1} e^{F_q(t,\delta t)O_q}$$

optionally wherein the product of exponentials used in step 1d) is a higher-order product formula constructed using a seed,

$$Seed=\prod_{q=1}^{r} e^{F_q(t,\delta t)O_q}\prod_{q=r}^{1} e^{F_q(t,\delta t)O_q},$$

optionally wherein the higher order-product formula is a $2\kappa$-order Suzuki formula, $S_{2\kappa}(\delta t)$ or $\tilde{S}_{2\kappa}(\delta t)$, defined recursively by:

$$S_{2\kappa}(\delta t)=S_{2\kappa-2}(s_\kappa\delta t)\,S_{2\kappa-2}\left((1-2s_\kappa)\delta t\right)S_{2\kappa-2}(s_\kappa\delta t),\ s_\kappa=1/\left(2-2^{\frac{1}{2\kappa-1}}\right),\text{ and } S_2=Seed;$$

and

$$\tilde{S}_{2\kappa}(\delta t)=\tilde{S}_{2\kappa-2}(u_\kappa\delta t)^2\,\tilde{S}_{2\kappa-2}\left((1-4u_\kappa)\delta t\right)\tilde{S}_{2\kappa-2}(u_\kappa\delta t)^2,\ u_\kappa=1/\left(4-4^{\frac{1}{2\kappa-1}}\right),\text{ and } \tilde{S}_2=Seed,$$

respectively.

**9.** The method according to claim 8, wherein step 1c) further comprises:

i) identifying a set of $\Lambda$ Magnus expansions, $\Omega^\Lambda = \{\Omega^{[p=1]}(t, \delta t), \dots, \Omega^{[p=\Lambda]}(t, \delta t)\}$ wherein $\Lambda \geq 2$; and

ii) using each Magnus expansion in the set $\Omega^\Lambda$ to generate an approximation of the time ordered evolution operator of each slice in terms of $\tilde{H}_{1,p}(t_p)$ at different times, $t_p$, within each slice,
the method further comprising:

performing step 1d) for each approximation of the time ordered evolution operator of each slice corresponding to each Magnus expansion in the set $\Omega^\Lambda$;
performing step 1e) for each Magnus expansion in the set $\Omega^\Lambda$ to identify a corresponding approximation of the full-time time evolution operator $U_A^\Lambda$,

and after step 1e):

i) for each Magnus expansion in the set $\Omega^\Lambda$, evaluating how efficient it is to implement each approximation of the time evolution operator, $U_A^\Lambda$, by calculating a circuit depth $d_A^\Lambda$ required to implement each $U_A^\Lambda$; and
ii) identifying a $U_A^\Lambda$ with the lowest circuit depth, $d_A^\Lambda$.

**10.** The method according to claim 9 as dependent on claims5 or claim6, comprising the steps:

$1\alpha$) performing step 1) according to the any one of claims 6 to 8 to identify an approximation of the full-time time evolution operator, $U_{A,\alpha}$, with an associated circuit depth, $d_{A,\alpha}$;
$1\beta$) performing step 1) according to claim 14 to identify an approximation of the full-time time evolution operator, $U_{A,\beta}$, with an associated circuit depth, $d_{A,\beta}$;

$1\varrho$) identifying whether $U_{A,\alpha}$ or $U_{A,\beta}$ has the lowest associated circuit depth and performing steps 2a) to 2d) using the $U_A$ having the lowest associated circuit depth.

**11.** The method according to claim 10, further comprising:

$1\tau$) before step $1\varrho$), approximating the full-time time evolution operator using a Trotter method, $U_{Tr}$, and calculating an associated circuit depth, $d_{Tr}$, and

wherein the step $1\varrho$) instead comprises identifying whether $U_{A,\alpha}$, $U_{A,\beta}$, or $U_{Tr}$ has the lowest associated circuit depth and performing steps 2a) to 2d) using the $U_A$ identified in step $1\varrho$).

**12.** The method according to claim 11, comprising the steps:

performing step $1\alpha$) or step $1\beta$) to identify an approximation of the full-time time evolution operator $U_{A,\chi}$ with associated circuit depth $d_{A,\chi}$;
performing step $1\tau$);

$1\varrho$) identifying whether $U_{A,\chi}$ or $U_{Tr}$ has the lowest associated circuit depth; and performing steps 2a) to 2d) using the $U_{A,\chi}$ or $U_{Tr}$ identified in step $1\varrho$) as $U_A$.

**13.** The method according to any one of the preceding claims, wherein the at least one subset of quantum gates implementable in parallel, $g_\xi$, is dependent on the connectivity and/or layout of the *n* qubits of the quantum information processor; and/or wherein the circuit depth(s) calculated: $d_{A,S\xi}$, $d_A^\nu$, $d_{A,Seed}$, $d_{A,2k}$, $d_A^\Lambda$, $d_{A,\alpha}$, and/or $d_{A,\beta}$, is a 2-qubit circuit depth.

**14.** A hybrid quantum-classical computation system configured to perform the method according to any one of the preceding claims comprising:

at least one quantum computer; and
at least one classical computer configured to provide control signals to the quantum computer, optionally wherein at least one classical computer is configured to perform step 1 and at least one quantum computer is configured to perform step 2; and/or wherein the at least one, or another, classical computer is configured to perform steps 2a), 2b), and 2d) with the at least one quantum computer.

**15.** A non-transient computer readable medium comprising instructions which cause a computer, or hybrid quantum-classical computation system, to enact the method steps of any one of claims 1 to 13.

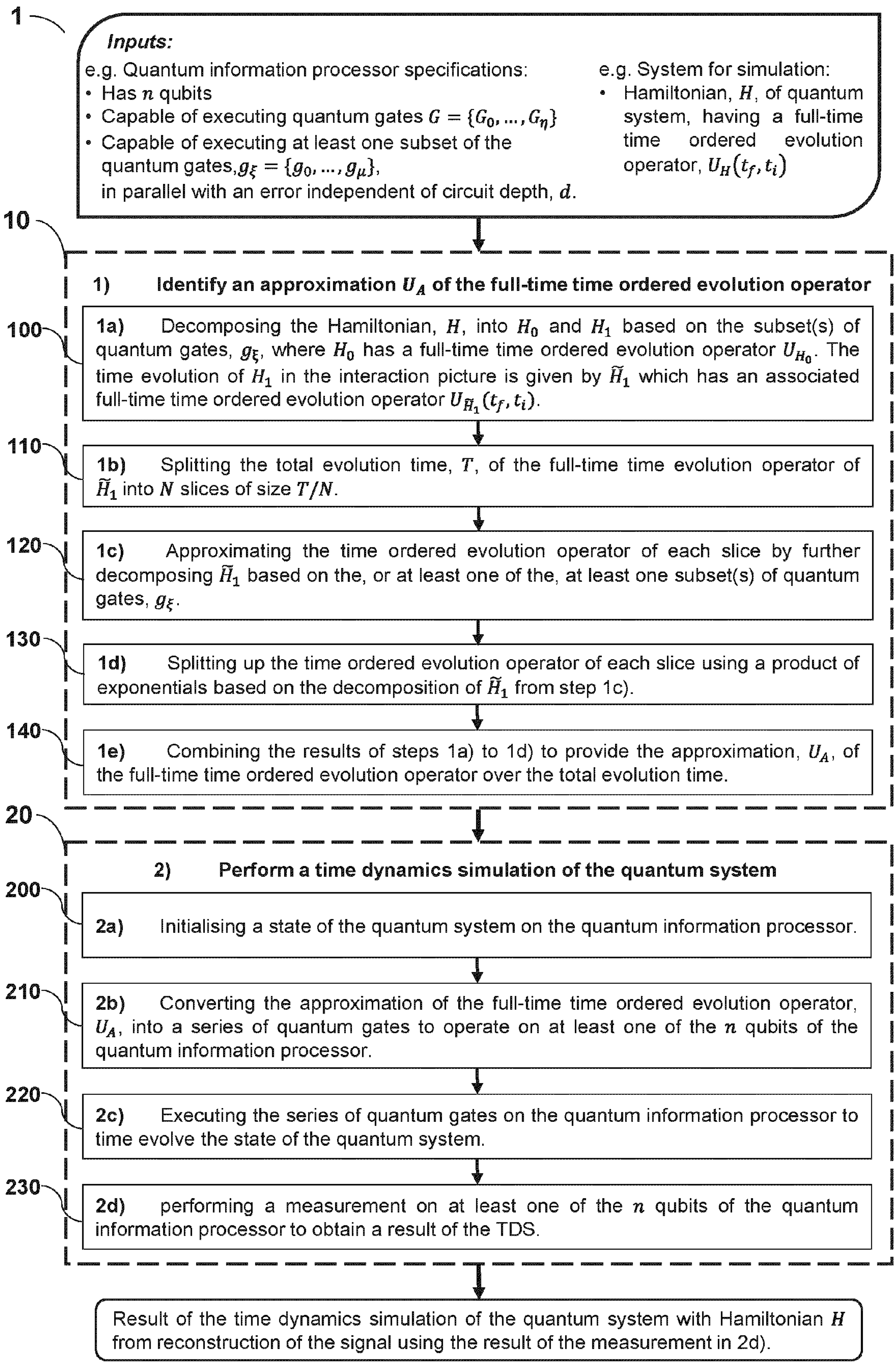
1
Inputs:
e.g. Quantum information processor specifications:
• Has $n$ qubits
• Capable of executing quantum gates $G = \{G_0, \ldots, G_\eta\}$
• Capable of executing at least one subset of the quantum gates, $g_\xi = \{g_0, \ldots, g_\mu\}$, in parallel with an error independent of circuit depth, $d$.
e.g. System for simulation:
• Hamiltonian, $H$, of quantum system, having a full-time time ordered evolution operator, $U_H(t_f, t_i)$
10
1) Identify an approximation $U_A$ of the full-time time ordered evolution operator
100
1a) Decomposing the Hamiltonian, $H$, into $H_0$ and $H_1$ based on the subset(s) of quantum gates, $g_\xi$, where $H_0$ has a full-time time ordered evolution operator $U_{H_0}$. The time evolution of $H_1$ in the interaction picture is given by $\widetilde{H}_1$ which has an associated full-time time ordered evolution operator $U_{\widetilde{H}_1}(t_f, t_i)$.
110
1b) Splitting the total evolution time, $T$, of the full-time time evolution operator of $\widetilde{H}_1$ into $N$ slices of size $T/N$.
120
1c) Approximating the time ordered evolution operator of each slice by further decomposing $\widetilde{H}_1$ based on the, or at least one of the, at least one subset(s) of quantum gates, $g_\xi$.
130
1d) Splitting up the time ordered evolution operator of each slice using a product of exponentials based on the decomposition of $\widetilde{H}_1$ from step 1c).
140
1e) Combining the results of steps 1a) to 1d) to provide the approximation, $U_A$, of the full-time time ordered evolution operator over the total evolution time.
20
2) Perform a time dynamics simulation of the quantum system
200
2a) Initialising a state of the quantum system on the quantum information processor.
210
2b) Converting the approximation of the full-time time ordered evolution operator, $U_A$, into a series of quantum gates to operate on at least one of the $n$ qubits of the quantum information processor.
220
2c) Executing the series of quantum gates on the quantum information processor to time evolve the state of the quantum system.
230
2d) performing a measurement on at least one of the $n$ qubits of the quantum information processor to obtain a result of the TDS.
Result of the time dynamics simulation of the quantum system with Hamiltonian $H$ from reconstruction of the signal using the result of the measurement in 2d).

Figure 1

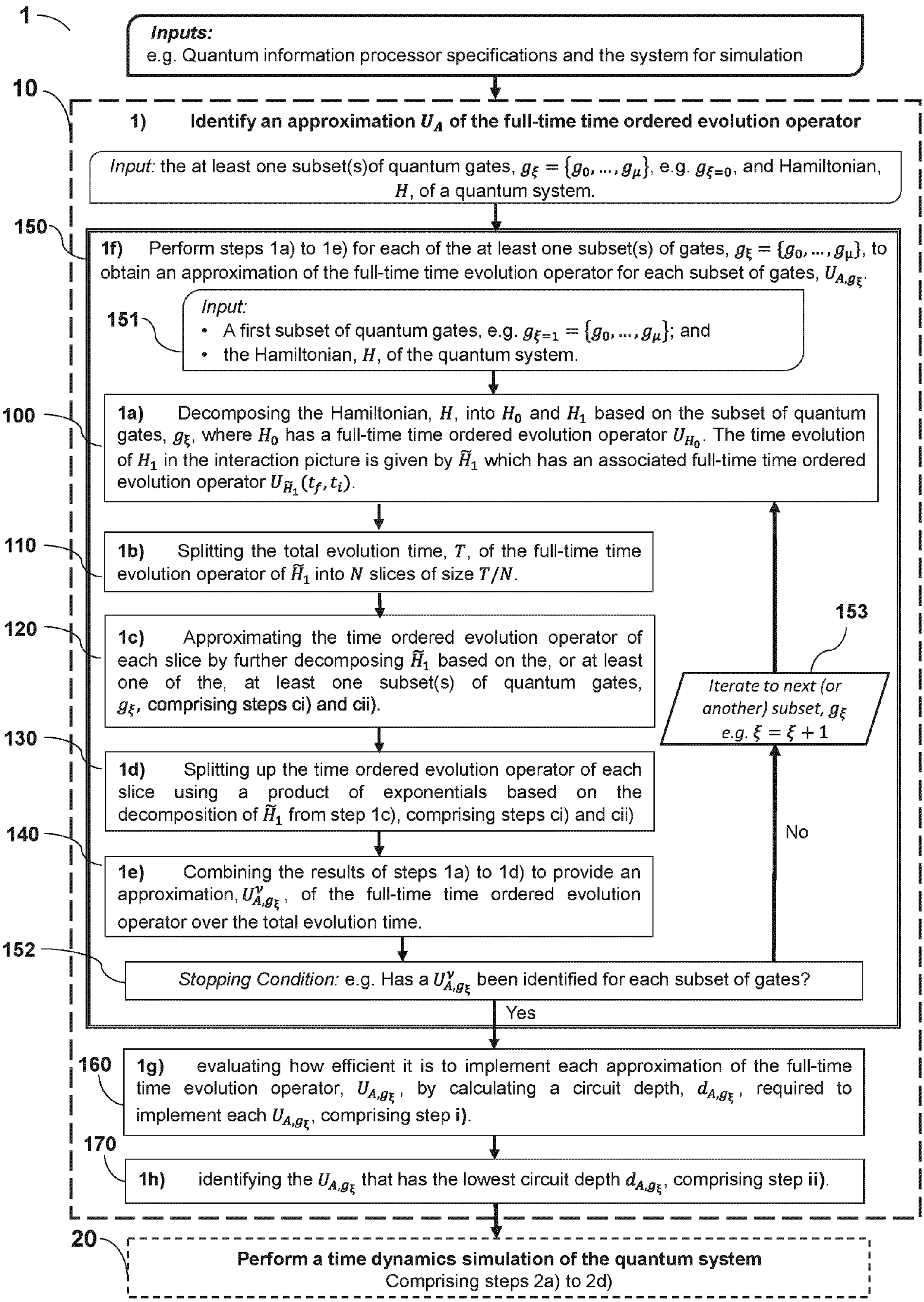
1
Inputs:
e.g. Quantum information processor specifications and the system for simulation
10
1) Identify an approximation $U_A$ of the full-time time ordered evolution operator
Input: the at least one subset(s)of quantum gates, $g_\xi = \{g_0, \ldots, g_\mu\}$, e.g. $g_{\xi=0}$, and Hamiltonian, $H$, of a quantum system.
150
1f) Perform steps 1a) to 1e) for each of the at least one subset(s) of gates, $g_\xi = \{g_0, \ldots, g_\mu\}$, to obtain an approximation of the full-time time evolution operator for each subset of gates, $U_{A,g_\xi}$.
151
Input:
• A first subset of quantum gates, e.g. $g_{\xi=1} = \{g_0, \ldots, g_\mu\}$; and
• the Hamiltonian, $H$, of the quantum system.
100
1a) Decomposing the Hamiltonian, $H$, into $H_0$ and $H_1$ based on the subset of quantum gates, $g_\xi$, where $H_0$ has a full-time time ordered evolution operator $U_{H_0}$. The time evolution of $H_1$ in the interaction picture is given by $\tilde{H}_1$ which has an associated full-time time ordered evolution operator $U_{\tilde{H}_1}(t_f, t_i)$.
110
1b) Splitting the total evolution time, $T$, of the full-time time evolution operator of $\tilde{H}_1$ into $N$ slices of size $T/N$.
120
1c) Approximating the time ordered evolution operator of each slice by further decomposing $\tilde{H}_1$ based on the, or at least one of the, at least one subset(s) of quantum gates, $g_\xi$, comprising steps ci) and cii).
130
1d) Splitting up the time ordered evolution operator of each slice using a product of exponentials based on the decomposition of $\tilde{H}_1$ from step 1c), comprising steps ci) and cii)
140
1e) Combining the results of steps 1a) to 1d) to provide an approximation, $U^{v}_{A,g_\xi}$, of the full-time time ordered evolution operator over the total evolution time.
153
Iterate to next (or another) subset, $g_\xi$ e.g. $\xi = \xi + 1$
No
152
Stopping Condition: e.g. Has a $U^{v}_{A,g_\xi}$ been identified for each subset of gates?
Yes
160
1g) evaluating how efficient it is to implement each approximation of the full-time time evolution operator, $U_{A,g_\xi}$, by calculating a circuit depth, $d_{A,g_\xi}$, required to implement each $U_{A,g_\xi}$, comprising step i).
170
1h) identifying the $U_{A,g_\xi}$ that has the lowest circuit depth $d_{A,g_\xi}$, comprising step ii).
20
Perform a time dynamics simulation of the quantum system
Comprising steps 2a) to 2d)

Figure 2

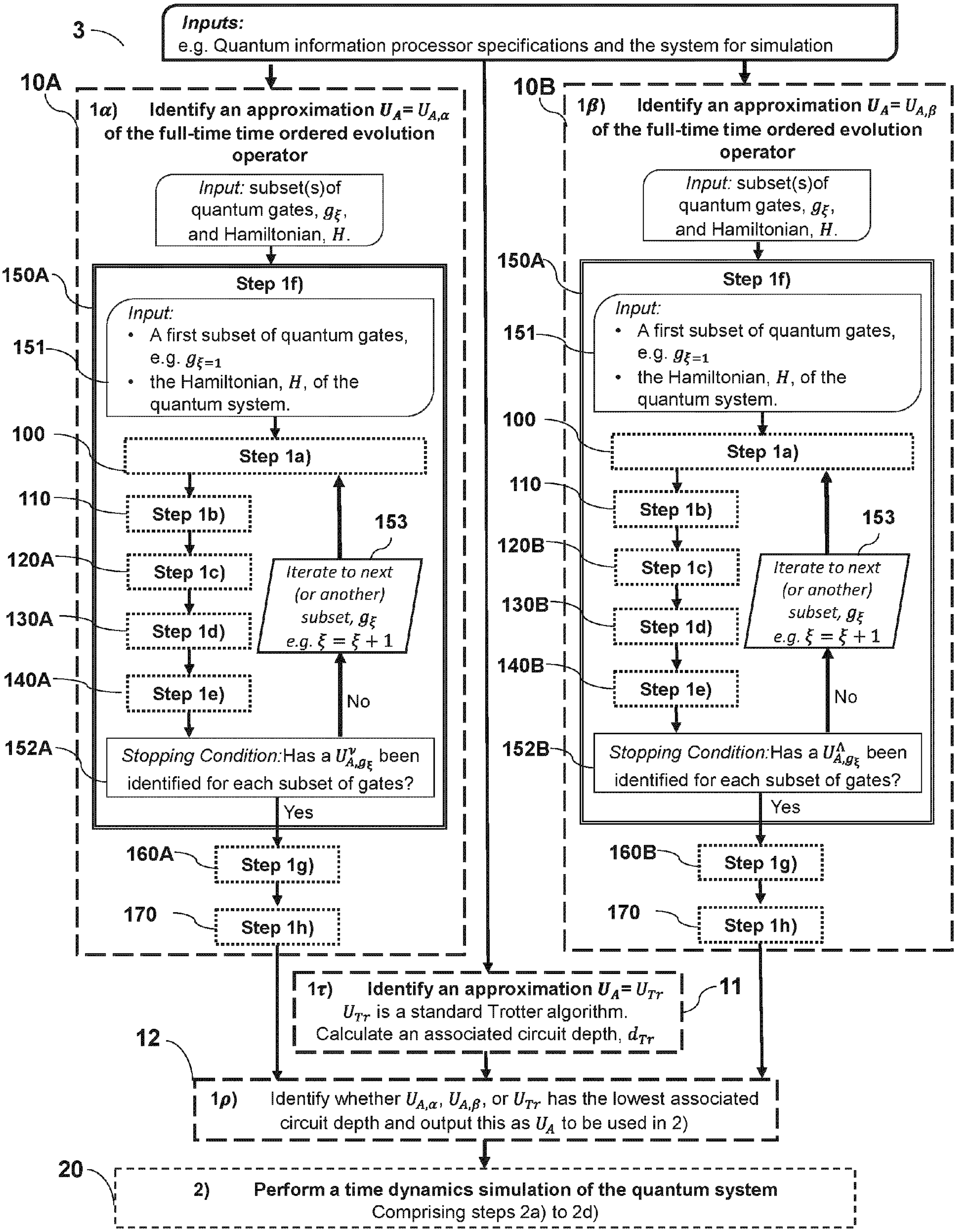
3
Inputs:
e.g. Quantum information processor specifications and the system for simulation
10A
1α) Identify an approximation $U_A = U_{A,\alpha}$ of the full-time time ordered evolution operator
Input: subset(s)of quantum gates, $g_\xi$, and Hamiltonian, $H$.
150A
Step 1f)
151
Input:
• A first subset of quantum gates, e.g. $g_{\xi=1}$
• the Hamiltonian, $H$, of the quantum system.
100
Step 1a)
110
Step 1b)
153
120A
Step 1c)
Iterate to next (or another) subset, $g_\xi$ e.g. $\xi = \xi + 1$
130A
Step 1d)
140A
Step 1e)
No
152A
Stopping Condition: Has a $U^{\nu}_{A,g_\xi}$ been identified for each subset of gates?
Yes
160A
Step 1g)
170
Step 1h)
10B
1β) Identify an approximation $U_A = U_{A,\beta}$ of the full-time time ordered evolution operator
Input: subset(s)of quantum gates, $g_\xi$, and Hamiltonian, $H$.
150A
Step 1f)
151
Input:
• A first subset of quantum gates, e.g. $g_{\xi=1}$
• the Hamiltonian, $H$, of the quantum system.
100
Step 1a)
110
Step 1b)
153
120B
Step 1c)
Iterate to next (or another) subset, $g_\xi$ e.g. $\xi = \xi + 1$
130B
Step 1d)
140B
Step 1e)
No
152B
Stopping Condition: Has a $U^{\Lambda}_{A,g_\xi}$ been identified for each subset of gates?
Yes
160B
Step 1g)
170
Step 1h)
1τ) Identify an approximation $U_A = U_{Tr}$
$U_{Tr}$ is a standard Trotter algorithm.
Calculate an associated circuit depth, $d_{Tr}$
11
12
1ρ) Identify whether $U_{A,\alpha}$, $U_{A,\beta}$, or $U_{Tr}$ has the lowest associated circuit depth and output this as $U_A$ to be used in 2)
20
2) Perform a time dynamics simulation of the quantum system
Comprising steps 2a) to 2d)

Figure 3A

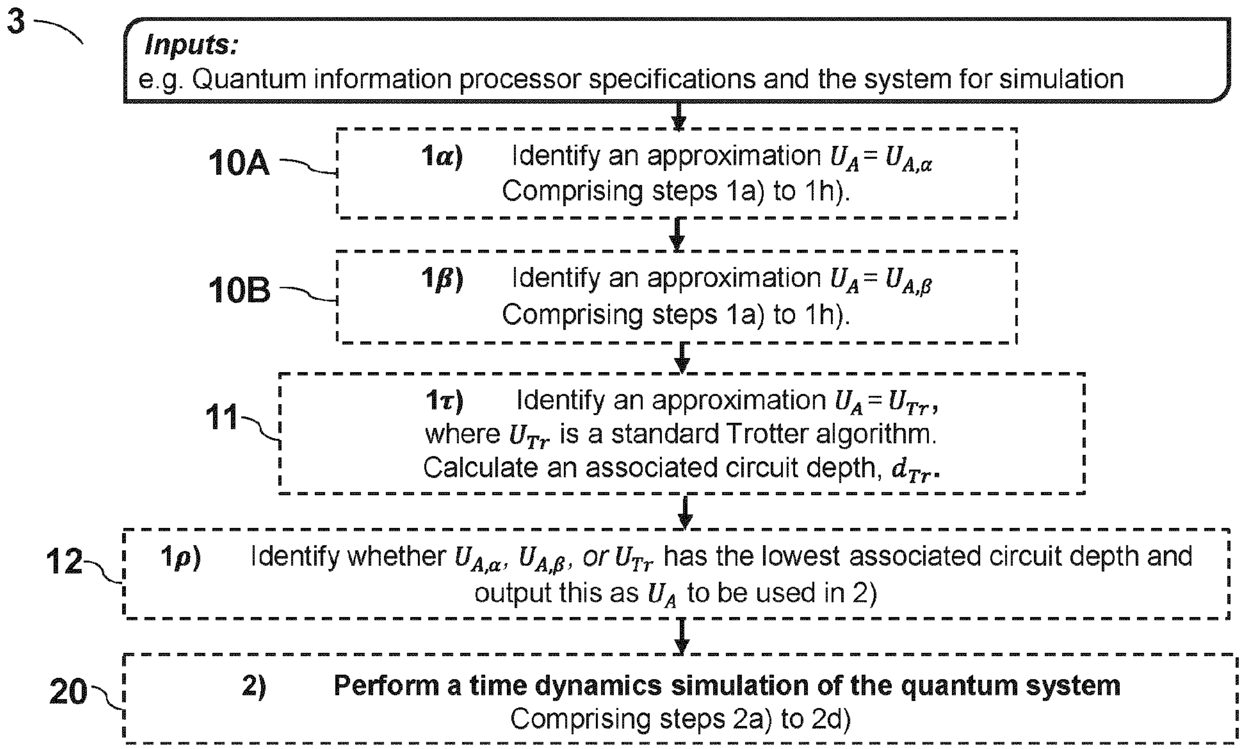
3
Inputs:
e.g. Quantum information processor specifications and the system for simulation
10A
1α) Identify an approximation $U_A = U_{A,\alpha}$
Comprising steps 1a) to 1h).
10B
1β) Identify an approximation $U_A = U_{A,\beta}$
Comprising steps 1a) to 1h).
11
1τ) Identify an approximation $U_A = U_{Tr}$,
where $U_{Tr}$ is a standard Trotter algorithm.
Calculate an associated circuit depth, $d_{Tr}$.
12
1ρ) Identify whether $U_{A,\alpha}$, $U_{A,\beta}$, or $U_{Tr}$ has the lowest associated circuit depth and
output this as $U_A$ to be used in 2)
20
2) Perform a time dynamics simulation of the quantum system
Comprising steps 2a) to 2d)

Figure 3B

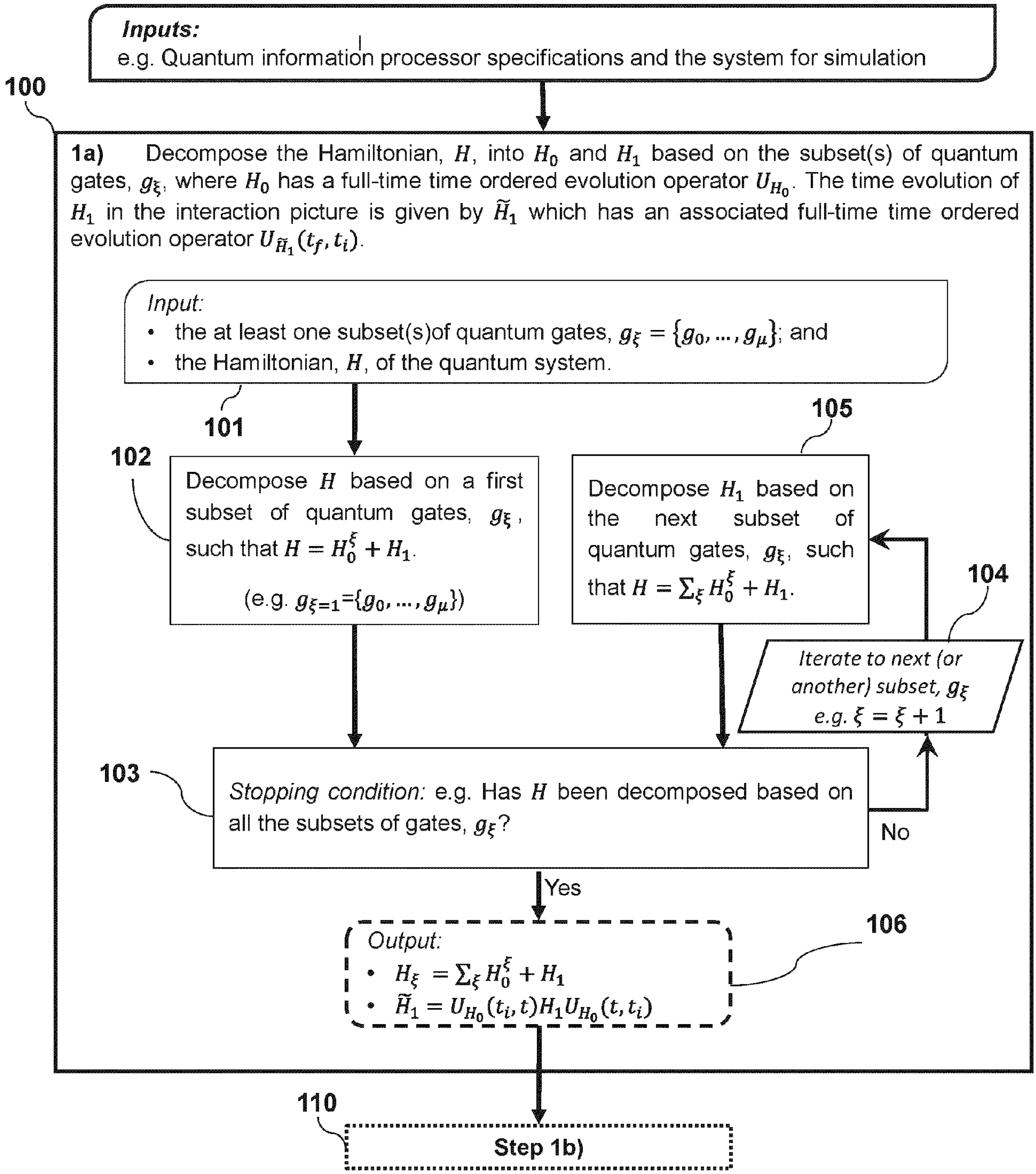
Inputs:
e.g. Quantum information processor specifications and the system for simulation
100
1a) Decompose the Hamiltonian, $H$, into $H_0$ and $H_1$ based on the subset(s) of quantum gates, $g_\xi$, where $H_0$ has a full-time time ordered evolution operator $U_{H_0}$. The time evolution of $H_1$ in the interaction picture is given by $\tilde{H}_1$ which has an associated full-time time ordered evolution operator $U_{\tilde{H}_1}(t_f, t_i)$.
Input:
• the at least one subset(s)of quantum gates, $g_\xi = \{g_0, \ldots, g_\mu\}$; and
• the Hamiltonian, $H$, of the quantum system.
101
102
Decompose $H$ based on a first subset of quantum gates, $g_\xi$, such that $H = H_0^\xi + H_1$.
(e.g. $g_{\xi=1}$={$g_0, \ldots, g_\mu$})
105
Decompose $H_1$ based on the next subset of quantum gates, $g_\xi$, such that $H = \sum_\xi H_0^\xi + H_1$.
104
Iterate to next (or another) subset, $g_\xi$
e.g. $\xi = \xi + 1$
103
Stopping condition: e.g. Has $H$ been decomposed based on all the subsets of gates, $g_\xi$?
No
Yes
106
Output:
• $H_\xi = \sum_\xi H_0^\xi + H_1$
• $\tilde{H}_1 = U_{H_0}(t_i, t) H_1 U_{H_0}(t, t_i)$
110
Step 1b)

Figure 4

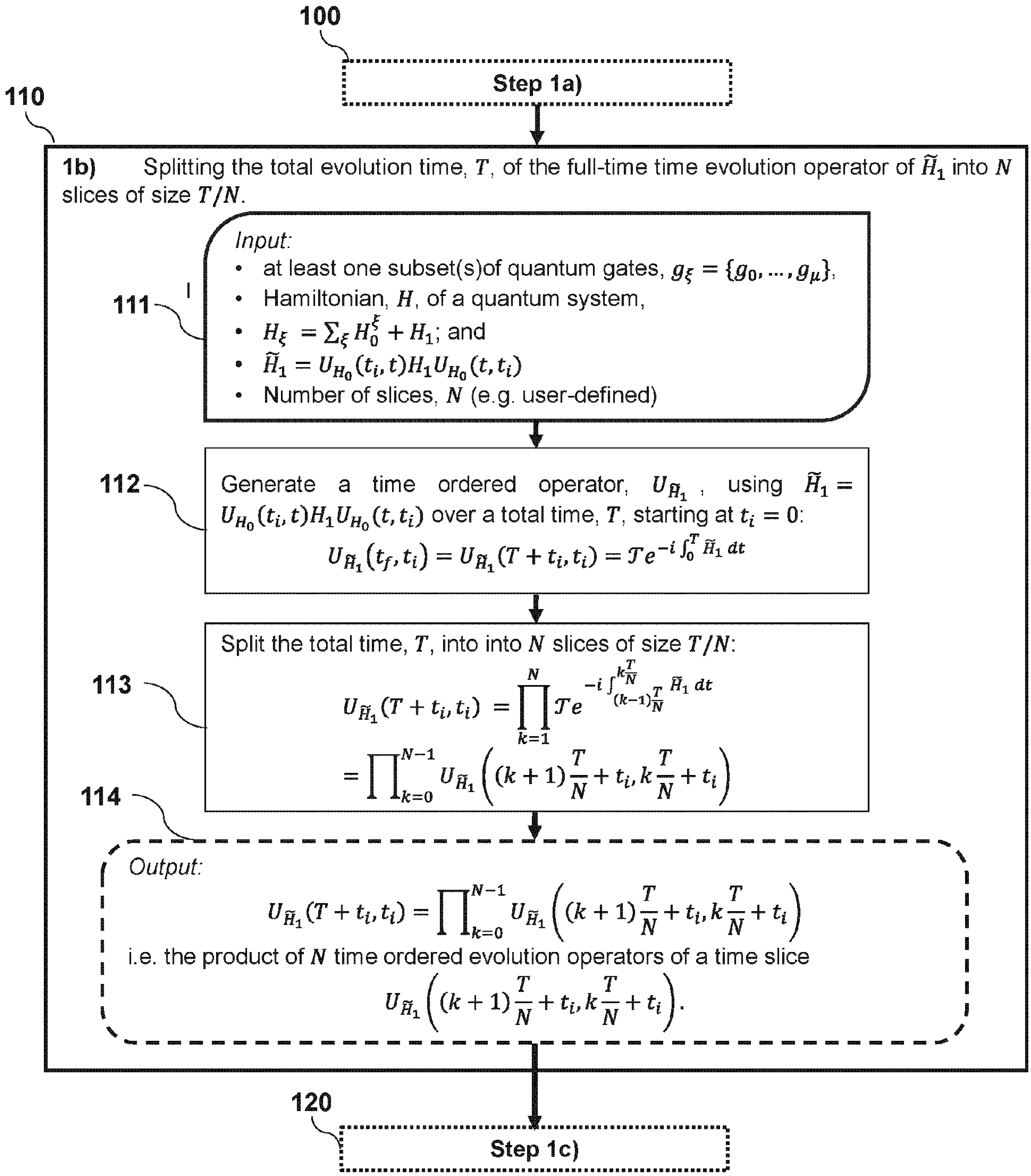
100
Step 1a)
110
1b) Splitting the total evolution time, $T$, of the full-time time evolution operator of $\widetilde{H}_1$ into $N$ slices of size $T/N$.
111
Input:
• at least one subset(s)of quantum gates, $g_\xi = \{g_0, \dots, g_\mu\}$,
• Hamiltonian, $H$, of a quantum system,
• $H_\xi = \sum_\xi H_0^\xi + H_1$; and
• $\widetilde{H}_1 = U_{H_0}(t_i, t) H_1 U_{H_0}(t, t_i)$
• Number of slices, $N$ (e.g. user-defined)
112
Generate a time ordered operator, $U_{\widetilde{H}_1}$, using $\widetilde{H}_1 = U_{H_0}(t_i, t) H_1 U_{H_0}(t, t_i)$ over a total time, $T$, starting at $t_i = 0$:
$U_{\widetilde{H}_1}(t_f, t_i) = U_{\widetilde{H}_1}(T + t_i, t_i) = \mathcal{T} e^{-i \int_0^T \widetilde{H}_1 \, dt}$
113
Split the total time, $T$, into into $N$ slices of size $T/N$:
$U_{\widetilde{H}_1}(T + t_i, t_i) = \prod_{k=1}^{N} \mathcal{T} e^{-i \int_{(k-1)\frac{T}{N}}^{k\frac{T}{N}} \widetilde{H}_1 \, dt}$
$= \prod_{k=0}^{N-1} U_{\widetilde{H}_1}\left((k+1)\frac{T}{N} + t_i, k\frac{T}{N} + t_i\right)$
114
Output:
$U_{\widetilde{H}_1}(T + t_i, t_i) = \prod_{k=0}^{N-1} U_{\widetilde{H}_1}\left((k+1)\frac{T}{N} + t_i, k\frac{T}{N} + t_i\right)$
i.e. the product of $N$ time ordered evolution operators of a time slice
$U_{\widetilde{H}_1}\left((k+1)\frac{T}{N} + t_i, k\frac{T}{N} + t_i\right)$.
120
Step 1c)

Figure 5

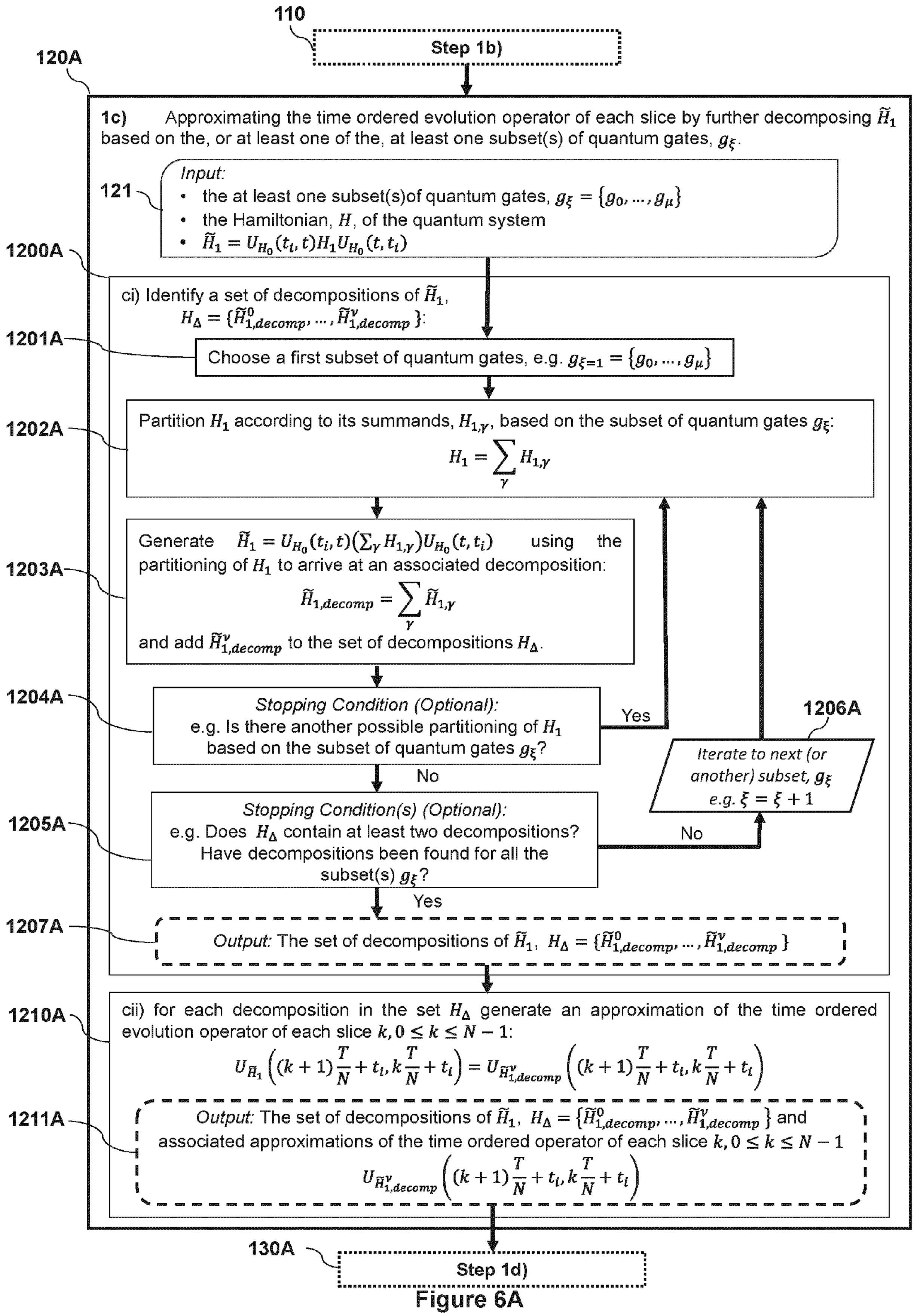
110
Step 1b)
120A
1c) Approximating the time ordered evolution operator of each slice by further decomposing $\widetilde{H}_1$ based on the, or at least one of the, at least one subset(s) of quantum gates, $g_\xi$.
121
Input:
• the at least one subset(s)of quantum gates, $g_\xi = \{g_0, \dots, g_\mu\}$
• the Hamiltonian, $H$, of the quantum system
• $\widetilde{H}_1 = U_{H_0}(t_i, t) H_1 U_{H_0}(t, t_i)$
1200A
ci) Identify a set of decompositions of $\widetilde{H}_1$, $H_\Delta = \{\widetilde{H}^0_{1,decomp}, \dots, \widetilde{H}^\nu_{1,decomp}\}$:
1201A
Choose a first subset of quantum gates, e.g. $g_{\xi=1} = \{g_0, \dots, g_\mu\}$
1202A
Partition $H_1$ according to its summands, $H_{1,\gamma}$, based on the subset of quantum gates $g_\xi$: $H_1 = \sum_\gamma H_{1,\gamma}$
1203A
Generate $\widetilde{H}_1 = U_{H_0}(t_i, t)(\sum_\gamma H_{1,\gamma}) U_{H_0}(t, t_i)$ using the partitioning of $H_1$ to arrive at an associated decomposition: $\widetilde{H}_{1,decomp} = \sum_\gamma \widetilde{H}_{1,\gamma}$
and add $\widetilde{H}^\nu_{1,decomp}$ to the set of decompositions $H_\Delta$.
1204A
Stopping Condition (Optional):
e.g. Is there another possible partitioning of $H_1$ based on the subset of quantum gates $g_\xi$?
Yes
No
1206A
Iterate to next (or another) subset, $g_\xi$ e.g. $\xi = \xi + 1$
1205A
Stopping Condition(s) (Optional):
e.g. Does $H_\Delta$ contain at least two decompositions? Have decompositions been found for all the subset(s) $g_\xi$?
No
Yes
1207A
Output: The set of decompositions of $\widetilde{H}_1$, $H_\Delta = \{\widetilde{H}^0_{1,decomp}, \dots, \widetilde{H}^\nu_{1,decomp}\}$
1210A
cii) for each decomposition in the set $H_\Delta$ generate an approximation of the time ordered evolution operator of each slice $k, 0 \le k \le N-1$:
$U_{\widetilde{H}_1}\left((k+1)\frac{T}{N} + t_i, k\frac{T}{N} + t_i\right) = U_{\widetilde{H}^\nu_{1,decomp}}\left((k+1)\frac{T}{N} + t_i, k\frac{T}{N} + t_i\right)$
1211A
Output: The set of decompositions of $\widetilde{H}_1$, $H_\Delta = \{\widetilde{H}^0_{1,decomp}, \dots, \widetilde{H}^\nu_{1,decomp}\}$ and associated approximations of the time ordered operator of each slice $k, 0 \le k \le N-1$
$U_{\widetilde{H}^\nu_{1,decomp}}\left((k+1)\frac{T}{N} + t_i, k\frac{T}{N} + t_i\right)$
130A
Step 1d)

Figure 6A

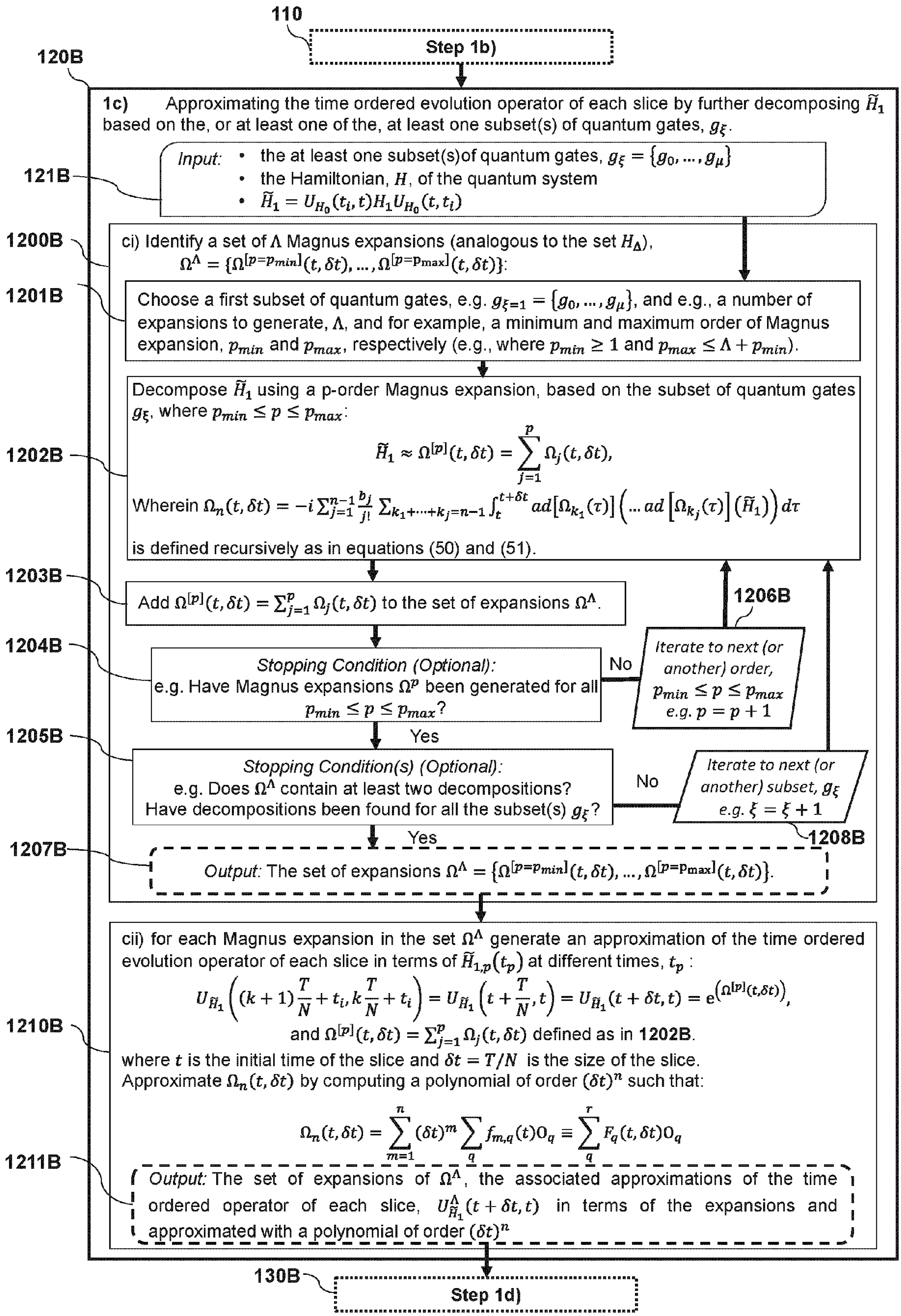
110
Step 1b)
120B
1c) Approximating the time ordered evolution operator of each slice by further decomposing $\widetilde{H}_1$ based on the, or at least one of the, at least one subset(s) of quantum gates, $g_\xi$.
121B
Input:
• the at least one subset(s)of quantum gates, $g_\xi = \{g_0, \dots, g_\mu\}$
• the Hamiltonian, $H$, of the quantum system
• $\widetilde{H}_1 = U_{H_0}(t_i, t) H_1 U_{H_0}(t, t_i)$
1200B
ci) Identify a set of $\Lambda$ Magnus expansions (analogous to the set $H_\Lambda$), $\Omega^\Lambda = \{\Omega^{[p=p_{min}]}(t, \delta t), \dots, \Omega^{[p=p_{max}]}(t, \delta t)\}$:
1201B
Choose a first subset of quantum gates, e.g. $g_{\xi=1} = \{g_0, \dots, g_\mu\}$, and e.g., a number of expansions to generate, $\Lambda$, and for example, a minimum and maximum order of Magnus expansion, $p_{min}$ and $p_{max}$, respectively (e.g., where $p_{min} \geq 1$ and $p_{max} \leq \Lambda + p_{min}$).
1202B
Decompose $\widetilde{H}_1$ using a p-order Magnus expansion, based on the subset of quantum gates $g_\xi$, where $p_{min} \leq p \leq p_{max}$:
$$\widetilde{H}_1 \approx \Omega^{[p]}(t, \delta t) = \sum_{j=1}^{p} \Omega_j(t, \delta t),$$
Wherein $\Omega_n(t, \delta t) = -i \sum_{j=1}^{n-1} \frac{b_j}{j!} \sum_{k_1 + \dots + k_j = n-1} \int_t^{t+\delta t} ad[\Omega_{k_1}(\tau)] \left( \dots ad\left[\Omega_{k_j}(\tau)\right] (\widetilde{H}_1) \right) d\tau$
is defined recursively as in equations (50) and (51).
1203B
Add $\Omega^{[p]}(t, \delta t) = \sum_{j=1}^{p} \Omega_j(t, \delta t)$ to the set of expansions $\Omega^\Lambda$.
1206B
1204B
Stopping Condition (Optional):
e.g. Have Magnus expansions $\Omega^p$ been generated for all $p_{min} \leq p \leq p_{max}$?
No
Iterate to next (or another) order, $p_{min} \leq p \leq p_{max}$ e.g. $p = p + 1$
Yes
1205B
Stopping Condition(s) (Optional):
e.g. Does $\Omega^\Lambda$ contain at least two decompositions?
Have decompositions been found for all the subset(s) $g_\xi$?
No
Iterate to next (or another) subset, $g_\xi$ e.g. $\xi = \xi + 1$
1208B
Yes
1207B
Output: The set of expansions $\Omega^\Lambda = \{\Omega^{[p=p_{min}]}(t, \delta t), \dots, \Omega^{[p=p_{max}]}(t, \delta t)\}$.
1210B
cii) for each Magnus expansion in the set $\Omega^\Lambda$ generate an approximation of the time ordered evolution operator of each slice in terms of $\widetilde{H}_{1,p}(t_p)$ at different times, $t_p$ :
$$U_{\widetilde{H}_1}\left((k+1)\frac{T}{N} + t_i, k\frac{T}{N} + t_i\right) = U_{\widetilde{H}_1}\left(t + \frac{T}{N}, t\right) = U_{\widetilde{H}_1}(t + \delta t, t) = e^{\left(\Omega^{[p]}(t, \delta t)\right)},$$
and $\Omega^{[p]}(t, \delta t) = \sum_{j=1}^{p} \Omega_j(t, \delta t)$ defined as in **1202B**.
where $t$ is the initial time of the slice and $\delta t = T/N$ is the size of the slice.
Approximate $\Omega_n(t, \delta t)$ by computing a polynomial of order $(\delta t)^n$ such that:
$$\Omega_n(t, \delta t) = \sum_{m=1}^{n} (\delta t)^m \sum_q f_{m,q}(t) O_q \equiv \sum_q^{r} F_q(t, \delta t) O_q$$
1211B
Output: The set of expansions of $\Omega^\Lambda$, the associated approximations of the time ordered operator of each slice, $U_{\widetilde{H}_1}^{\Lambda}(t + \delta t, t)$ in terms of the expansions and approximated with a polynomial of order $(\delta t)^n$
130B
Step 1d)

Figure 6B

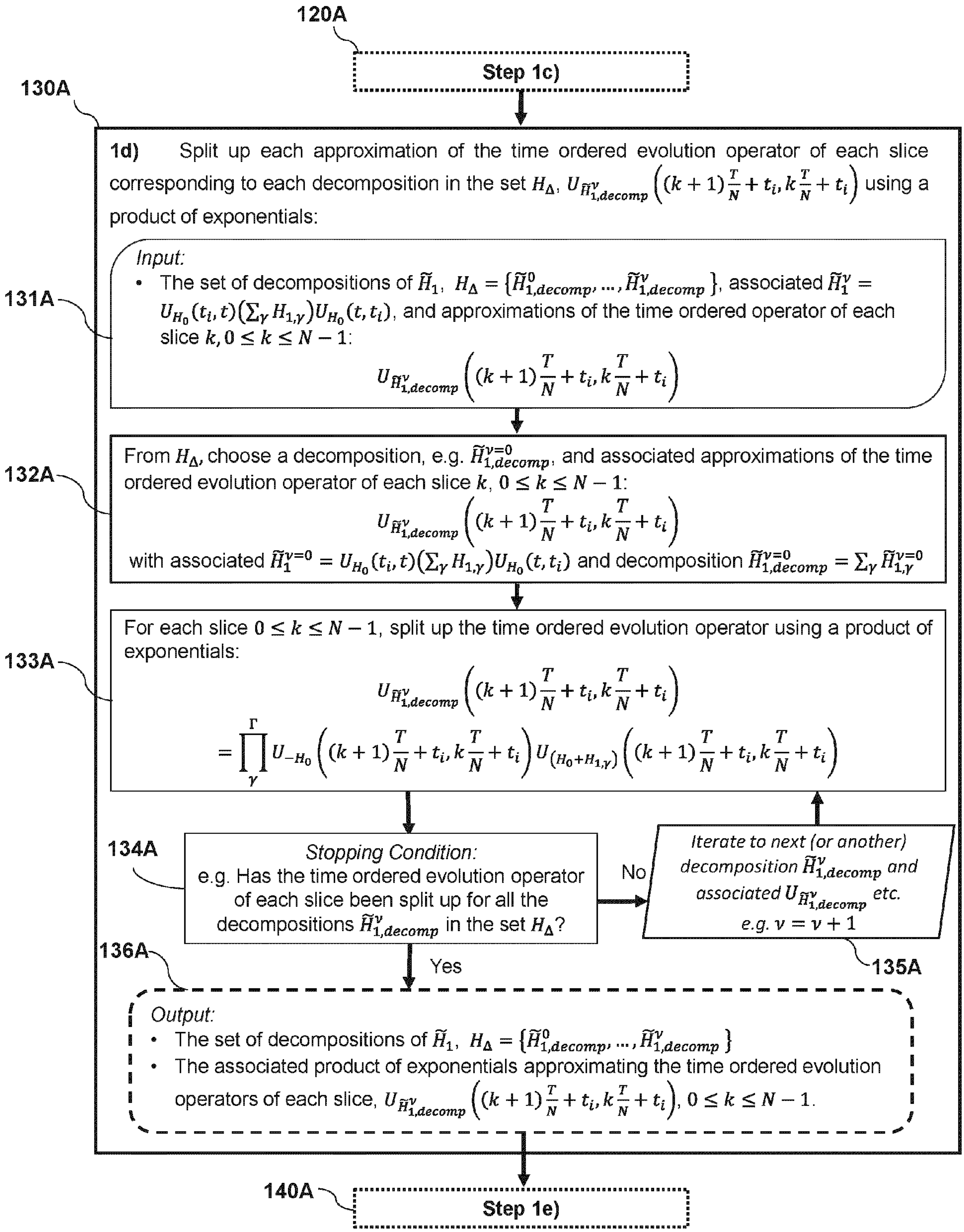
120A
Step 1c)
130A
1d) Split up each approximation of the time ordered evolution operator of each slice corresponding to each decomposition in the set $H_\Delta$, $U_{\tilde{H}^{\nu}_{1,decomp}}\left((k+1)\frac{T}{N}+t_i, k\frac{T}{N}+t_i\right)$ using a product of exponentials:
131A
Input:
• The set of decompositions of $\tilde{H}_1$, $H_\Delta = \{\tilde{H}^0_{1,decomp}, \ldots, \tilde{H}^{\nu}_{1,decomp}\}$, associated $\tilde{H}^{\nu}_1 = U_{H_0}(t_i,t)(\sum_\gamma H_{1,\gamma})U_{H_0}(t,t_i)$, and approximations of the time ordered operator of each slice $k, 0 \le k \le N-1$:
$U_{\tilde{H}^{\nu}_{1,decomp}}\left((k+1)\frac{T}{N}+t_i, k\frac{T}{N}+t_i\right)$
132A
From $H_\Delta$, choose a decomposition, e.g. $\tilde{H}^{\nu=0}_{1,decomp}$, and associated approximations of the time ordered evolution operator of each slice $k$, $0 \le k \le N-1$:
$U_{\tilde{H}^{\nu}_{1,decomp}}\left((k+1)\frac{T}{N}+t_i, k\frac{T}{N}+t_i\right)$
with associated $\tilde{H}^{\nu=0}_1 = U_{H_0}(t_i,t)(\sum_\gamma H_{1,\gamma})U_{H_0}(t,t_i)$ and decomposition $\tilde{H}^{\nu=0}_{1,decomp} = \sum_\gamma \tilde{H}^{\nu=0}_{1,\gamma}$
133A
For each slice $0 \le k \le N-1$, split up the time ordered evolution operator using a product of exponentials:
$U_{\tilde{H}^{\nu}_{1,decomp}}\left((k+1)\frac{T}{N}+t_i, k\frac{T}{N}+t_i\right) = \prod_{\gamma}^{\Gamma} U_{-H_0}\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right)$
134A
Stopping Condition:
e.g. Has the time ordered evolution operator of each slice been split up for all the decompositions $\tilde{H}^{\nu}_{1,decomp}$ in the set $H_\Delta$?
No
Iterate to next (or another) decomposition $\tilde{H}^{\nu}_{1,decomp}$ and associated $U_{\tilde{H}^{\nu}_{1,decomp}}$ etc.
e.g. $\nu = \nu + 1$
135A
136A
Yes
Output:
• The set of decompositions of $\tilde{H}_1$, $H_\Delta = \{\tilde{H}^0_{1,decomp}, \ldots, \tilde{H}^{\nu}_{1,decomp}\}$
• The associated product of exponentials approximating the time ordered evolution operators of each slice, $U_{\tilde{H}^{\nu}_{1,decomp}}\left((k+1)\frac{T}{N}+t_i, k\frac{T}{N}+t_i\right)$, $0 \le k \le N-1$.
140A
Step 1e)

Figure 7A

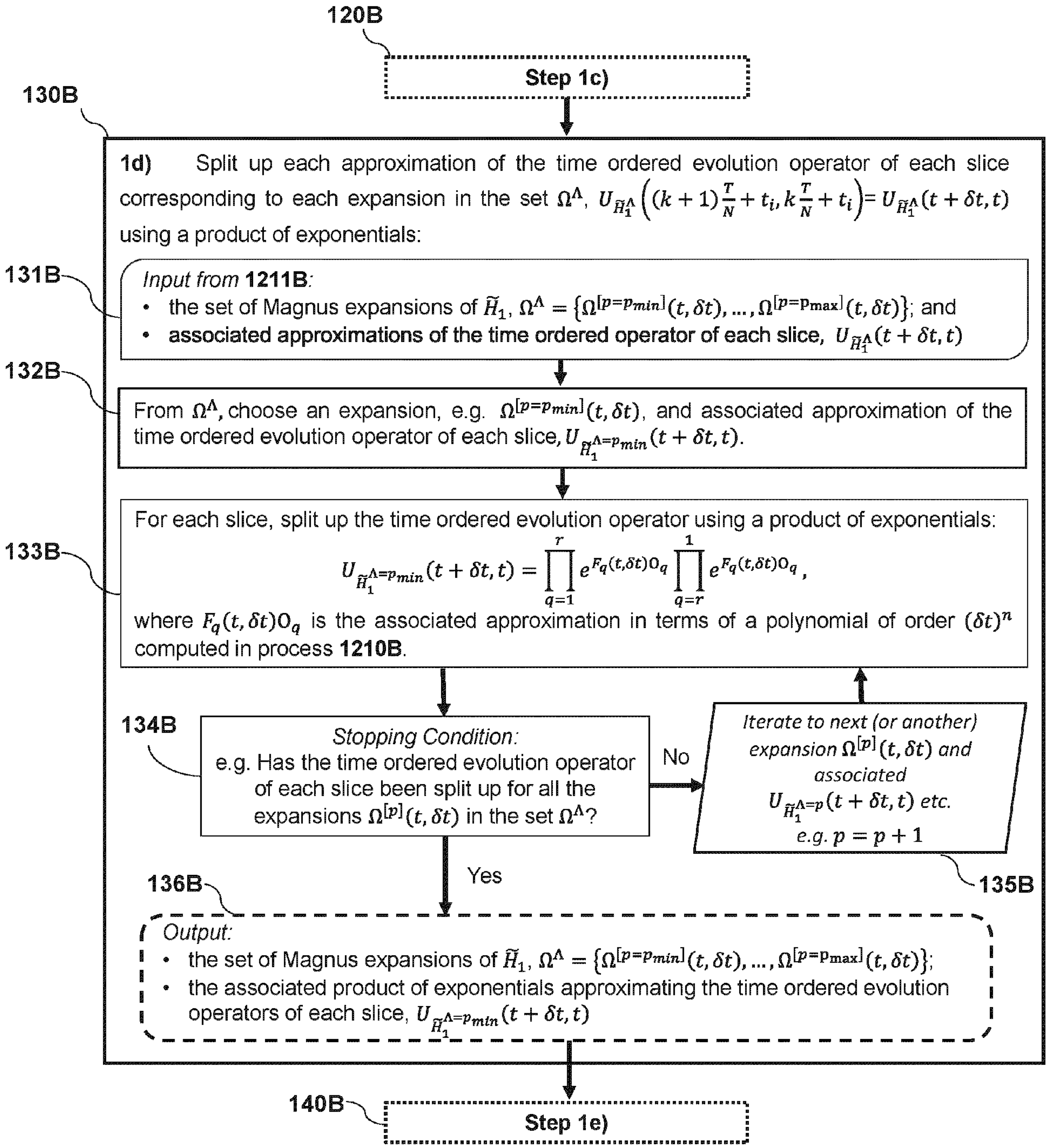
120B
Step 1c)
130B
1d) Split up each approximation of the time ordered evolution operator of each slice corresponding to each expansion in the set $\Omega^{\Lambda}$, $U_{\tilde{H}_1^{\Lambda}}\left((k+1)\frac{T}{N}+t_i, k\frac{T}{N}+t_i\right) = U_{\tilde{H}_1^{\Lambda}}(t+\delta t, t)$ using a product of exponentials:
131B
Input from 1211B:
• the set of Magnus expansions of $\tilde{H}_1$, $\Omega^{\Lambda} = \{\Omega^{[p=p_{min}]}(t,\delta t), \ldots, \Omega^{[p=p_{max}]}(t,\delta t)\}$; and
• associated approximations of the time ordered operator of each slice, $U_{\tilde{H}_1^{\Lambda}}(t+\delta t, t)$
132B
From $\Omega^{\Lambda}$, choose an expansion, e.g. $\Omega^{[p=p_{min}]}(t,\delta t)$, and associated approximation of the time ordered evolution operator of each slice, $U_{\tilde{H}_1^{\Lambda=p_{min}}}(t+\delta t, t)$.
133B
For each slice, split up the time ordered evolution operator using a product of exponentials:
$$U_{\tilde{H}_1^{\Lambda=p_{min}}}(t+\delta t, t) = \prod_{q=1}^{r} e^{F_q(t,\delta t)O_q} \prod_{q=r}^{1} e^{F_q(t,\delta t)O_q},$$
where $F_q(t,\delta t)O_q$ is the associated approximation in terms of a polynomial of order $(\delta t)^n$ computed in process 1210B.
134B
Stopping Condition:
e.g. Has the time ordered evolution operator of each slice been split up for all the expansions $\Omega^{[p]}(t,\delta t)$ in the set $\Omega^{\Lambda}$?
No
Iterate to next (or another) expansion $\Omega^{[p]}(t,\delta t)$ and associated $U_{\tilde{H}_1^{\Lambda=p}}(t+\delta t, t)$ etc.
e.g. $p = p+1$
135B
Yes
136B
Output:
• the set of Magnus expansions of $\tilde{H}_1$, $\Omega^{\Lambda} = \{\Omega^{[p=p_{min}]}(t,\delta t), \ldots, \Omega^{[p=p_{max}]}(t,\delta t)\}$;
• the associated product of exponentials approximating the time ordered evolution operators of each slice, $U_{\tilde{H}_1^{\Lambda=p_{min}}}(t+\delta t, t)$
140B
Step 1e)

Figure 7B

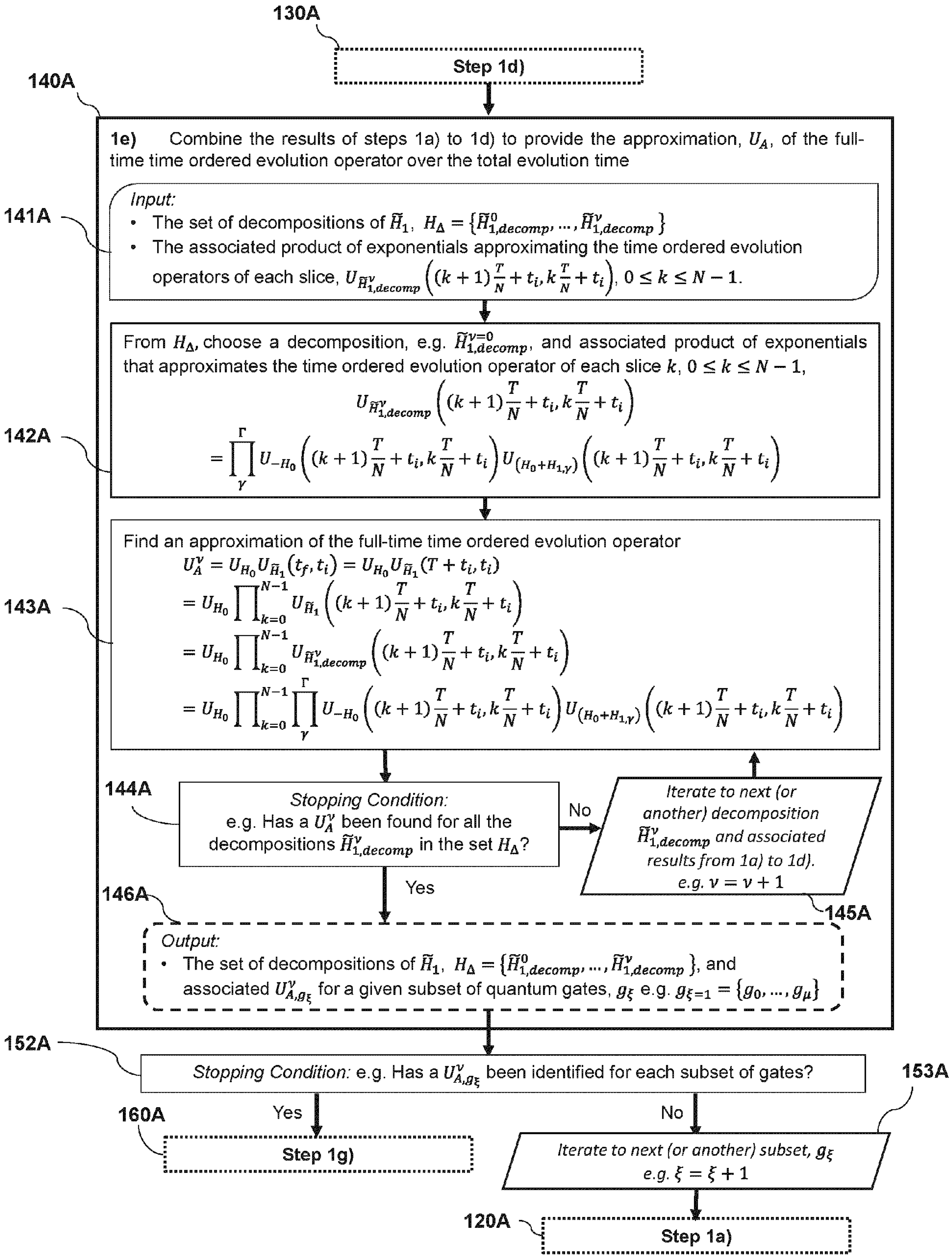
130A
Step 1d)
140A
1e) Combine the results of steps 1a) to 1d) to provide the approximation, $U_A$, of the full-time time ordered evolution operator over the total evolution time
141A
Input:
• The set of decompositions of $\tilde{H}_1$, $H_\Delta = \{\tilde{H}^0_{1,decomp}, \ldots, \tilde{H}^\nu_{1,decomp}\}$
• The associated product of exponentials approximating the time ordered evolution operators of each slice, $U_{\tilde{H}^\nu_{1,decomp}}\left((k+1)\frac{T}{N}+t_i, k\frac{T}{N}+t_i\right)$, $0 \le k \le N-1$.
142A
From $H_\Delta$, choose a decomposition, e.g. $\tilde{H}^{\nu=0}_{1,decomp}$, and associated product of exponentials that approximates the time ordered evolution operator of each slice $k$, $0 \le k \le N-1$,
$$U_{\tilde{H}^\nu_{1,decomp}}\left((k+1)\frac{T}{N}+t_i, k\frac{T}{N}+t_i\right) = \prod_\gamma^\Gamma U_{-H_0}\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right)$$
143A
Find an approximation of the full-time time ordered evolution operator
$$U^\nu_A = U_{H_0}U_{\tilde{H}_1}(t_f, t_i) = U_{H_0}U_{\tilde{H}_1}(T+t_i, t_i)$$
$$= U_{H_0}\prod_{k=0}^{N-1} U_{\tilde{H}_1}\left((k+1)\frac{T}{N}+t_i, k\frac{T}{N}+t_i\right)$$
$$= U_{H_0}\prod_{k=0}^{N-1} U_{\tilde{H}^\nu_{1,decomp}}\left((k+1)\frac{T}{N}+t_i, k\frac{T}{N}+t_i\right)$$
$$= U_{H_0}\prod_{k=0}^{N-1}\prod_\gamma^\Gamma U_{-H_0}\left((k+1)\frac{T}{N}+t_i, k\frac{T}{N}+t_i\right) U_{(H_0+H_{1,\gamma})}\left((k+1)\frac{T}{N}+t_i, k\frac{T}{N}+t_i\right)$$
144A
Stopping Condition:
e.g. Has a $U^\nu_A$ been found for all the decompositions $\tilde{H}^\nu_{1,decomp}$ in the set $H_\Delta$?
No
Iterate to next (or another) decomposition $\tilde{H}^\nu_{1,decomp}$ and associated results from 1a) to 1d).
e.g. $\nu = \nu + 1$
145A
Yes
146A
Output:
• The set of decompositions of $\tilde{H}_1$, $H_\Delta = \{\tilde{H}^0_{1,decomp}, \ldots, \tilde{H}^\nu_{1,decomp}\}$, and associated $U^\nu_{A,g_\xi}$ for a given subset of quantum gates, $g_\xi$ e.g. $g_{\xi=1} = \{g_0, \ldots, g_\mu\}$
152A
Stopping Condition: e.g. Has a $U^\nu_{A,g_\xi}$ been identified for each subset of gates?
153A
Yes
No
160A
Step 1g)
Iterate to next (or another) subset, $g_\xi$
e.g. $\xi = \xi + 1$
120A
Step 1a)

Figure 8A

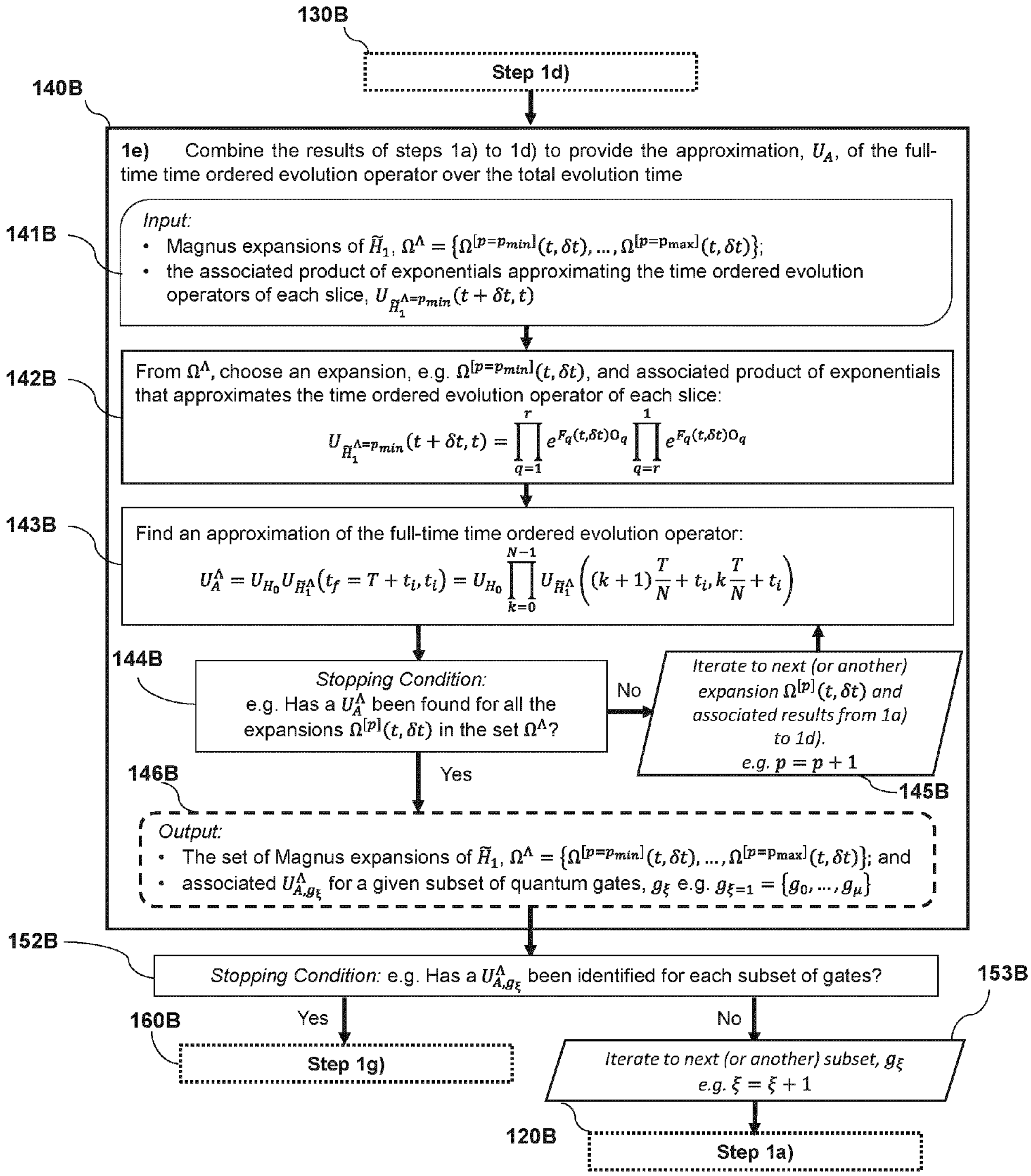
130B
Step 1d)
140B
1e) Combine the results of steps 1a) to 1d) to provide the approximation, $U_A$, of the full-time time ordered evolution operator over the total evolution time
141B
Input:
• Magnus expansions of $\widetilde{H}_1$, $\Omega^\Lambda = \{\Omega^{[p=p_{min}]}(t,\delta t), \ldots, \Omega^{[p=p_{max}]}(t,\delta t)\}$;
• the associated product of exponentials approximating the time ordered evolution operators of each slice, $U_{\widetilde{H}_1^{\Lambda=p_{min}}}(t+\delta t, t)$
142B
From $\Omega^\Lambda$, choose an expansion, e.g. $\Omega^{[p=p_{min}]}(t,\delta t)$, and associated product of exponentials that approximates the time ordered evolution operator of each slice:
$U_{\widetilde{H}_1^{\Lambda=p_{min}}}(t+\delta t, t) = \prod_{q=1}^{r} e^{F_q(t,\delta t)O_q} \prod_{q=r}^{1} e^{F_q(t,\delta t)O_q}$
143B
Find an approximation of the full-time time ordered evolution operator:
$U_A^\Lambda = U_{H_0} U_{\widetilde{H}_1^\Lambda}(t_f = T + t_i, t_i) = U_{H_0} \prod_{k=0}^{N-1} U_{\widetilde{H}_1^\Lambda}\left((k+1)\frac{T}{N} + t_i, k\frac{T}{N} + t_i\right)$
144B
Stopping Condition:
e.g. Has a $U_A^\Lambda$ been found for all the expansions $\Omega^{[p]}(t,\delta t)$ in the set $\Omega^\Lambda$?
No
Iterate to next (or another) expansion $\Omega^{[p]}(t,\delta t)$ and associated results from 1a) to 1d).
e.g. $p = p + 1$
145B
146B
Yes
Output:
• The set of Magnus expansions of $\widetilde{H}_1$, $\Omega^\Lambda = \{\Omega^{[p=p_{min}]}(t,\delta t), \ldots, \Omega^{[p=p_{max}]}(t,\delta t)\}$; and
• associated $U_{A,g_\xi}^\Lambda$ for a given subset of quantum gates, $g_\xi$ e.g. $g_{\xi=1} = \{g_0, \ldots, g_\mu\}$
152B
Stopping Condition: e.g. Has a $U_{A,g_\xi}^\Lambda$ been identified for each subset of gates?
153B
160B
Yes
No
Step 1g)
Iterate to next (or another) subset, $g_\xi$
e.g. $\xi = \xi + 1$
120B
Step 1a)

Figure 8B

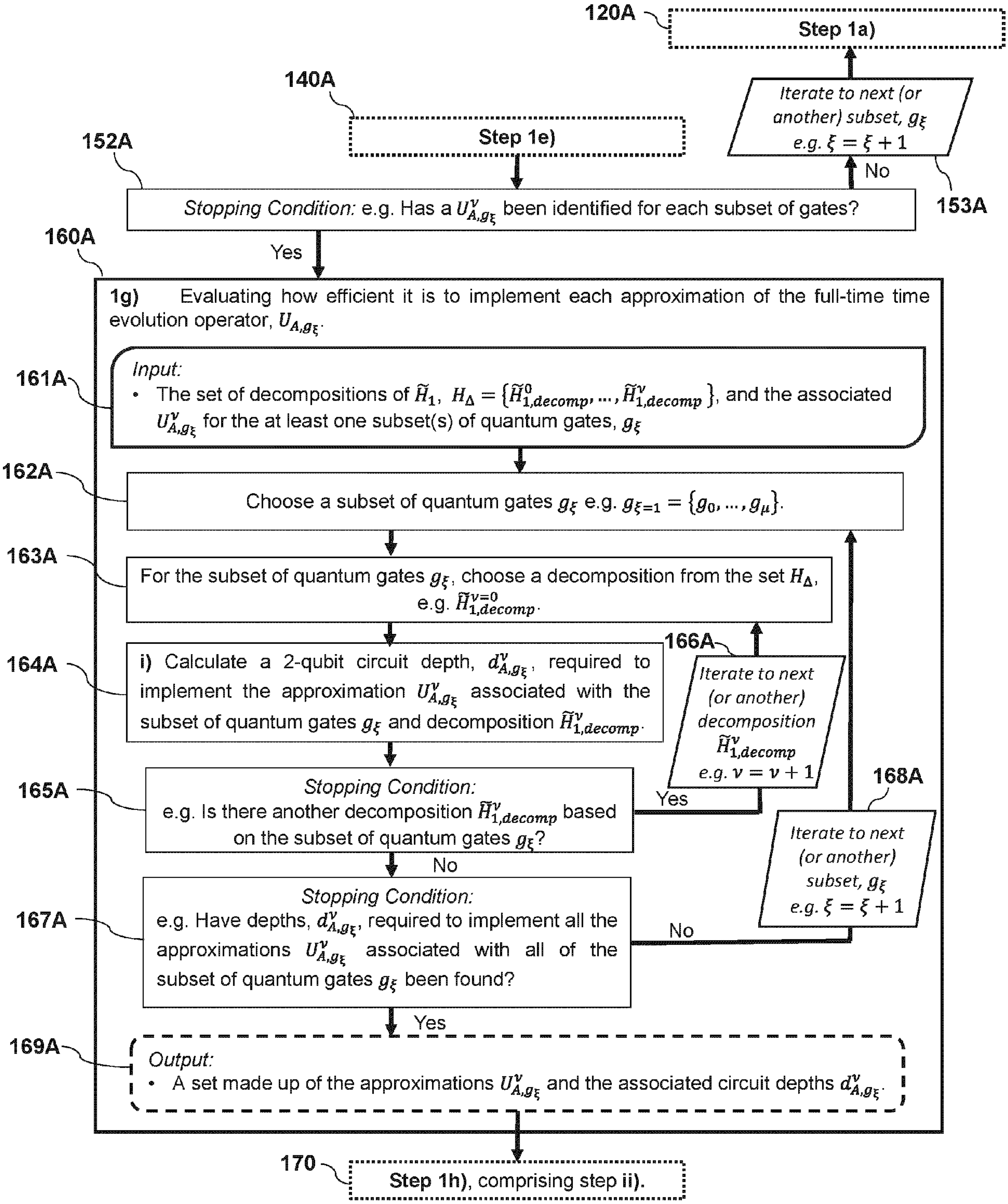

120A
Step 1a)
140A
Step 1e)
152A
Iterate to next (or another) subset, $g_\xi$ e.g. $\xi = \xi + 1$
No
Stopping Condition: e.g. Has a $U^{v}_{A,g_\xi}$ been identified for each subset of gates?
153A
160A
Yes
1g) Evaluating how efficient it is to implement each approximation of the full-time time evolution operator, $U_{A,g_\xi}$.
161A
Input:
• The set of decompositions of $\widetilde{H}_1$, $H_\Delta = \{\widetilde{H}^0_{1,decomp}, \dots, \widetilde{H}^v_{1,decomp}\}$, and the associated $U^v_{A,g_\xi}$ for the at least one subset(s) of quantum gates, $g_\xi$
162A
Choose a subset of quantum gates $g_\xi$ e.g. $g_{\xi=1} = \{g_0, \dots, g_\mu\}$.
163A
For the subset of quantum gates $g_\xi$, choose a decomposition from the set $H_\Delta$, e.g. $\widetilde{H}^{v=0}_{1,decomp}$.
166A
164A
i) Calculate a 2-qubit circuit depth, $d^v_{A,g_\xi}$, required to implement the approximation $U^v_{A,g_\xi}$ associated with the subset of quantum gates $g_\xi$ and decomposition $\widetilde{H}^v_{1,decomp}$.
Iterate to next (or another) decomposition $\widetilde{H}^v_{1,decomp}$ e.g. $v = v + 1$
165A
Stopping Condition:
e.g. Is there another decomposition $\widetilde{H}^v_{1,decomp}$ based on the subset of quantum gates $g_\xi$?
Yes
168A
No
Iterate to next (or another) subset, $g_\xi$ e.g. $\xi = \xi + 1$
167A
Stopping Condition:
e.g. Have depths, $d^v_{A,g_\xi}$, required to implement all the approximations $U^v_{A,g_\xi}$ associated with all of the subset of quantum gates $g_\xi$ been found?
No
Yes
169A
Output:
• A set made up of the approximations $U^v_{A,g_\xi}$ and the associated circuit depths $d^v_{A,g_\xi}$.
170
Step 1h), comprising step ii).


Figure 9A

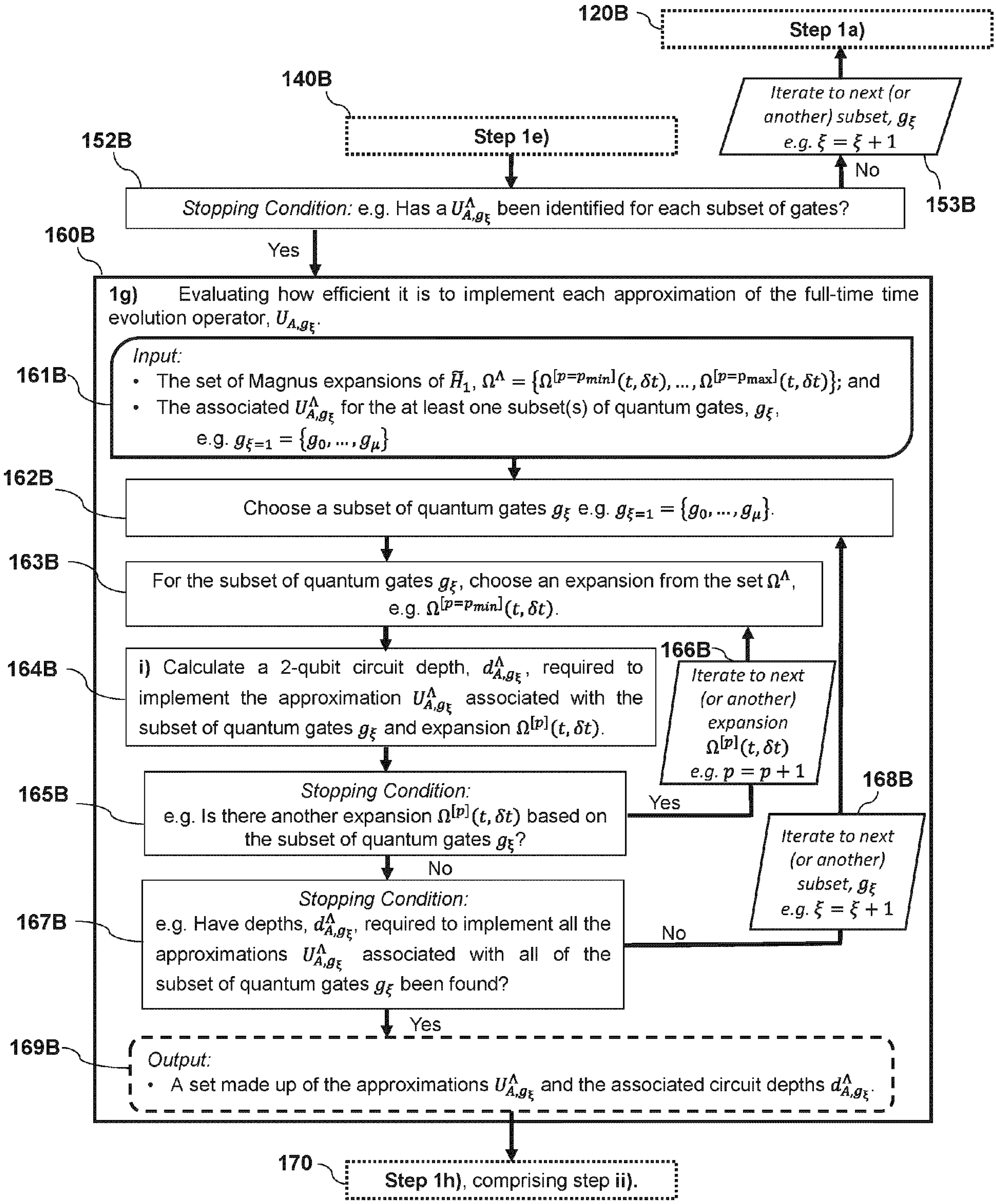

120B
Step 1a)
140B
Step 1e)
152B
Iterate to next (or another) subset, $g_\xi$ e.g. $\xi = \xi + 1$
No
153B
*Stopping Condition:* e.g. Has a $U^{\Lambda}_{A,g_\xi}$ been identified for each subset of gates?
160B
Yes
1g) Evaluating how efficient it is to implement each approximation of the full-time time evolution operator, $U_{A,g_\xi}$.
161B
*Input:*
• The set of Magnus expansions of $\bar{H}_1$, $\Omega^{\Lambda} = \{\Omega^{[p=p_{min}]}(t,\delta t), \dots, \Omega^{[p=p_{max}]}(t,\delta t)\}$; and
• The associated $U^{\Lambda}_{A,g_\xi}$ for the at least one subset(s) of quantum gates, $g_\xi$, e.g. $g_{\xi=1} = \{g_0, \dots, g_\mu\}$
162B
Choose a subset of quantum gates $g_\xi$ e.g. $g_{\xi=1} = \{g_0, \dots, g_\mu\}$.
163B
For the subset of quantum gates $g_\xi$, choose an expansion from the set $\Omega^{\Lambda}$, e.g. $\Omega^{[p=p_{min}]}(t,\delta t)$.
164B
i) Calculate a 2-qubit circuit depth, $d^{\Lambda}_{A,g_\xi}$, required to implement the approximation $U^{\Lambda}_{A,g_\xi}$ associated with the subset of quantum gates $g_\xi$ and expansion $\Omega^{[p]}(t,\delta t)$.
166B
Iterate to next (or another) expansion $\Omega^{[p]}(t,\delta t)$ e.g. $p = p + 1$
165B
*Stopping Condition:* e.g. Is there another expansion $\Omega^{[p]}(t,\delta t)$ based on the subset of quantum gates $g_\xi$?
Yes
No
168B
Iterate to next (or another) subset, $g_\xi$ e.g. $\xi = \xi + 1$
167B
*Stopping Condition:* e.g. Have depths, $d^{\Lambda}_{A,g_\xi}$, required to implement all the approximations $U^{\Lambda}_{A,g_\xi}$ associated with all of the subset of quantum gates $g_\xi$ been found?
No
Yes
169B
*Output:*
• A set made up of the approximations $U^{\Lambda}_{A,g_\xi}$ and the associated circuit depths $d^{\Lambda}_{A,g_\xi}$.
170
Step 1h), comprising step ii).


**Figure 9B**

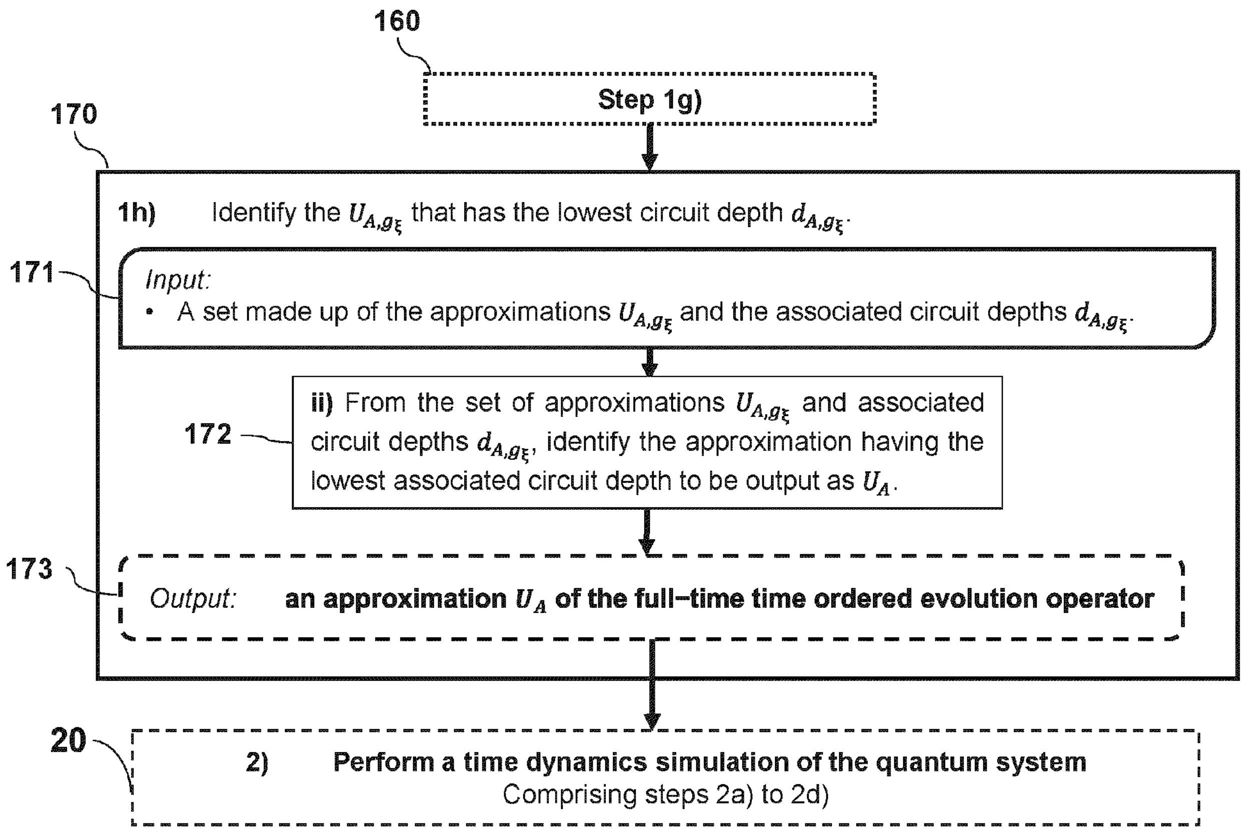
160
Step 1g)
170
1h) Identify the $U_{A,g_\xi}$ that has the lowest circuit depth $d_{A,g_\xi}$.
171
Input:
• A set made up of the approximations $U_{A,g_\xi}$ and the associated circuit depths $d_{A,g_\xi}$.
172
ii) From the set of approximations $U_{A,g_\xi}$ and associated circuit depths $d_{A,g_\xi}$, identify the approximation having the lowest associated circuit depth to be output as $U_A$.
173
Output: an approximation $U_A$ of the full–time time ordered evolution operator
20
2) Perform a time dynamics simulation of the quantum system
Comprising steps 2a) to 2d)

Figure 10

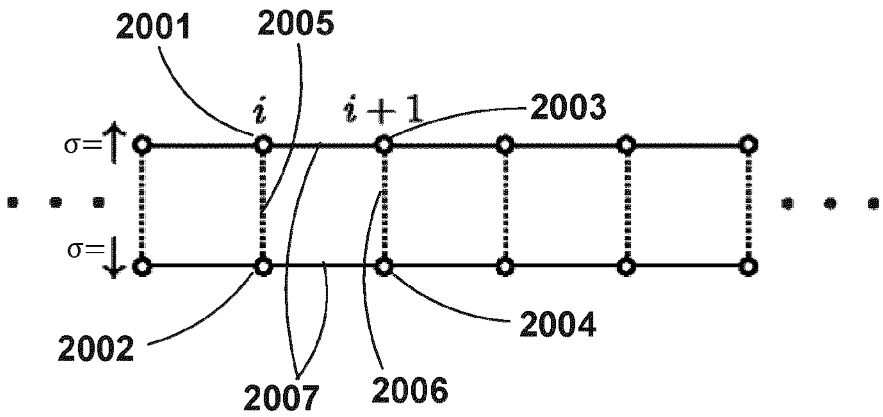


Figure 11

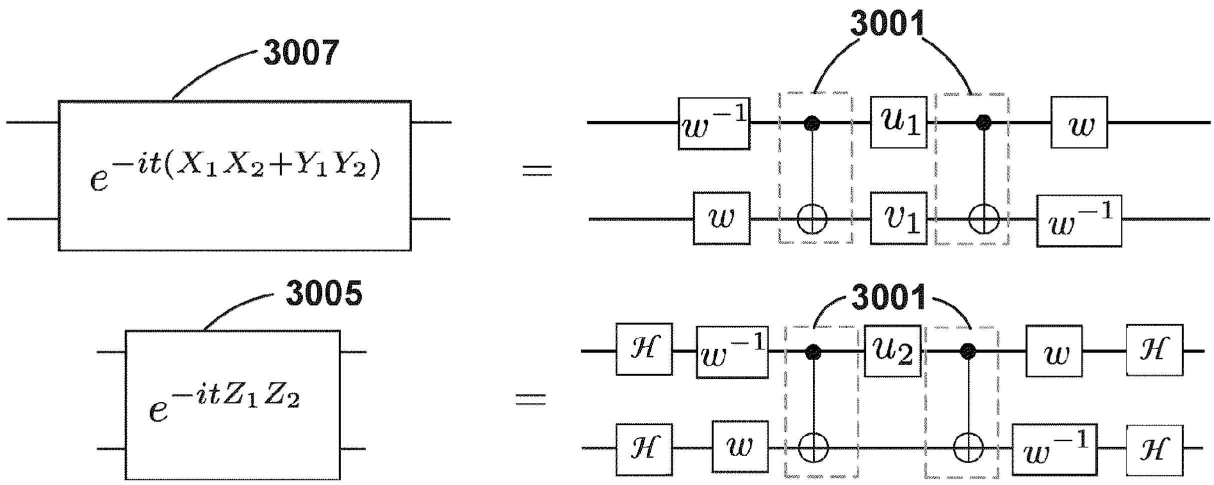


Figure 12

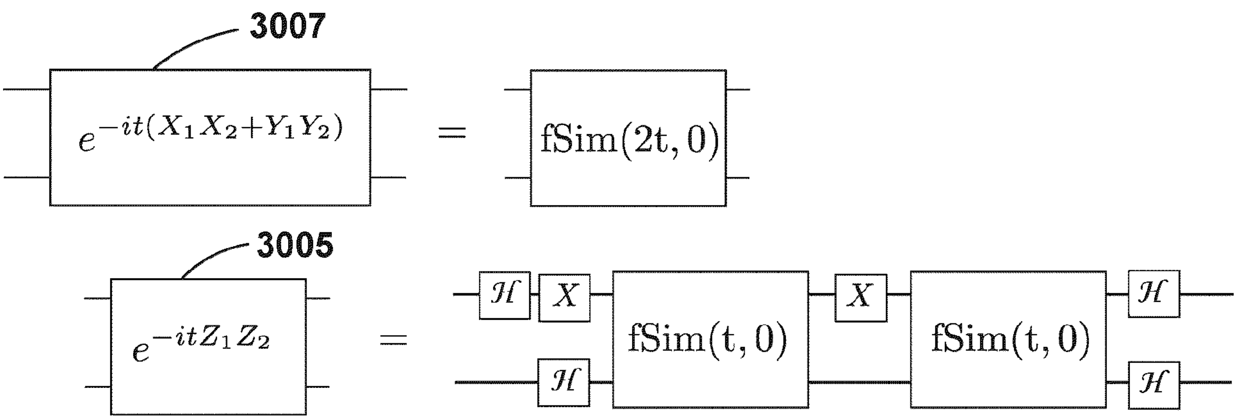


Figure 13

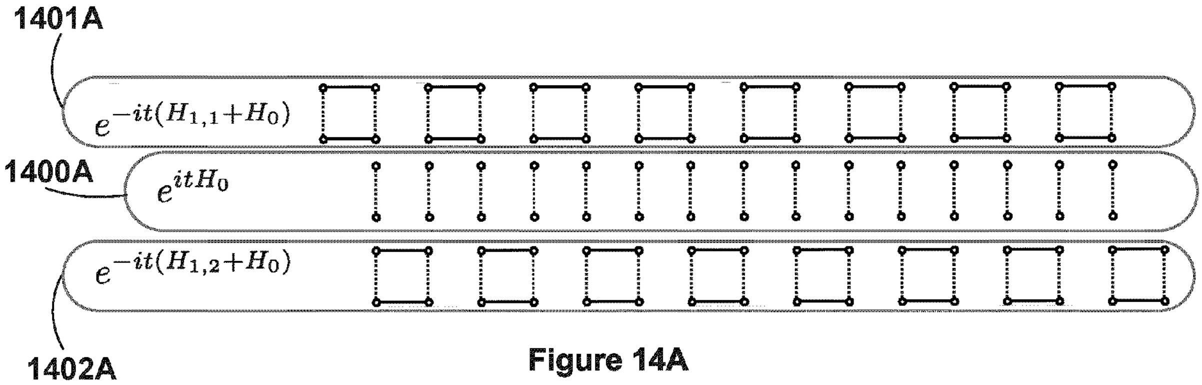


Figure 14A

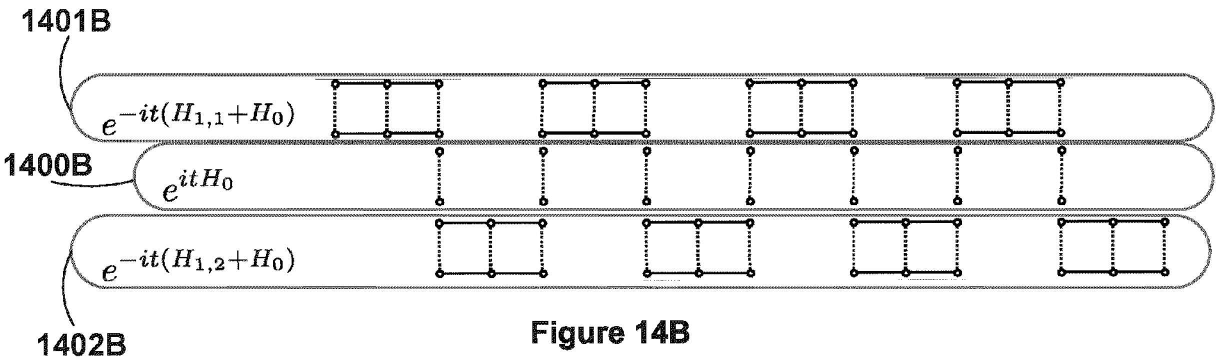


Figure 14B

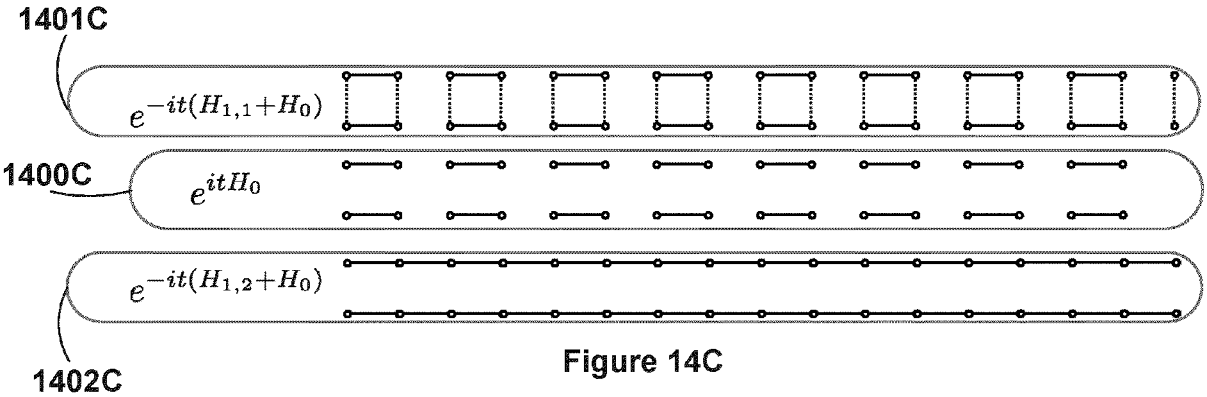


Figure 14C

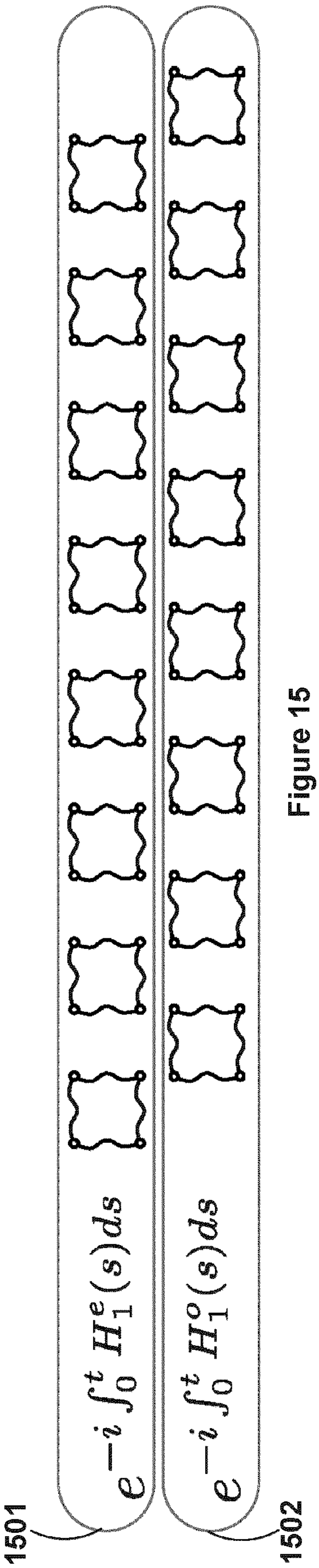


Figure 15

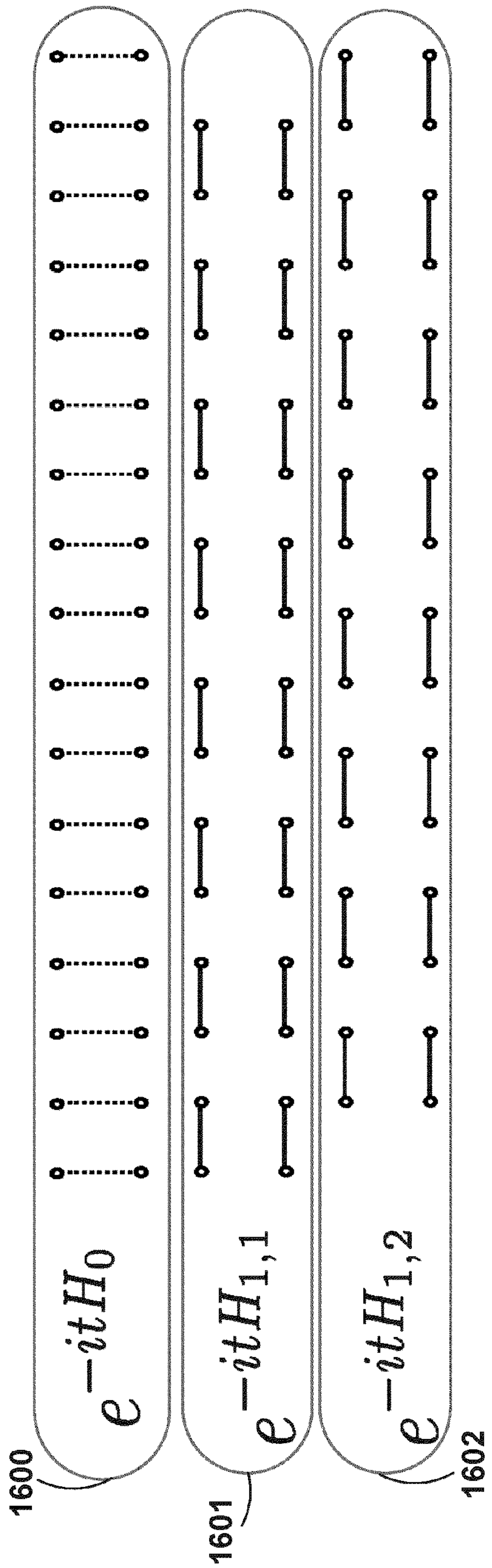


Figure 16

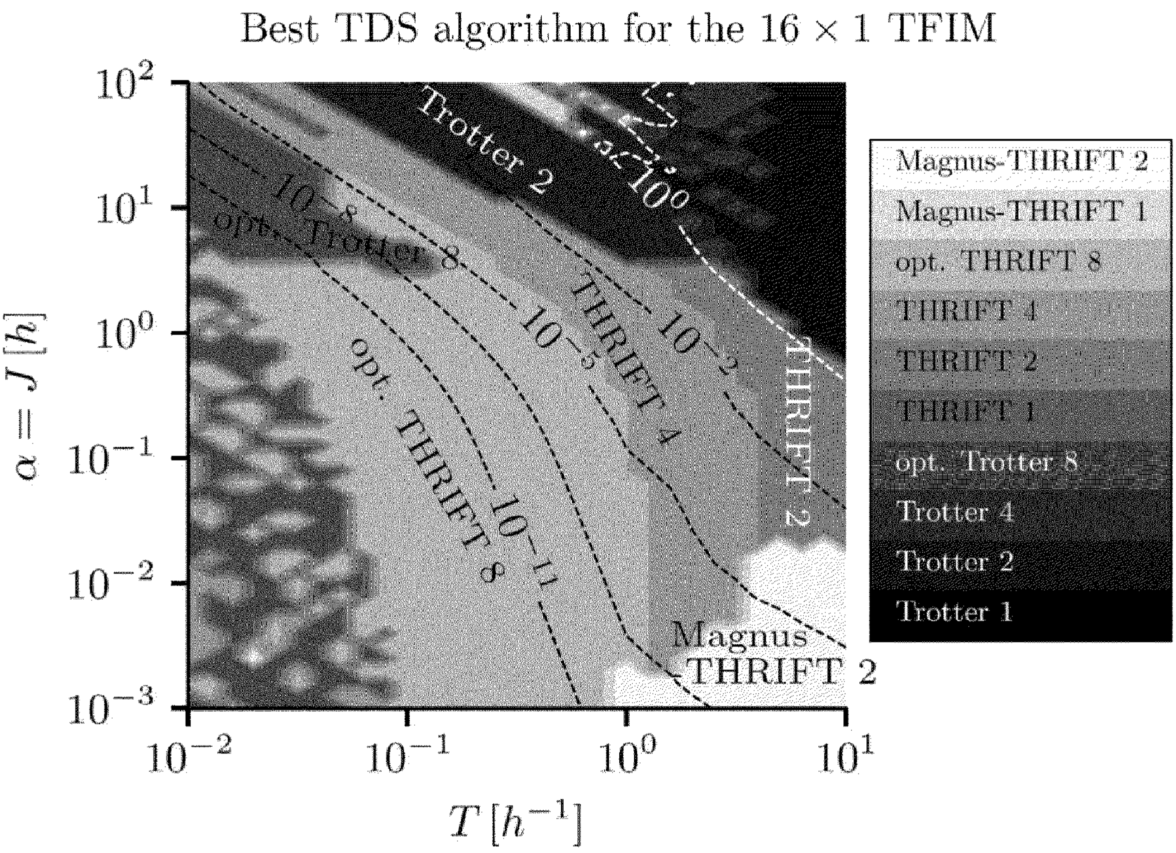


**Figure 17A**

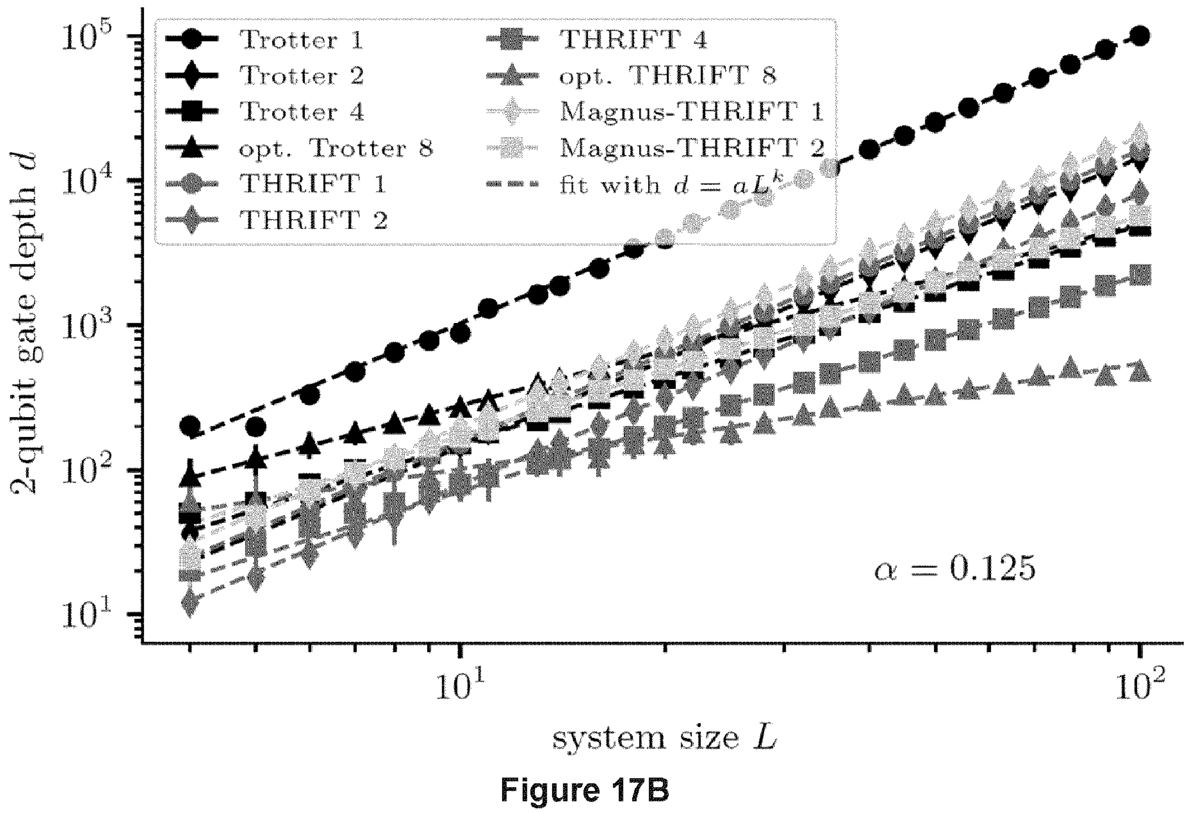


**Figure 17B**

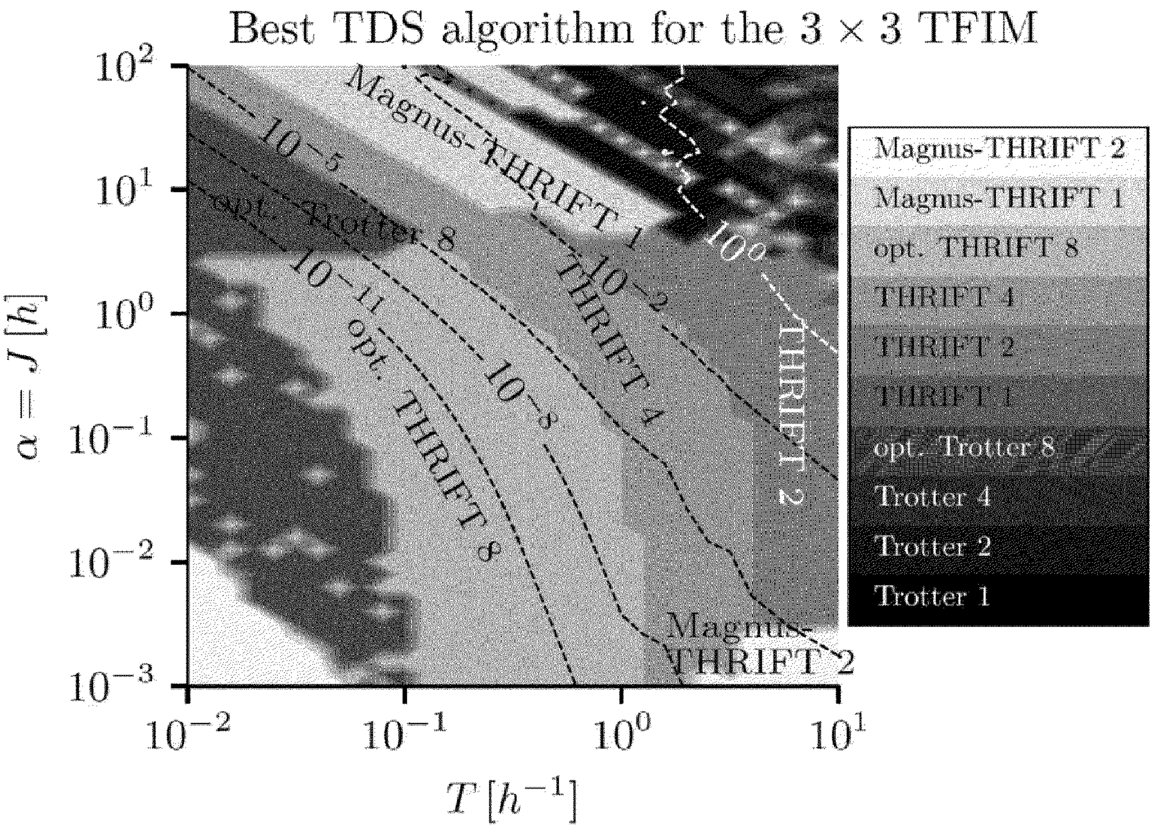


Figure 18A

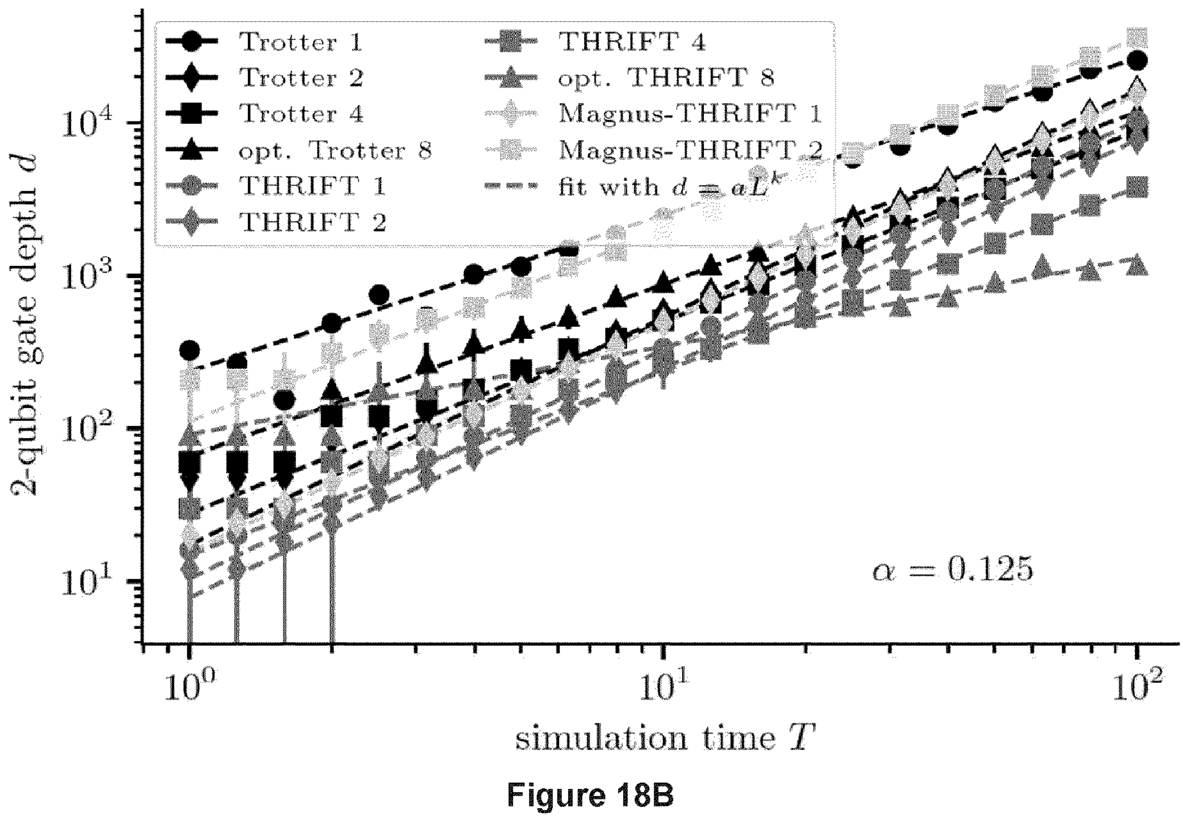


Figure 18B

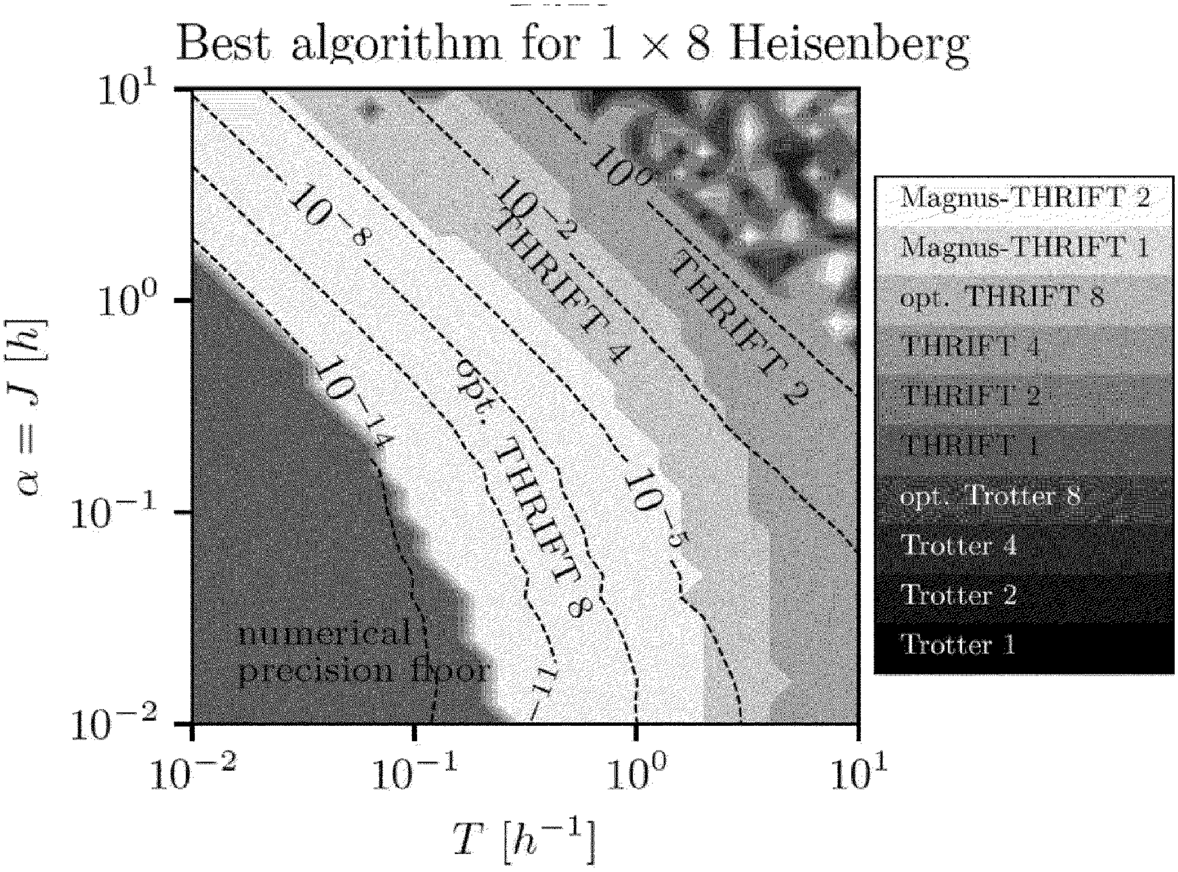


Figure 19A

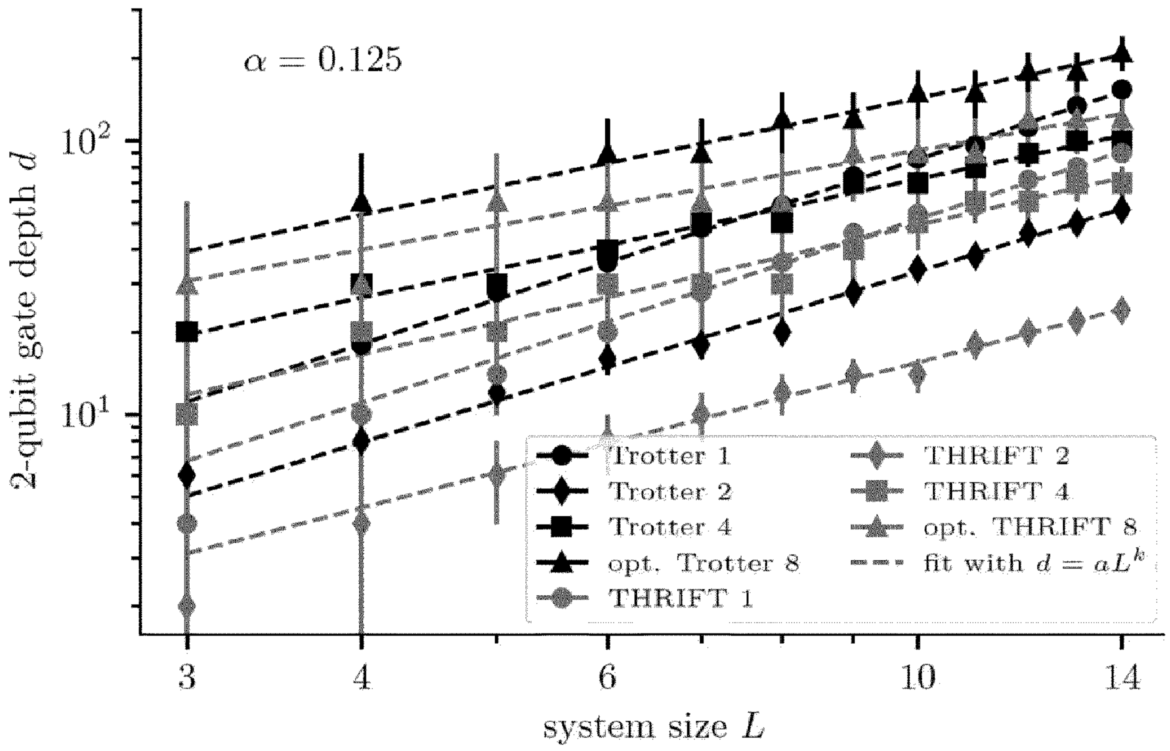


Figure 19B

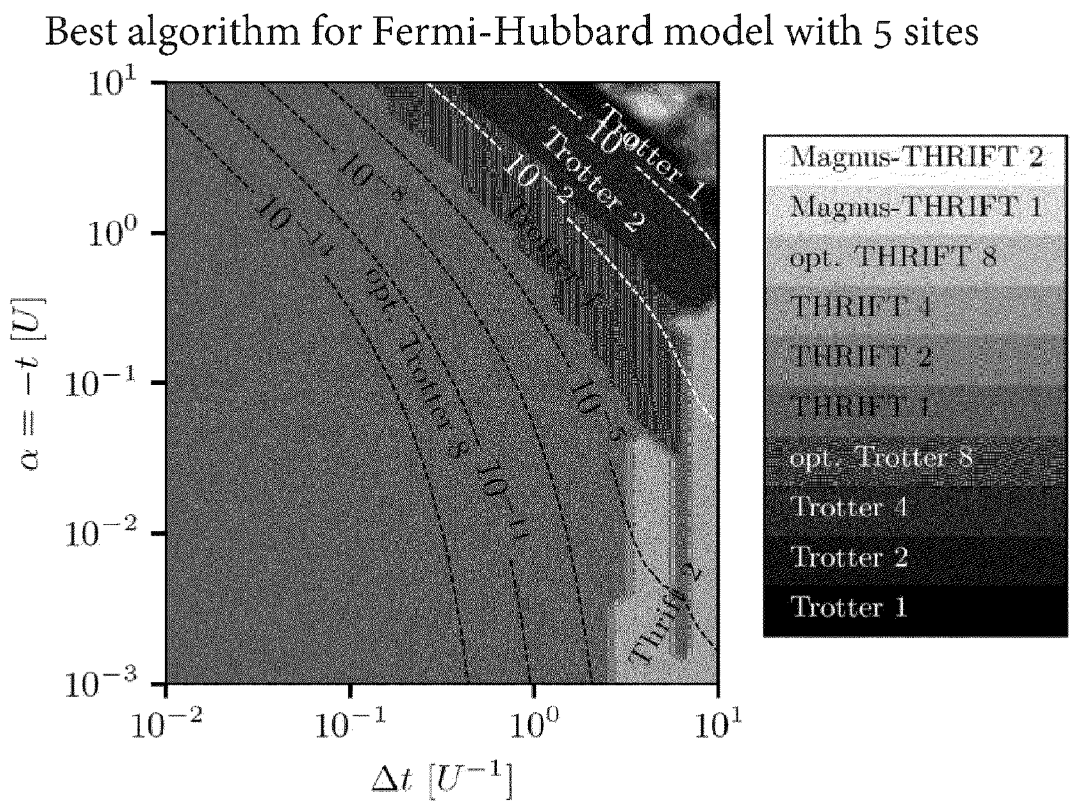


Figure 20A

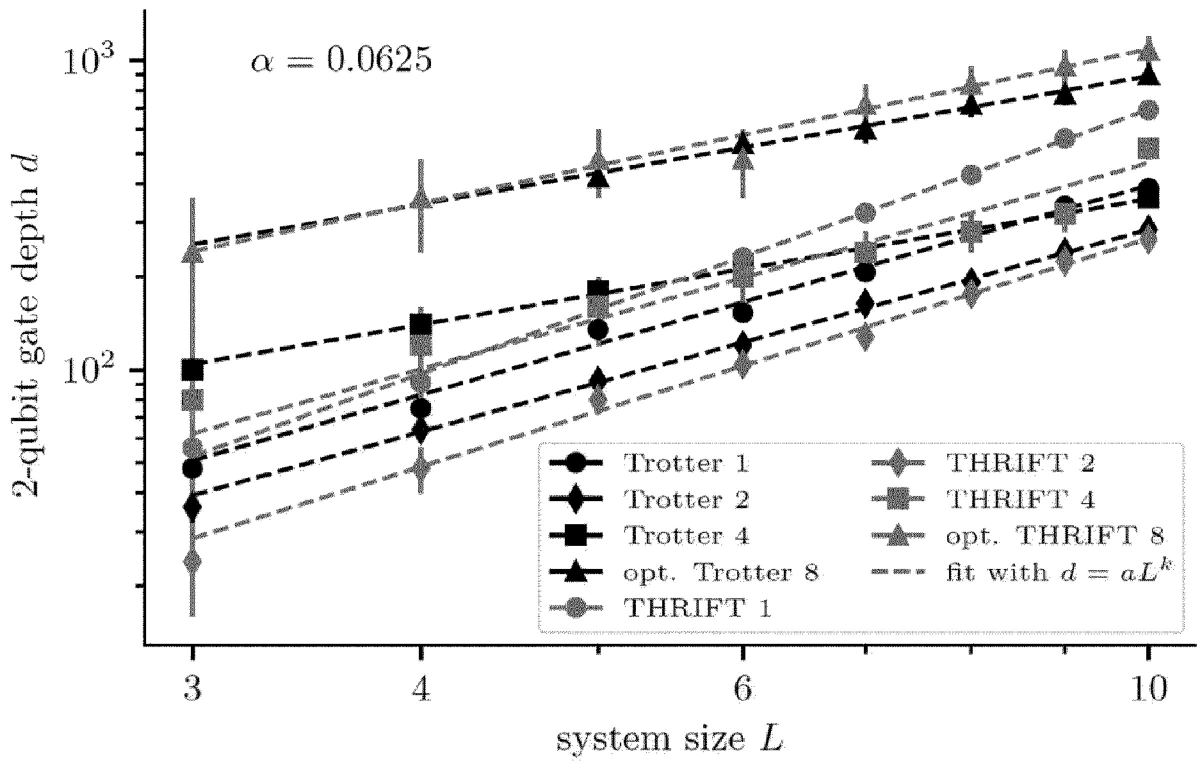


Figure 20B

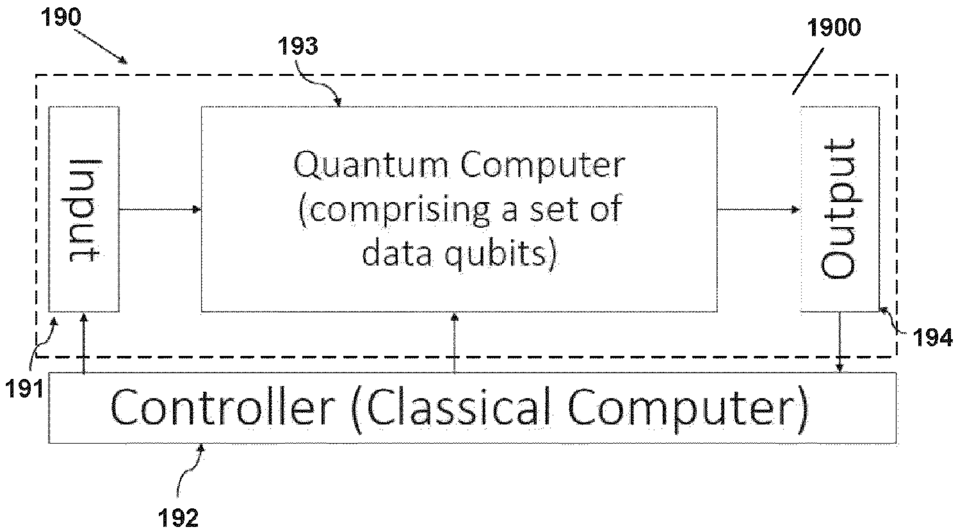


Figure 21

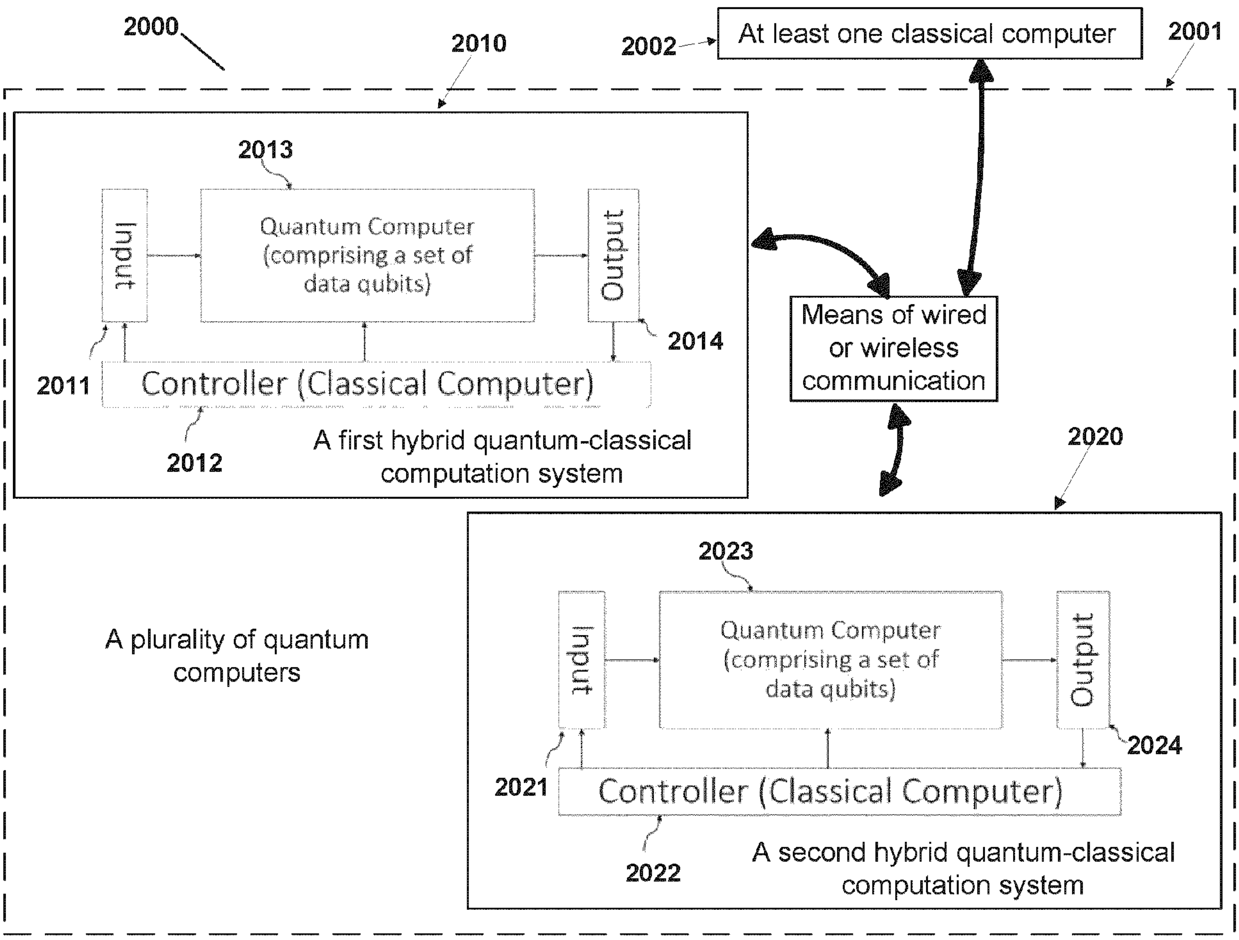


Figure 22

Europäisches Patentamt
European Patent Office
Office européen des brevets

# EUROPEAN SEARCH REPORT

Application Number
EP 24 15 8476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEONGWAN HAAH ET AL: "Quantum algorithm for simulating real time evolution of lattice Hamiltonians", ARXIV.ORG, CORNELL UNIVERSITY LIBRARY, 201 OLIN LIBRARY CORNELL UNIVERSITY ITHACA, NY 14853, 7 October 2020 (2020-10-07), XP081780890, * abstract; figure 1 * * 1. Introduction * * 2. Algorithm and analysis * * s3.1. Lower bound proofs * ----- | 1-15 | INV. G06N10/60 G06N10/70 |
| A | LUIS A MART\'INEZ-MART\'INEZ ET AL: "Assessment of various Hamiltonian partitionings for the electronic structure problem on a quantum computer using the Trotter approximation", ARXIV.ORG, CORNELL UNIVERSITY LIBRARY, 201 OLIN LIBRARY CORNELL UNIVERSITY ITHACA, NY 14853, 18 October 2022 (2022-10-18), XP091348260, * abstract * ----- | 1-15 | TECHNICAL FIELDS SEARCHED (IPC) |
| T | JAN LUKAS BOSSE ET AL: "Efficient and practical Hamiltonian simulation from time-dependent product formulas", ARXIV.ORG, CORNELL UNIVERSITY LIBRARY, 201 OLIN LIBRARY CORNELL UNIVERSITY ITHACA, NY 14853, 24 June 2024 (2024-06-24), XP091796552, * the whole document * ----- | | G06N |

The present search report has been drawn up for all claims

1

| Place of search | Date of completion of the search | Examiner |
|---|---|---|
| The Hague | 30 July 2024 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **M. E. S. MORALES**. *Greatly improved higher-order product formulae for quantum simulation*, 28 October 2022, https://arxiv.org/pdf/2210.15817.pdf, arXiv:2210.15817v1
- **A. ISERLES** ; **S. P. NORSETT**. On the solution of linear differential equations in Lie groups. *Phil. Trans. Royal Soc. A*, 1999, vol. 357, 983-1019